# EUROPEAN PATENT APPLICATION

(11) **EP 4 651 087 A1**
(43) Date of publication of application: **19.11.2025**
(21) Application number: 23916143.3
(22) Date of filing: 16.11.2023
(51) Int. Cl.: G06T 13/40, G06F 3/01

(54) **DATA TRANSMISSION DEVICE, DATA RECEPTION DEVICE, DATA PROCESSING METHOD, AND PROGRAM**

(30) Priority: 10.01.2023 JP 2023001739
(71) Applicant: Sony Group Corporation, Tokyo 108-0075 (JP)
(72) Inventor: NOHINA, Hidenari, Tokyo 108-0075 (JP)
(74) Representative: D Young & Co LLP
(86) International application number: PCT/JP2023/041278
(87) International publication number: WO 2024/150526

(57) **Abstract**

Provided are a device and a method that enable processing of reflecting a motion of a user in an avatar displayed on a display unit in substantially real time. A motion analysis unit that analyzes a user motion on the basis of a detection value of a sensor worn by a user and a transmission information generation unit that receives a motion analysis result and generates transmission information storing data indicating the motion of the user are included. The transmission information generation unit generates frame information in which a plurality of data blocks individually storing data indicating a motion in units of parts of a body of the user is combined. A data reception device acquires data indicating the motion in units of parts of the body of the user from the data blocks in the received frame information, and executes avatar motion control of reflecting the motion of the user in an avatar displayed on a display unit.

## Description

### TECHNICAL FIELD

The present disclosure relates to a data transmission device, a data reception device, a data processing method, and a program. More specifically, the present disclosure relates to a data transmission device, a data reception device, a data processing method, and a program capable of performing processing of analyzing a motion of a user on the basis of a detection value of a sensor (motion sensor) worn on a body of the user and causing a character displayed on a PC or the like to execute a motion similar to the user in substantially real time.

### BACKGROUND ART

In recent years, many users use various user equipment, such as PCs, smartphones, game equipment, or VR goggles that enable viewing of virtual reality images (VR images), to use a game app (application) and a virtual reality space app (metaverse app).

When the game app or the virtual reality space app (metaverse app) is used, for example, various characters are displayed on a display unit of the user equipment, and the user can operate the user equipment to cause the displayed characters to perform an action.

Note that the character includes, for example, a virtual character in the app, an avatar that is a virtual image indicating the user himself/herself, and the like.

The user can cause the character displayed on the display unit to perform various actions, for example, various actions such as jumping, walking, running, punching, or dancing, by operating a user interface (UI) displayed on the display unit of the user equipment, a physical button, a switch, or the like.

However, in many cases, the action that the user can cause the character to execute is limited to an action defined in advance in an application such as a game app, and for example, the original action considered by the user cannot be performed.

Note that a method of attaching a sensor to a body of the user and analyzing a motion of the user on the basis of a sensor detection value is described in, for example, Patent Document 1 (WO 2018/123293 A).

When this sensor detection value is applied, the original action conceived by the user can be analyzed. However, it is difficult to reflect such a user action in real time on the action of a character such as an avatar displayed on a PC, for example.

The configuration described in Patent Document 1 is a configuration in which motion data (master data) indicating an action of the model pitching form is recorded in advance, and then the user wearing the motion sensor is caused to execute a pitching motion to generate a tactile stimulus to a body part of the user where a difference from the master data has occurred, thereby teaching the user a correct pitching form.

In this patent document, the motion data (master data) indicating a pitching form action serving as a model is data recorded in advance, and this data is compared with a motion currently being executed by the user. The patent document does not disclose processing of reflecting the motion being executed by the user on a character displayed on a PC or the like in real time.

In order to reflect the motion of the user analyzed on the basis of the detection value of the sensor worn by the user on the character on the PC in substantially real time, it is necessary to continuously execute a lot of processing such as user motion analysis processing, analysis data transfer processing, and processing of applying the analysis data to the character in a short time.

(a) Analysis processing of a user motion based on a detection value of a sensor worn by a user,
(b) Recording processing of user motion data based on an analysis result of a sensor detection value,
(c) Character application processing of recorded user motion data,

In order to continuously execute all of the pieces of processing (a) to (c) to cause the motion of the user to be executed as a motion of a character in substantially real time, high-speed processing of enormous data is required, and it has been difficult to execute the processing on a general PC or smartphone.

One of the main factors for this is considered to be the lack of a definition of a data format that would enable an analysis processing of the motion data of the user wearing the motion sensor, a transfer processing of an analysis result, and processing of applying the analysis result to the character to be continuously executed in a short time.

### CITATION LIST

### PATENT DOCUMENT

Patent Document 1: WO 2018/123293 A

### SUMMARY OF THE INVENTION

### PROBLEMS TO BE SOLVED BY THE INVENTION

The present disclosure has been made in view of the above problems, for example, and provides a data transmission device, a data reception device, a data processing method, and a program capable of performing processing of analyzing a motion of a user on the basis of a detection value of a sensor (motion sensor) worn on a body of the user and reflecting a motion similar to that of the user on a character displayed on a PC or the like in substantially real time.

### SOLUTIONS TO PROBLEMS

A first aspect of the present disclosure is a data transmission device including:
a motion analysis unit that analyzes a motion of a user on the basis of a sensor detection value of a motion sensor worn on a body of the user;
a transmission information generation unit that receives an analysis result of the motion analysis unit and generates transmission information storing data indicating the motion of the user; and
a communication unit that transmits the transmission information generated by the transmission information generation unit to a data reception device, in which
the transmission information generation unit
generates, as the transmission information, frame information in which a plurality of data blocks individually storing data indicating a motion in units of parts of the body of the user is combined.

Moreover, a second aspect of the present disclosure is a data reception device including:
a reception data analysis unit that analyzes reception data from a data transmission device; and
a display control unit that receives an analysis result of the reception data analysis unit and executes motion control of an avatar displayed on a display unit, in which
the reception data analysis unit
acquires, from frame information included in the reception data, a plurality of data blocks in which motion data in units of parts of a body of a user on a data transmission device side is individually stored, and extracts the motion data in units of parts of the body of the user from the plurality of acquired data blocks, and
the display control unit
executes avatar motion control in which a motion in units of parts of the body of the user is reflected as a motion in units of parts of the avatar using the motion data in units of parts of the body of the user extracted from the plurality of data blocks by the reception data analysis unit.

Moreover, a third aspect of the present disclosure is a data processing method executed in a data transmission device, the data processing method including:
a motion analysis step in which a motion analysis unit analyzes a motion of a user on the basis of a sensor detection value of a motion sensor worn on a body of the user;
a transmission information generation step in which a transmission information generation unit receives an analysis result of the motion analysis step and generates transmission information storing data indicating the motion of the user; and
a communication step in which a communication unit transmits the transmission information generated in the transmission information generation step to a data reception device, in which
   the transmission information generation step includes
   generating, as the transmission information, frame information in which a plurality of data blocks individually storing data indicating a motion in units of parts of the body of the user is combined.

Moreover, a fourth aspect of the present disclosure is a data processing method executed in a data reception device, the data processing method including:
a reception data analysis step in which a reception data analysis unit analyzes reception data from a data transmission device; and
a display control step in which a display control unit receives an analysis result in the reception data analysis step and executes motion control of an avatar displayed on a display unit, in which
the reception data analysis step includes:
   a step of acquiring, from frame information included in the reception data, a plurality of data blocks in which motion data in units of parts of a body of a user on a data transmission device side is individually stored; and
   a step of extracting the motion data in units of parts of the body of the user from the plurality of acquired data blocks, and
   the display control step includes
   executing avatar motion control in which a motion in units of parts of the body of the user is reflected as a motion in units of parts of the avatar using the motion data in units of parts of the body of the user extracted from the plurality of data blocks in the reception data analysis step.

Moreover, a fifth aspect of the present disclosure is a program for causing a data transmission device to execute data processing, the data processing including:
a motion analysis step of causing a motion analysis unit to analyze a motion of a user on the basis of a sensor detection value of a motion sensor worn on a body of the user;
a transmission information generation step of causing a transmission information generation unit to receive an analysis result of the motion analysis step and generate transmission information storing data indicating the motion of the user; and
a communication step of causing a communication unit to transmit the transmission information generated in the transmission information generation step to a data reception device, in which
in the transmission information generation step,
a step of generating, as the transmission information, frame information in which a plurality of data blocks individually storing data indicating a motion in units of parts of the body of the user is combined is executed.

Moreover, a sixth aspect of the present disclosure is a program for causing a data reception device to execute data processing, the data processing including:
a reception data analysis step of causing a reception data analysis unit to analyze reception data from a data transmission device; and
a display control step of causing a display control unit to receive an analysis result in the reception data analysis step and execute motion control of an avatar displayed on a display unit, in which
in the reception data analysis step,
a step of acquiring, from frame information included in the reception data, a plurality of data blocks in which motion data in units of parts of a body of a user on a data transmission device side is individually stored, and
a step of extracting the motion data in units of parts of the body of the user from the plurality of acquired data blocks are executed, and
in the display control step,
avatar motion control is executed in which a motion in units of parts of the body of the user is reflected as a motion in units of parts of the avatar using the motion data in units of parts of the body of the user extracted from the plurality of data blocks in the reception data analysis step.

Note that the program of the present disclosure is, for example, a program that can be provided by a storage medium or a communication medium that provides a variety of program codes in a computer-readable format, to an information processing device or a computer system that can execute the program codes. By providing such a program in a computer-readable format, processing corresponding to the program is implemented on the information processing device or the computer system.

Other objects, features, and advantages of the present disclosure will become apparent from a more detailed description based on examples of the present disclosure described later and the accompanying drawings. Note that, in the present specification, a system is a logical set configuration of a plurality of devices, and is not limited to one in which devices of respective configurations are in the same housing.

According to a configuration of an example of the present disclosure, a device and a method that enable processing of reflecting a motion of a user in an avatar displayed on a display unit in substantially real time are realized.

Specifically, for example, a motion analysis unit that analyzes a user motion on the basis of a detection value of a sensor worn by the user, and a transmission information generation unit that receives a motion analysis result and generates transmission information storing data indicating the motion of the user are included. The transmission information generation unit generates frame information in which a plurality of data blocks individually storing data indicating a motion in units of parts of a body of the user is combined. A data reception device acquires data indicating the motion in units of parts of the body of the user from the data blocks in the received frame information, and executes avatar motion control of reflecting the motion of the user in an avatar displayed on a display unit.

According to the present configuration, a device and a method that enable processing of reflecting the motion of the user in the avatar displayed on the display unit in substantially real time are realized.

Note that the effects described herein are merely examples and are not limited, and additional effects may also be provided.

### BRIEF DESCRIPTION OF DRAWINGS

Fig. 1 is a diagram for describing configurations of an information processing system and an information processing device to which processing of the present disclosure is applicable and an outline of the processing.
Fig. 2 is a diagram explaining a processing example to which a configuration of the present disclosure is applied.
Fig. 3 is a diagram explaining an example of attaching a sensors for acquiring motion information of a user.
Fig. 4 is a diagram illustrating skeleton information and frame information constituting avatar control information transmitted from the data transmission device to the data reception device.
Fig. 5 is a diagram explaining a configuration example of skeleton information constituting avatar control information and a data block constituting frame information.
Fig. 6 is a diagram explaining a format of a data block.
Fig. 7 is a diagram explaining a configuration example of a data block.
Fig. 8 is a diagram explaining a configuration example of a data block.
Fig. 9 is a diagram explaining a configuration example of a data block constituting skeleton information.
Fig. 10 is a diagram explaining a configuration example of a data block constituting skeleton information.
Fig. 11 is a diagram explaining a configuration example of a bone data array block constituting skeleton information.
Fig. 12 is a diagram explaining a bone configuration example of an avatar.
Fig. 13 is a diagram explaining a configuration example of a data block constituting frame information.
Fig. 14 is a diagram explaining a configuration example of a data block constituting frame information.
Fig. 15 is a diagram explaining a configuration example of a frame data block constituting frame information.
Fig. 16 is a diagram explaining a configuration example of a data block of a bone transform data array block constituting frame information.
Fig. 17 is a diagram explaining an example of transform data generation processing.
Fig. 18 is a diagram explaining avatar control information transmitted from the data transmission device to the data reception device.
Fig. 19 is a diagram explaining a configuration example in which a dress change instruction data block is added as a data block of frame information.
Fig. 20 is a diagram explaining an avatar display example using a dress change instruction data block executed in the data reception device.
Fig. 21 is a diagram explaining an avatar display example using a dress change instruction data block executed in the data reception device.
Fig. 22 is a flowchart illustrating a generation and transmission process sequence of a dress change instruction data block executed by the data transmission device.
Fig. 23 is a flowchart illustrating an avatar display control process sequence using a dress change instruction data block executed by the data reception device.
Fig. 24 is a diagram explaining an example of processing in which each of a plurality of data transmission devices transmits avatar control information.
Fig. 25 is a diagram explaining a configuration of two pieces of avatar control information transmitted from the data transmission device to the data reception device.
Fig. 26 is a diagram explaining a configuration of two pieces of avatar control information transmitted from the data transmission device to the data reception device.
Fig. 27 is a diagram explaining a classification processing example of avatar control information by IP address executed by the data reception device.
Fig. 28 is a diagram explaining an example of processing in which each of a plurality of data transmission devices transmits avatar control information.
Fig. 29 is a diagram illustrating a flowchart for explaining an avatar display control processing sequence in a case where a plurality of pieces of avatar control information executed by the data reception device is received.
Fig. 30 is a diagram explaining a specific example of processing of switching control of a plurality of avatars in units of time.
Fig. 31 is a diagram explaining a specific example of processing of switching control of a plurality of avatars in units of time.
Fig. 32 is a diagram explaining a data block configuration example of frame information including a priority information data block used when executing processing of switching control of a plurality of avatars in time units.
Fig. 33 is a diagram illustrating a flowchart for describing a sequence of processing executed by the data transmission device in a case where the selection application processing according to the priority of the avatar is executed.
Fig. 34 is a flowchart illustrating a sequence of processing executed by the data reception device in a case where the selection application processing according to the priority of the avatar is executed.
Fig. 35 is a flowchart illustrating a sequence of processing executed by the data reception device in a case where the selection application processing according to the priority of the avatar is executed.
Fig. 36 is a diagram explaining a specific example of an example that enables processing of causing the avatar to execute an action that the user desires to cause the avatar to execute, instead of the user's own motion itself.
Fig. 37 is a diagram explaining a data block configuration example of frame information to which a pose/gesture information storage block that enables processing of causing the avatar to execute an action that the user desires to cause the avatar to execute is added.
Fig. 38 is a flowchart illustrating a processing sequence of a data transmission device that generates and transmits frame information to which a pose/gesture information storage block is added.
Fig. 39 is a diagram illustrating a flowchart for explaining a processing sequence of the data reception device that receives and uses the frame information to which the Pose/gesture information storage block is added.
Fig. 40 is a diagram explaining a specific example of an example using an image data storage block that stores image data captured by a camera such as a facial expression of a user.
Fig. 41 is a diagram explaining a data block configuration example of frame information to which an image data storage block storing image data captured by a camera such as a facial expression of a user is added.
Fig. 42 is a diagram explaining a specific example of an example using a voice data storage block that stores acquired voice data of a microphone such as a user's utterance voice.
Fig. 43 is a diagram explaining a data block configuration example of frame information to which a voice data storage block storing acquired voice data of a microphone such as a spoken voice of a user is added.
Fig. 44 is a diagram explaining an example in which motion control of an avatar is executed by allocating motion of each user to a user-based avatar using motion data of a plurality of users.
Fig. 45 is a diagram explaining a configuration example of frame information storing data blocks indicating motions of a plurality of users.
Fig. 46 is a diagram explaining a configuration example of frame information storing data blocks indicating motions of a plurality of users.
Fig. 47 is a diagram explaining a specific example of an example using a touch sensor analysis data storage block storing detection data and analysis data of a touch sensor worn by a user.
Fig. 48 is a diagram explaining a configuration example of frame information to which a touch sensor analysis data storage block storing detection data and analysis data of a touch sensor worn by a user is added.
Fig. 49 is a diagram explaining an example using detection data and analysis data of a motion sensor mounted on a ball.
Fig. 50 is a diagram explaining a specific example of an example using an illumination control information storage block storing illumination control information (illumination control program) in addition to motion information of a user.
Fig. 51 is a diagram explaining a configuration example of frame information to which an illumination control information storage block storing illumination control information (illumination control program) is added.
Fig. 52 is a diagram explaining a configuration example of an information processing device such as a data transmission device and a data reception device.
Fig. 53 is a diagram explaining a hardware configuration example of the information processing device according to the present disclosure.

### MODE FOR CARRYING OUT THE INVENTION

The detail of a data transmission device, a data reception device, a data processing method, and a program according to the present disclosure will be described below with reference to the drawings. Note that the description will be made in accordance with the following items.
1. Outline of information processing system to which processing of present disclosure is applicable
2. Configuration example of avatar control information and data block
3. Data block constituting skeleton information
4. Data block constituting frame information
5. Transmission processing of avatar control information configured by skeleton information and frame information
6. Generation, transmission, and application processing of frame information to which avatar dress change instruction data block is added
7. Processing example in case where plurality of data transmission devices transmits avatar control information
8. Example of switching between plurality of avatar controls based on plurality of avatar control information in time unit
9. Example using data block storing pose and gesture information
10. Other examples
11. Application examples of configuration and processing of present disclosure
12. Configuration example of information processing device
13. Hardware configuration example of information processing device
14. Summary of configuration of present disclosure

### [1. Configuration example of information processing system to which processing of present disclosure is applicable]

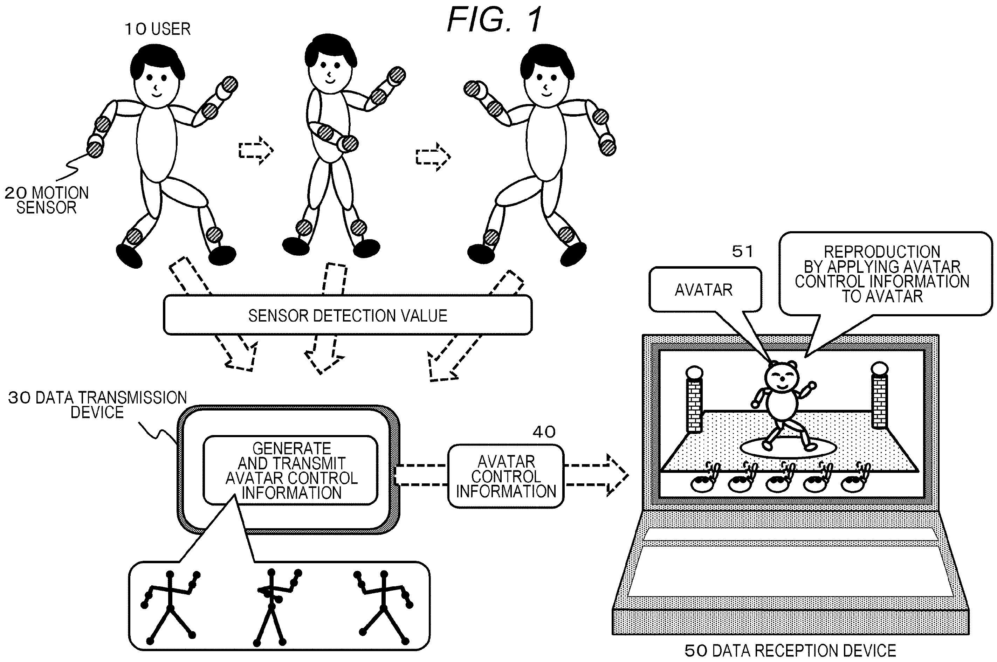

First, a configuration example of an information processing system to which processing of the present disclosure is applicable will be described with reference to Fig. 1 and subsequent drawings.

Fig. 1 is a diagram illustrating a configuration example of an information processing system to which processing of the present disclosure is applicable.

Fig. 1 illustrates a user 10, a data transmission device (for example, a smartphone) 30, and a data reception device (for example, a PC) 50.

Note that the data transmission device 30 is not limited to the smart phone, and may be a tablet terminal, a PC, VR goggles having functions such as data processing and communication, or the like.

Furthermore, the data reception device 50 is not limited to the PC, and may be a tablet terminal, a smartphone, VR goggles having functions such as data processing and communication, or the like.

The user 10 wears the motion sensor 20 on each part of the body such as the head, the arm, and the foot of the user.

The motion sensor 20 is, for example, an acceleration sensor or an inertial measurement unit (IMU).

The IMU is a motion sensor capable of simultaneously measuring accelerations in xyz three-axis directions, angular velocities around the xyz three axes, and the like.

A detection value of the motion sensor 20 attached to each part of the body of the user 10 is input to the data transmission device (for example, a smartphone) 30 by proximity communication such as Bluetooth (registered trademark).

The data transmission device 30 analyzes a detection value of the motion sensor 20 of each part of the body of the user 10, and generates avatar control information 40 including motion data or the like indicating the motion of the user.

The avatar control information 40 generated by the data transmission device 30 is control information for controlling the motion of the avatar (character) displayed on the display unit of the data reception device 50.

The avatar control information 40 generated by the data transmission device 30 includes, for example, frame information (motion data) indicating the motion (three-dimensional motion) of the user for each (1/50) sec corresponding to the frame interval of the reproduction image frames (posture data frames) in the data reception device 50 that performs the avatar reproduction processing, and skeleton information indicating the skeleton structure (three-dimensional structure) of the avatar.

Note that an example of acquiring the motion (three-dimensional motion) of the user every (1/50) sec is an example, and other settings may be used. Furthermore, the data acquisition interval from the motion sensor 20 of each part of the body of the user 10 and the frame interval of the reproduction image frames (posture data frames) in the data reception device 50 do not necessarily need to match. The update frequency of the screen is determined by the refresh rate of the display or the system configuration, and even in a case where the update frequency of the screen is 60 fps, the data acquisition interval from the motion sensor 20 can be set to (1/50) sec.

A detailed configuration of the avatar control information 40 will be described later.

The data transmission device 30 transmits, to the data reception device (for example, PC) 50, the avatar control information 40 including the frame information (motion data) indicating the motion of the user and the skeleton information generated on the basis of the detection value of the motion sensor 20.

The data reception device 50 is executing, for example, a game app (application), a virtual reality space app (metaverse application), or the like, and an avatar (virtual character) 51 is displayed on the display unit of the data reception device 50. Note that the avatar (virtual character) 51 is a virtual character that performs an action reflecting the motion of the user 10.

The data reception device 50 applies the avatar control information 40 received from the data transmission device 30 to the avatar 51 being displayed on the display unit, and causes the avatar 51 to execute a motion similar to the motion of the user 10 in substantially real time.

For example, in the example illustrated in Fig. 1, the user 10 dances, and the avatar 51 displayed on the display unit of the data reception device 50 dances similarly to the user 10.

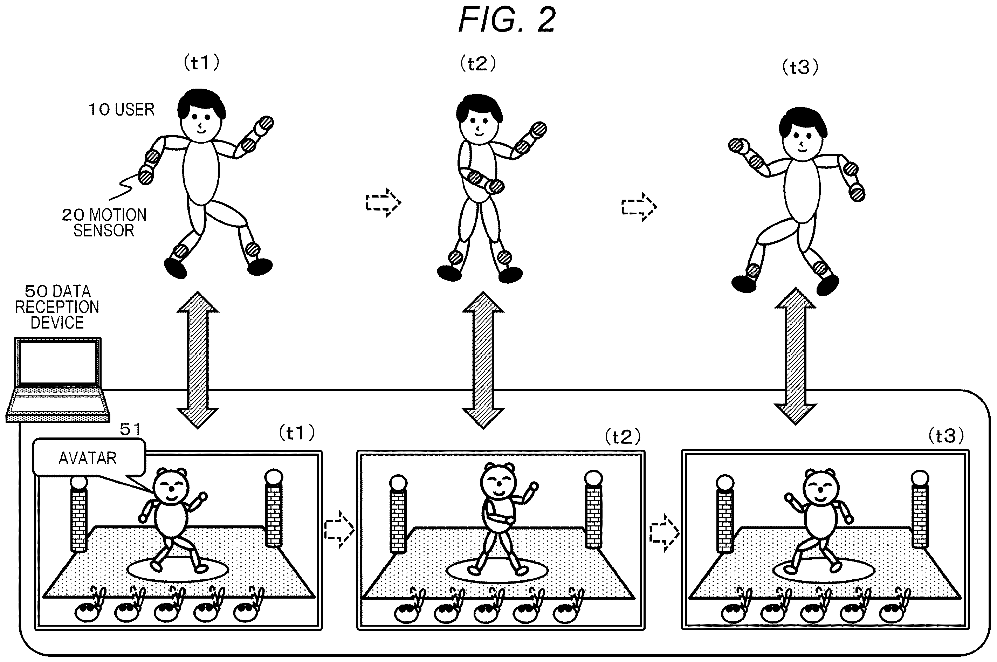

An example of a correspondence relationship between the motion of the user 10 and the motion of the avatar 51 displayed on the display unit of the data reception device 50 will be described with reference to Fig. 2.

In Fig. 2, the chronological motion of the user 10 is illustrated in the upper part. That is, time (t1) → (t2) → (t3) indicates the motion of the user 10 with the lapse of time.

The lower part illustrates the motion of the avatar 51 displayed on the display unit of the data reception device 50. The avatar 51 is also displayed as if performing the similar dance action as the user 10 over time (t1) → (t2) → (t3).

As described above, the information processing system of the present disclosure is capable of reflecting the motion of the user 10 on the motion of the character such as the avatar displayed on the display device such as the PC in substantially real time.

In the system of the present disclosure, in order to enable the real-time processing, the data format of the avatar control information transmitted from the data transmission device 30 to the data reception device is defined in a predetermined format.

The data format of the avatar control information will be described in detail later.

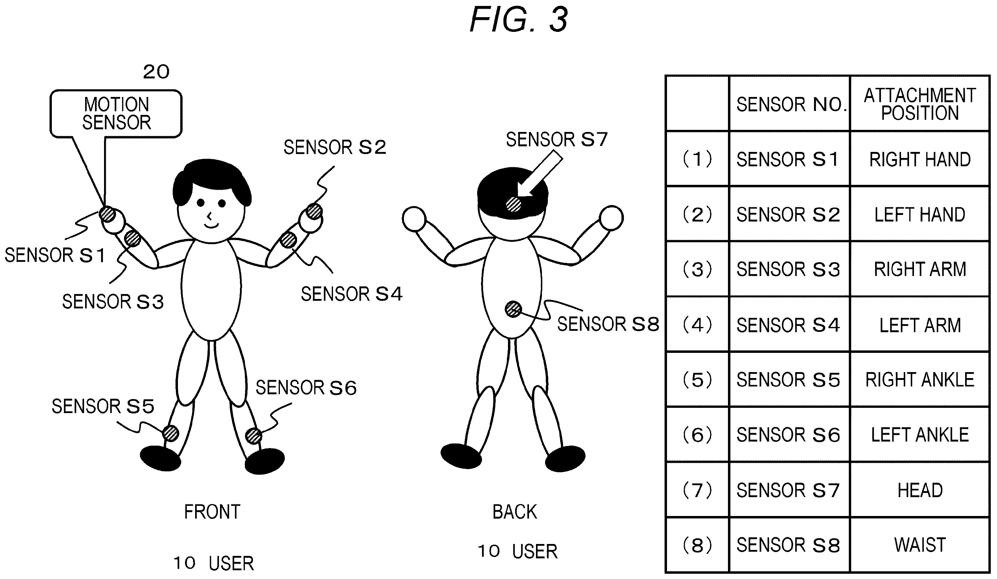

An example of attaching the sensors (motion sensors) to the user 10 will be described with reference to Fig. 3.

In the example illustrated in Fig. 3, the user 10 has the following seven motion sensors attached to respective parts of the body:
(1) Right hand motion sensor S1;
(2) Left hand motion sensor S2;
(3) Right arm motion sensor S3;
(4) Left arm motion sensor S4;
(5) Right ankle motion sensor S5;
(6) Left ankle motion sensor S6;
(7) Head motion sensor S7; and
(8) Waist motion sensor S8.

These eight motion sensors individually detect the motions of these eight parts of the right hand, the left hand, the right arm, the left arm, the right foot, the left foot, the head, and the waist of the user.

As illustrated in Fig. 3, the motion sensors (IMUs) attached to the eight parts of the right hand, the left hand, the right arm, the left arm, the right foot, the left foot, the head, and the waist of the user output the accelerations in the three-axis directions and the angular velocities around the three axes of these eight parts of the right hand, the left hand, the right arm, the left arm, the right foot, the left foot, the head, and the waist of the user as sensor detection values, respectively.

Note that the example of attaching the sensors illustrated in Fig. 3 is an example of attaching the sensors to the eight positions of the user's body. However, this is an example, and various modes of attaching sensors are available, such as a configuration to attach the sensors to only both hands, a configuration to attach the sensors to only both hands and both feet, and a configuration to attach more sensors to respective parts of the body.

The detection value of the motion sensor worn by the user 10 is first transmitted to the data transmission device 30 such as the smartphone of the user 10. The transmission processing of the sensor detection value is executed by proximity communication such as Bluetooth (registered trademark).

The data transmission device 30 that has received the sensor detection value analyzes the received sensor detection value, generates the avatar control information 40 in a predetermined format indicating the motion of the user 10, and transmits the generated avatar control information 40 to the data reception device 50 such as a PC that executes character and avatar reproduction processing.

As described above, the data transmission device 30 analyzes detection values of the motion sensors 20 of each part of the body of the user 10 to generate the avatar control information 40 indicating the motion of the user. The avatar control information 40 includes, for example, frame information corresponding to motion data indicating the user motion for each (1/50) sec, skeleton information indicating the skeleton structure of the avatar, and the like.

### [2. Configuration example of avatar control information and data block]

Next, a configuration example of the avatar control information and a data block will be described.

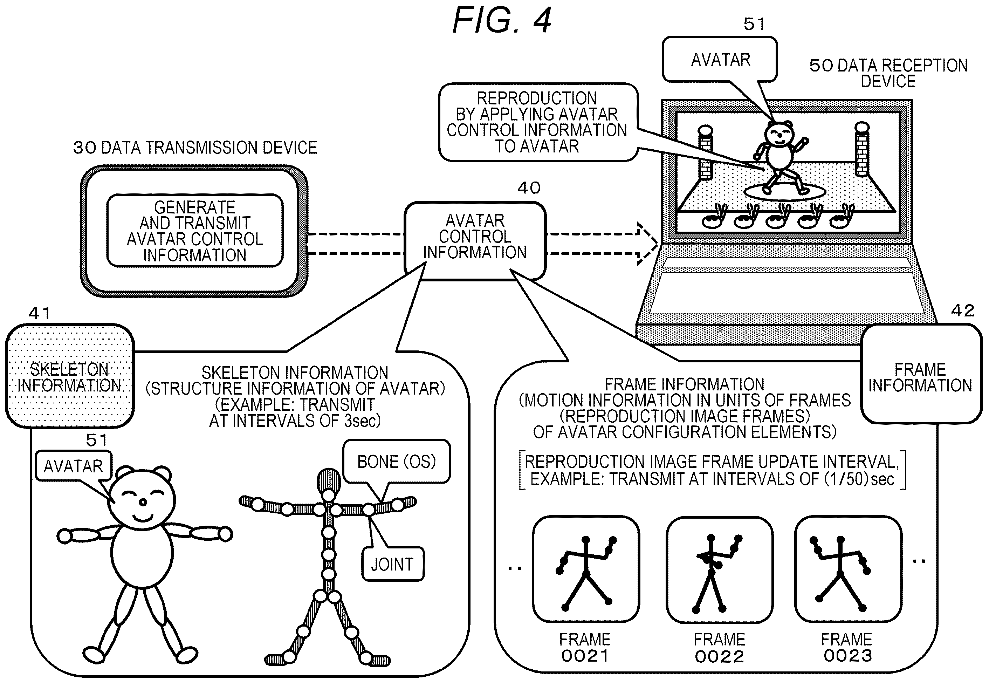

A configuration example of the avatar control information 40 which is transmission data from the data transmission device (smartphone or the like) 30 to the data reception device (PC or the like) 50 will be described with reference to Fig. 4.

As illustrated in Fig. 4, the avatar control information 40 that is transmission data from the data transmission device (smartphone or the like) 30 to the data reception device (PC or the like) 50 includes the following two pieces of information.
(a) Skeleton information 41
(b) Frame information 42

As illustrated in the lower left part of Fig. 4, the skeleton information 41 is information indicating the structure of the avatar 51 that reflects the motion of the user 10.

Specifically, it is structure information of an avatar indicating a configuration of a bone and a joint to which the bone is rotatably connected.

Each bone is connected to another bone by the joint, and the bone is configured to be rotatable with respect to the joint.

The skeleton information 41 that is structure information indicating the structure of the avatar 51 reflecting the motion of the user 10 is transmitted from the data transmission device (smartphone or the like) 30 to the data reception device (PC or the like) 50.

Note that the skeleton information 41 is transmitted from the data transmission device (smartphone or the like) 30 to the data reception device (PC or the like) 50 at intervals of 3 seconds, for example.

In principle, if there is no change in the avatar 51 reflecting the motion of the user 10, the skeleton information 41 may be transmitted only once, but is transmitted at regular intervals (for example, at intervals of 3 seconds) in consideration of the occurrence of a reception error in the data reception device (PC or the like) 50, the avatar change processing, and the like.

For example, in a case of changing the avatar reflecting the motion of the user 10, the data transmission device (smartphone or the like) 30 transmits a request for changing the avatar to the data reception device (PC or the like) 50 together with the skeleton information of the new avatar to be changed.

Another piece of data included in the transmission data from the data transmission device (smartphone or the like) 30 to the data reception device (PC or the like) 50 is the frame information 42 illustrated in the lower right part of Fig. 4.

As illustrated in the lower right part of Fig. 4, the frame information 42 corresponds to motion data indicating the motion of the user 10. That is, the frame information is motion information (motion data) in units of reproduction image frames that are the avatar reproduction images in the data reception device (PC or the like) 50.

The frame information 42 is configured by data indicating the motion in units of avatar configuration elements (bones).

The frame information 41 is transmitted from the data transmission device (smartphone or the like) 30 to the data reception device (PC or the like) 50 for each reproduction image frame in the data reception device (PC or the like) 50, for example.

Specifically, for example, in a case where image reproduction is executed at 50 fps (frames/second) in the data reception device (PC or the like) 50, 50 pieces of frame information 42 are transmitted per second from the data transmission device (smartphone or the like) 30 to the data reception device (PC or the like) 50.

That is, the data transmission device (smart phone or the like) 30 sequentially generates the new frame information 42 reflecting the motion of the user at (1/50) sec intervals, and transmits the generated new frame information 42 to the data reception device (PC or the like) 50 at (1/50) sec intervals.

Note that, as described above, the example of acquiring and transmitting the motion of the user (three-dimensional motion) every (1/50) sec is an example, and other settings may be used. Furthermore, the data acquisition interval from the motion sensor 20 of each part of the body of the user 10 and the frame interval of the reproduction image frames (posture data frames) in the data reception device 50 do not necessarily need to match.

As described with reference to Fig. 4, the avatar control information 40 that is transmission data from the data transmission device (smartphone or the like) 30 to the data reception device (PC or the like) 50 includes the two pieces of information below.
(a) Skeleton information 41
(b) Frame information 42

Both of these two pieces of information are configured as "data blocks" having a predetermined data format.

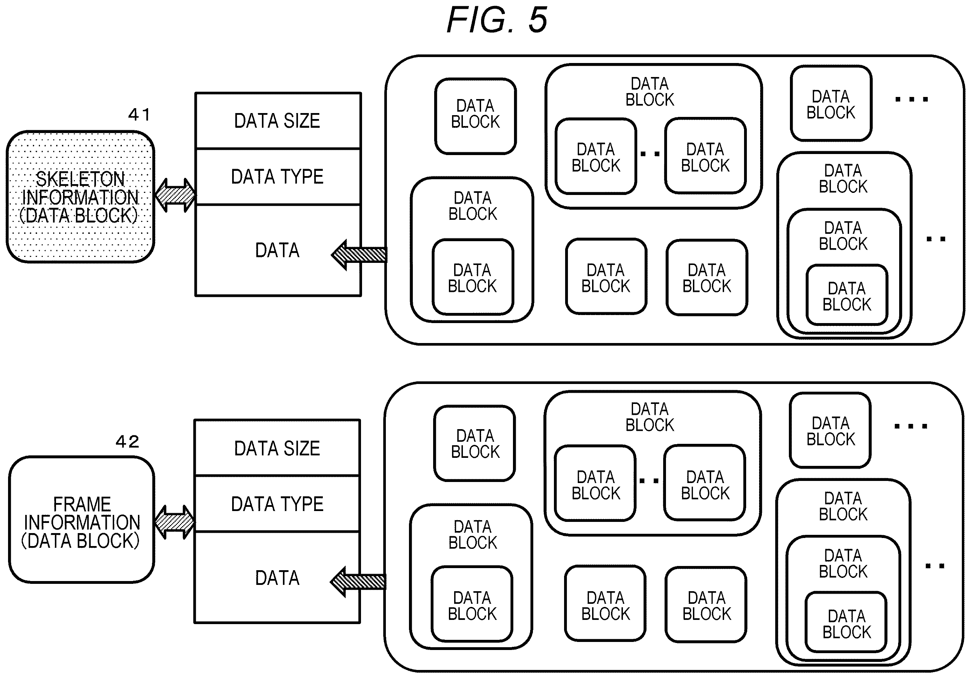

A configuration example of data blocks constituting the skeleton information 41 and the frame information 42 will be described with reference to Fig. 5.

As illustrated in Fig. 5, each of the skeleton information 41 and the frame information 42 includes one data block.

One data block has an area for storing the following three data:
(a) Data size storage area
(b) Data type storage area
(c) Actual data storage area

Moreover, various data blocks can be stored in the data portions of the data blocks constituting the skeleton information 41 and the frame information 42.

That is, the data blocks constituting the skeleton information 41 and the frame information 42 have a configuration capable of storing another data block therein as illustrated in Fig. 5.

As illustrated in Fig. 5, the data blocks stored in the skeleton information 41 and the frame information 42 can have various configurations.

Various configurations are possible, such as a configuration in which a plurality of data blocks is stored in parallel in one data block, and a data block storage configuration of a plurality of hierarchies in which yet another data block is stored in a storage data block in one data block.

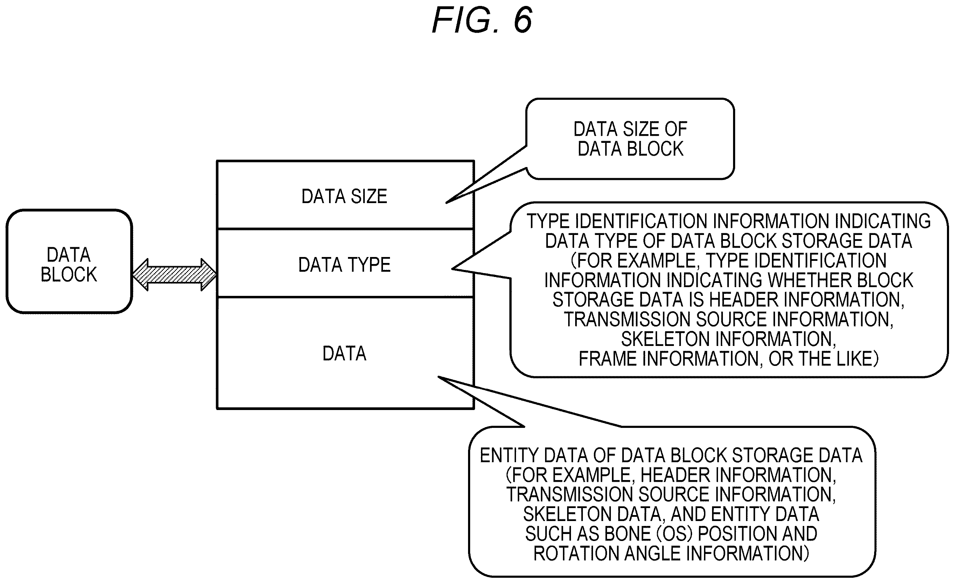

A data format of the data blocks will be described with reference to Fig. 6.

As illustrated in Fig. 6, one data block includes the following three data regions:
(a) Data size storage area
(b) Data type storage area
(c) Actual data storage area

"(a) Data size storage area" is an area for storing a data size (data capacity (byte or the like)) of a data block.

"(b) Data type storage area" is an area for storing identification data such as a type of a data block, that is, a kind of block storage data or the like. For example, type identification information indicating the kind or the like of data stored in the (c) data area, such as whether the block storage data is header information, transmission source information, skeleton information, frame information, or the like, is stored.

"(c) Actual data storage area" is a storage area of actual data to be data block storage target data. For example, header information, transmission source information, skeleton data, and entity data such as a bone position and rotation angle information are stored.

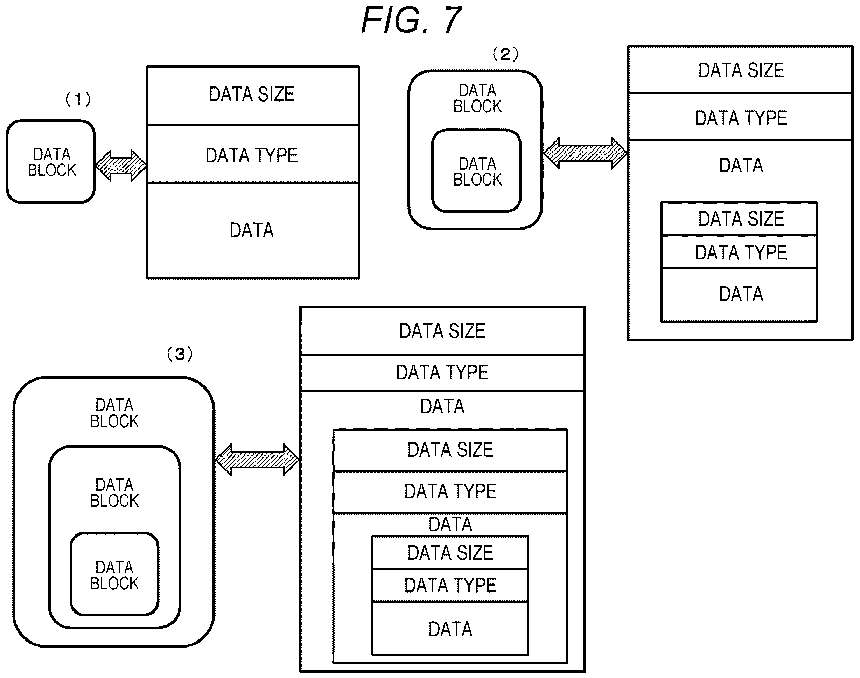

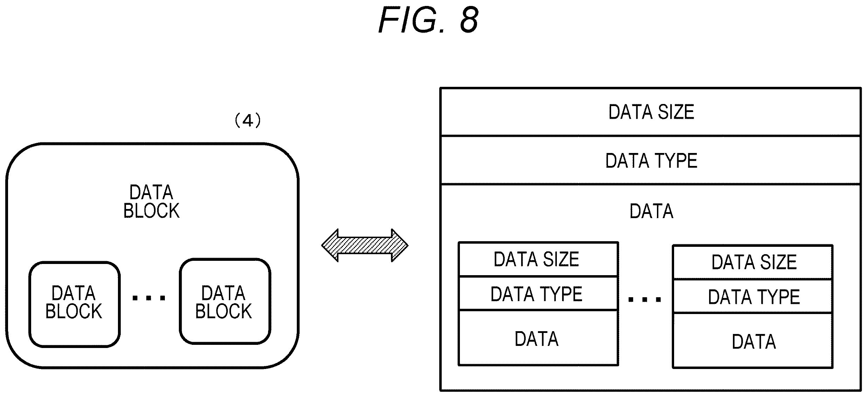

Figs. 7 and 8 illustrate correspondences between various data block configurations and data formats.
(1) illustrates a data format example of one data block.
(2) illustrates a data block example of a hierarchical configuration in which another data block is stored inside a data portion of one data block.
(3) illustrates an example of a data block having a two-stage hierarchical configuration in which another data block is stored inside a data portion of one data block and a third data block is stored inside the data portion of the storage data block.

Moreover, Fig. 8(4) illustrates an example of a data block having a hierarchical configuration in which a plurality of data blocks is stored in parallel inside a data portion of one data block.

In both the configurations of Figs. 7 and 8, each of the data blocks has the data format described above with reference to Fig. 6. That is, one data block has a data format configured by the following three data regions.
(a) Data size storage area
(b) Data type storage area
(c) Actual data storage area

### [3. Data block constituting skeleton information]

Next, data blocks constituting the skeleton information will be described.

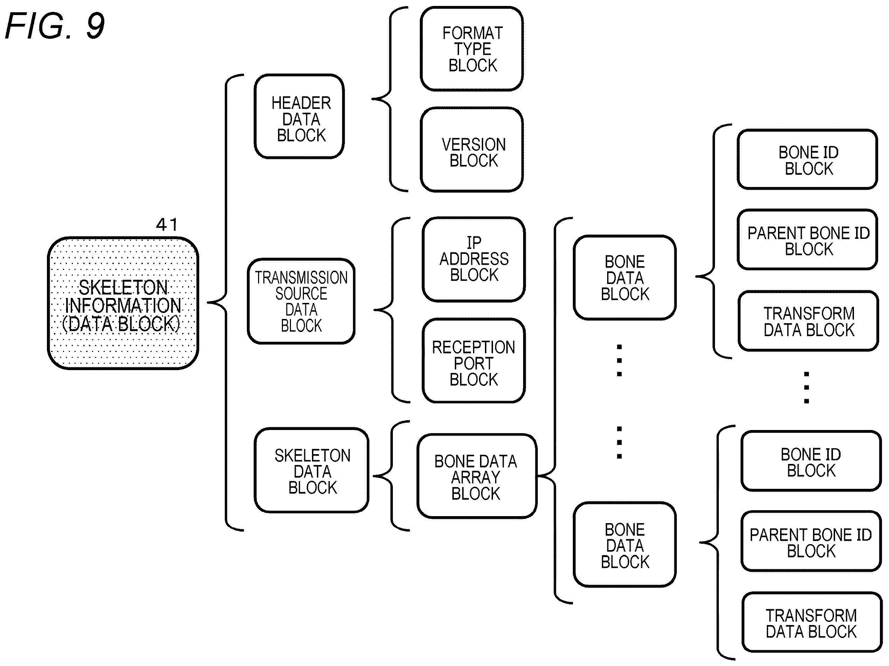

Fig. 9 is a diagram explaining data blocks constituting the skeleton information 41.

As illustrated in Fig. 9, the skeleton information 41 includes the following three blocks as storage data blocks of the first hierarchy at the same time as the skeleton information itself is one data block.

(1) Header data block
(2) Transmission source data block
(3) Skeleton data block

The skeleton information 41 includes these three blocks as storage data blocks in the first hierarchy.

Moreover, inside the "(1) Header data block", two data blocks of
Format type block
Version block
are included as storage data blocks of the second hierarchy.

Furthermore, inside the "(2) Transmission source data block", the two data blocks of
IP address block
Reception port block
are included as storage data blocks of the second hierarchy.

Moreover, inside the "(3) Skeleton data block",
Bone data array block
is included as a storage data block of the second hierarchy.

Moreover, the "Bone data array block" includes, as storage data blocks,
Bone data blocks, and each of the "Bone data blocks" includes, as storage data blocks,
Bone ID block
Parent bone ID block
Transform data block
these data blocks.

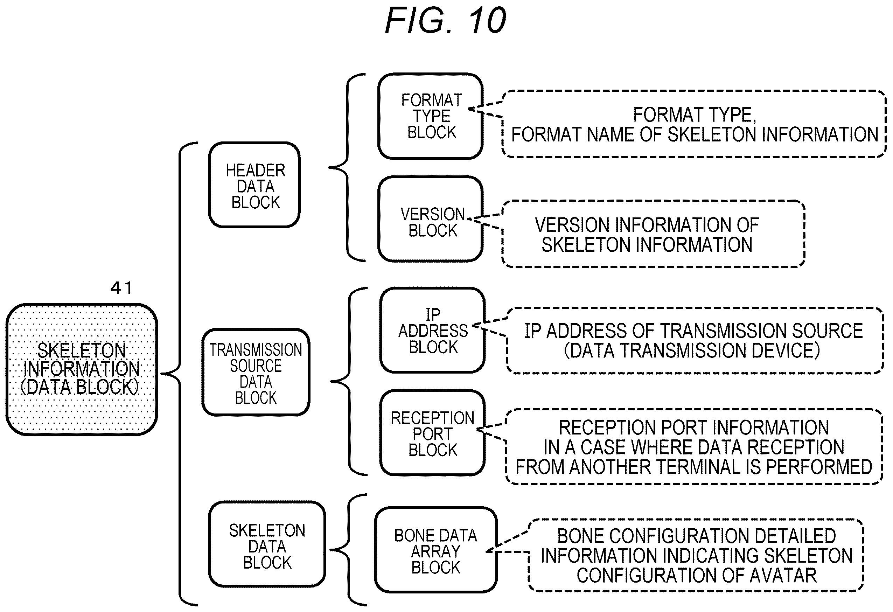

Details of storage data of each data block constituting the skeleton information 41 will be described with reference to Fig. 10 and subsequent drawings.

First, with reference to Fig. 10, storage data of data blocks of the second hierarchy stored in three storage data blocks of the first hierarchy constituting the skeleton information 41, that is, stored in these three data blocks
(1) Header data block
(2) Transmission source data block
(3) Skeleton data block
will be described.

The "Format type block" that is a storage data block in the second hierarchy of the "(1) Header data block" is a data block in which a format type and a format name that are information regarding a data format of the skeleton information 41 are stored.

Furthermore, the "Version block" is a data block storing version information of the skeleton information 41.

The "IP address block" that is a storage data block of the second hierarchy of the "(2) Transmission source data block" is a data block storing the IP address of the transmission source of the skeleton information 41, that is, the data transmission device 30.

Furthermore, the "Reception port block" is a data block that stores a reception port identifier used in a case where the data transmission device 30 receives another skeleton information 41 from another device.

Note that by referring to the IP address stored in the "IP address block" included in the skeleton information 41 received from the data transmission device 30, the data reception device (PC or the like) 50 can confirm the transmission source of the received skeleton information.

The "Bone data array block" that is a storage data block in the second hierarchy of the "(3) Skeleton data block" stores "Bone data blocks" corresponding to each of the bones constituting the skeleton of the avatar 51 that reflects the motion of the user 10, and further, each individual "Bone data block" includes, as a storage data block,
Bone ID block
Parent bone ID block
Transform data block
these data blocks.

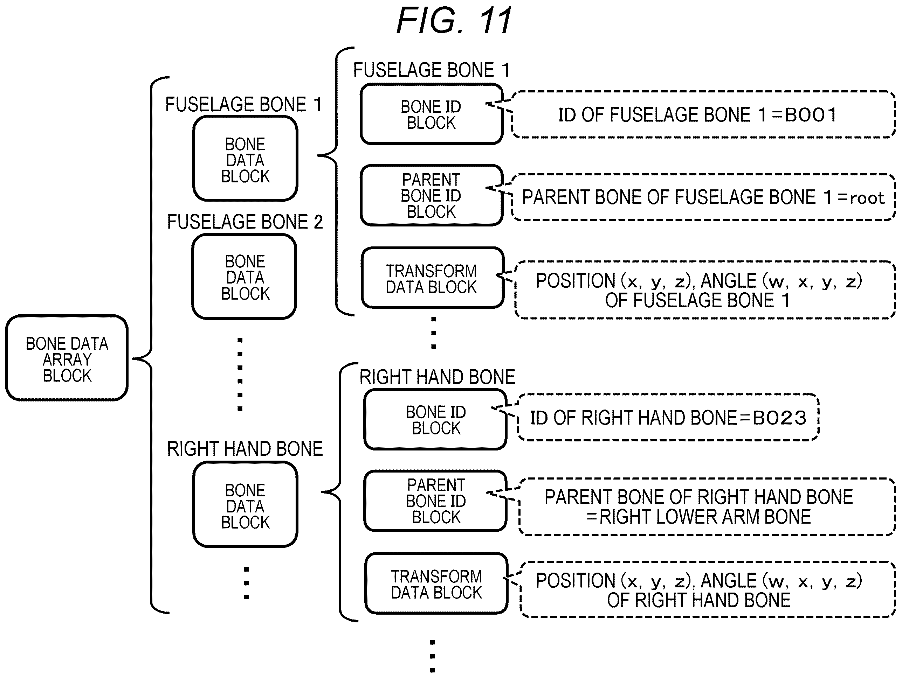

A specific example of data stored in the "Bone data array block" will be described with reference to Fig. 11.

As illustrated in Fig. 11, the "Bone data array block" stores "Bone data blocks" corresponding to the respective bones constituting the skeleton of the avatar 51 that reflects the motion of the user 10.

As illustrated in Fig. 11,
Bone data block corresponding to fuselage bone 1
Bone data block corresponding to fuselage bone 2
...
Bone data block corresponding to right hand bone, etc.

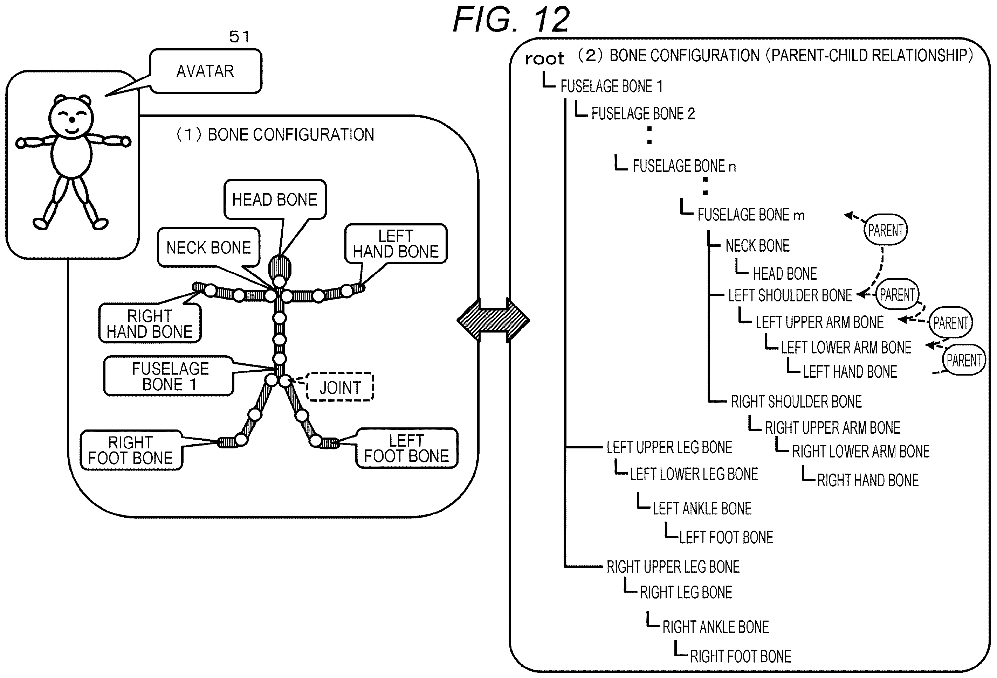

Fig. 12(1) illustrates a bone configuration example of the avatar 51. As described above with reference to Fig. 4, the avatar 51 has a configuration in which a plurality of bones is connected by joints.

Note that the bone configuration of the avatar 51 illustrated in Fig. 12(1) is simplified for description. In practice, more bones and joints can be set at a higher density than in the example illustrated in the drawing.

Fig. 12(1) illustrates bone positions of the fuselage bone 1, a head bone, a right hand bone, a left hand bone, a right foot bone, and a left foot bone. All parts connected by joints indicated by white circles are bones, and IDs (identifiers) corresponding to individual bones are set for each of these bones. This bone correspondence ID is recorded in the "Bone ID block" which is one of the storage data blocks of the "Bone data block" illustrated in Fig. 11.

As illustrated in Fig. 11, for example, bone ID of the fuselage bone 1 = B001, bone ID of the right hand bone = B023, and the like.

Moreover, the ID of the parent bone of each bone is recorded in the "Parent bone ID block" which is one of the storage data blocks of the "Bone data block" illustrated in Fig. 11.

As illustrated in (2) Bone configuration (parent-child relationship) in Fig. 12, all the bones constituting the avatar are assigned to any node in the hierarchical configuration having a root as a vertex node.

Note that, as described above, the bone configuration of the avatar 51 illustrated in Fig. 12(1) is illustrated in a simplified manner for the sake of explanation, and does not correspond to the (2) bone configuration (master-slave relationship) of Fig. 12.

As illustrated in Fig. 12(2), each of the nodes constituting the hierarchical configuration of the bone is set as a node having a parent-child relationship with respect to another one node. Two bones in a parent-child relationship are bones connected by joints. Thus, the motion of two bones in a parent-child relationship indicates an associated motion. That is, the motion of the child bone is a motion affected by the motion of the parent bone.

For example, the parent node of the left hand bone is the left lower arm bone.

Furthermore, the parent node of the lower left arm hand bone is the left upper arm bone.

The parent node of the left upper arm bone is the left shoulder bone.

The parent node of the left shoulder bone is the fuselage bone m.

The fuselage bone m also has a parent node, and finally reaches the root node which is the uppermost node.

In this manner, each of the bone corresponding nodes constituting the avatar has a parent-child relationship with respect to another one node, and is illustrated in a hierarchical configuration having a root node as the uppermost node.

In the "Parent bone ID block" which is one of the storage data blocks of the "Bone data block" illustrated in Fig. 11, the ID of the parent bone of the bone defined by the bone hierarchical configuration illustrated in Fig. 12(2) is recorded.

Moreover, in the "Transform data block" which is one of the storage data blocks of the "Bone data block" illustrated in Fig. 11, the position (x, y, z) and angle (w, x, y, z) of each bone are recorded. Note that the angle (w, x, y, z) is four-dimensional Euler angle information.

Note that the position (x, y, z) and angle (w, x, y, z) information of each bone recorded in the "Transform data block" of the skeleton information 41 is the position (x, y, z) and angle (w, x, y, z) information of the bone corresponding to a predefined avatar reference posture, for example, a reference posture in which both hands and both feet are spread as illustrated in Fig. 12(1).

With regard to the frame information 42, the position (x, y, z) and angle (w, x, y, z) information of each bone is also recorded as a "Transform data block" corresponding to each bone. However, as the information, the position (x, y, z) and angle (w, x, y, z) information of each bone corresponding to the motion of the user 10 is recorded.

The "transform data block" recorded in the frame information 42 will be described in detail later.

Note that, as described above, the two bones in the parent-child relationship are bones connected by joints, and the position (x, y, z) and angle (w, x, y, z) of the bone of the child node are positions and angles according to the position (x, y, z) and angle (w, x, y, z) of the bone of the parent node of the child node. That is, the data is constrained to the position (x, y, z) and angle (w, x, y, z) of the bone of the parent node.

### [4. Data block constituting frame information]

Next, data blocks constituting the frame information will be described.

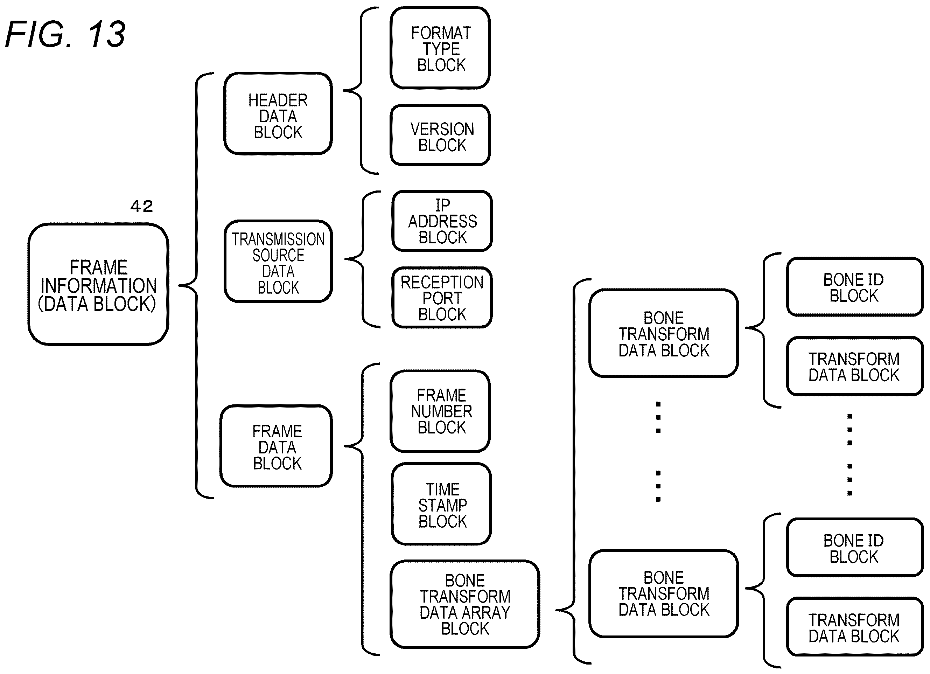

Fig. 13 is a diagram explaining data blocks constituting the frame information 42.

As illustrated in Fig. 13, the frame information 42 includes three blocks below as storage data blocks of the first hierarchy at the same time as the frame information itself is one data block.
(1) Header data block
(2) Transmission source data block
(3) Frame data block

These three blocks are included as storage data blocks of the first hierarchy.

"(1) Header data block" and "(2) Transmission source data block" are data blocks similar to the skeleton information 41 described above with reference to Fig. 9 and subsequent drawings. That is,

"(1) Header data block" includes, as storage data blocks of the second hierarchy,
Format type block
Version block
these two data blocks.

"(2) Transmission source data block" includes, as storage data blocks of the second hierarchy,
IP address block
Reception port block
these two data blocks.

"(3) Frame data block" is a data block specific to the frame information 42, and includes
Frame number block
Time stamp block
Bone transform data array block
as a storage data block of the second hierarchy.

Moreover, as storage data blocks of "Bone transform data array blocks"
a plurality of Bone transform data blocks is included, and further,
as storage data blocks of "Bone transform form data blocks"
Bone ID block
Transform data block
these data blocks are included.

Each of the plurality of Bone transform data blocks is a data block in which data indicating a motion in units of parts of a body of the user is individually stored.

As described above, the frame information 42 includes the plurality of data blocks individually storing data indicating the motion in units of parts of the body of the user.

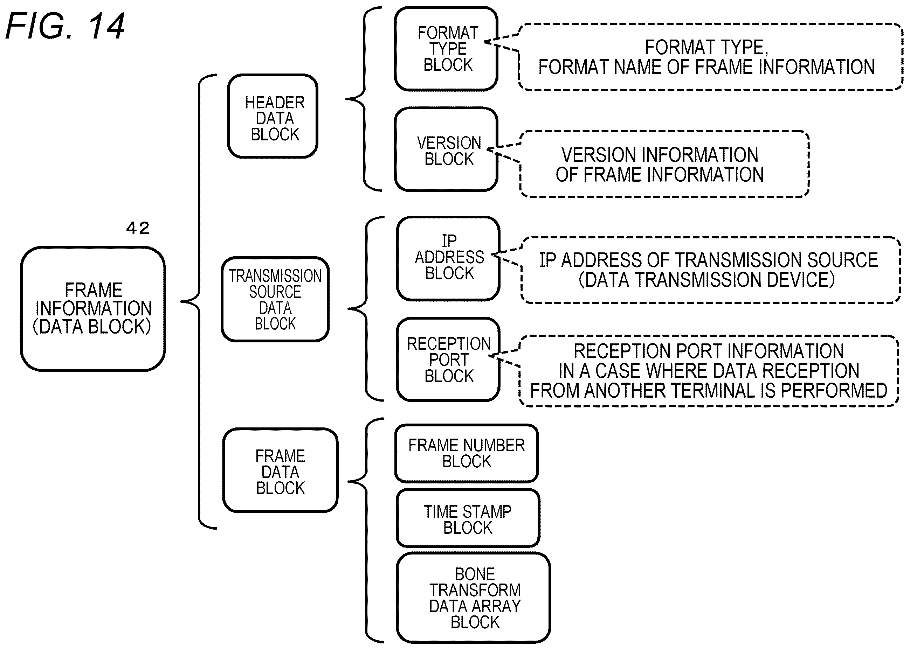

Details of storage data of each data block constituting the frame information 42 will be described with reference to Fig. 14 and subsequent drawings.

First, with reference to Fig. 14, storage data of data blocks of the second hierarchy stored in three first hierarchy data blocks constituting the frame information 42, that is, stored in these three data blocks
(1) Header data block;
(2) Transmission source data block; and
(3) Frame data block
will be described.

"(1) Header data block" and "(2) Transmission source data block" are data blocks similar to the skeleton information 41 described above with reference to Fig. 9 and subsequent drawings. That is,

"Format type block" which is a storage data block of the second hierarchy of "(1) Header data block" is a data block storing a format type and a format name which are information regarding a data format of the frame information 42.

Furthermore, "Version block" is a data block storing version information of the frame information 42.

"IP address block" which is a storage data block of the second hierarchy of "(2) Transmission source data block" is a data block storing the IP address of the transmission source of the frame information 42, that is, the data transmission device 30.

Furthermore, "Reception port block" is a data block that stores a reception port identifier used in a case where the data transmission device 30 receives another frame information 42 from another device.

Note that the data reception device (PC or the like) 50 can confirm a transmission source of the received frame information by referring to the IP address stored in the "IP address block" included in the frame information 42 received from the data transmission device 30.

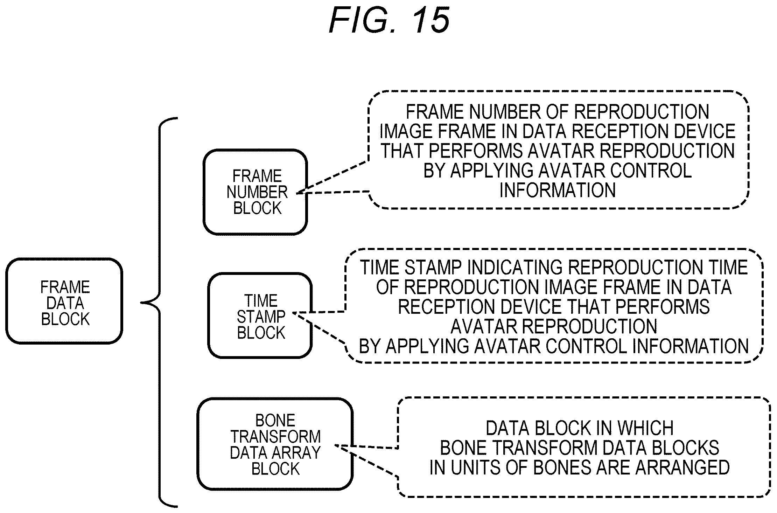

Next, with reference to Fig. 15 and subsequent drawings, a description will be given of
Frame number block
Time stamp block
Bone transform data array block
these data blocks which are storage data blocks in the second hierarchy of "(3) Frame data block".

As illustrated in Fig. 15,
the "Frame number block" is a data block that stores a frame number of a reproduction image frame in the data reception device 50 that performs avatar reproduction by applying frame information.

The "Time stamp block" is a data block storing a time stamp indicating a reproduction time of a reproduction image frame in the data reception device 50 that performs avatar reproduction by applying frame information.

The "Bone transform data array block" is a data block in which "Bone transform data blocks" in units of bones are arranged and stored.

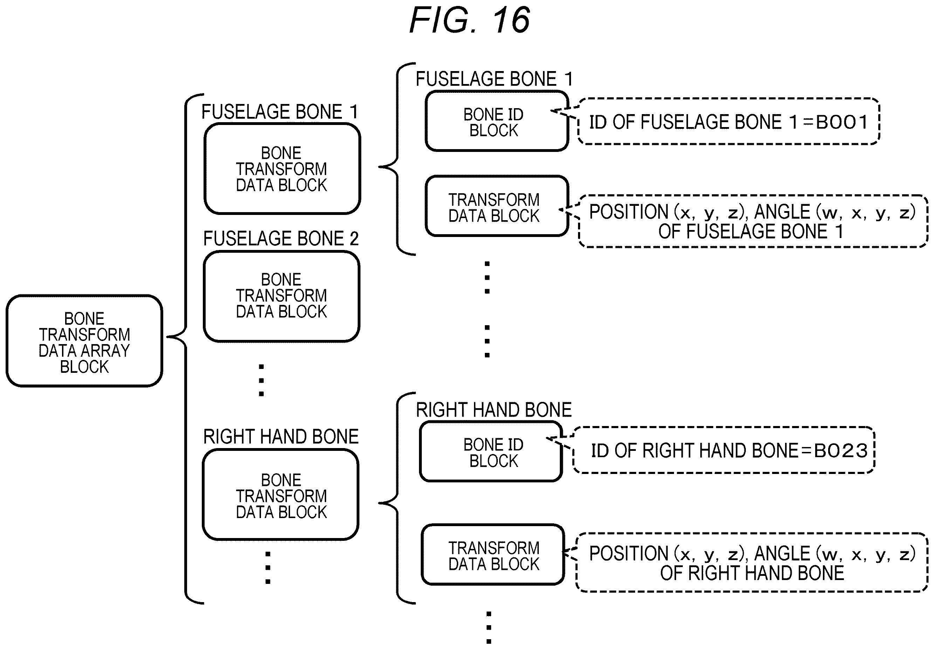

The configuration of the "Bone transform data block" in units of bones stored in the "Bone transform data array block" will be described with reference to Fig. 16.

As illustrated in Fig. 16, the "Bone transform data array block" stores the "Bone transform data block" corresponding to each of the bones that constitute the skeleton of the avatar 51 that reflects the motion of the user 10.

As illustrated in Fig. 16,
Bone transform data block corresponding to fuselage bone 1
Bone transform data block corresponding to fuselage bone 2
...
Bone transform data block corresponding to right hand bone, etc.

As described above, the "Bone transform data block" is a data block set corresponding to each bone constituting the skeleton of the avatar 51 that reflects the motion of the user 10.

As illustrated in Fig. 16, each of the "Bone transform data blocks" includes, as storage data blocks,
Bone ID block
Transform data block
these data blocks.

The "Bone ID block" is a data block storing IDs (identifiers) corresponding to the respective bones constituting the skeleton corresponding to the avatar.

As illustrated in Fig. 16, for example, bone ID of the fuselage bone 1 = B001, bone ID of the right hand bone = B023, and the like.

Moreover, in the "Transform data block" which is one of the storage data blocks of the "Bone transform data block" illustrated in Fig. 16, the position (x, y, z) and angle (w, x, y, z) of each bone are recorded.

Note that the position (x, y, z) and angle (w, x, y, z) information of each bone recorded in the "Transform data block" of the skeleton information 41 described above is the position (x, y, z) and angle (w, x, y, z) information of the bone corresponding to a predefined avatar reference posture, for example, a reference posture in which both hands and both feet are spread as illustrated in Fig. 12.

On the other hand, in the "Transform data block" corresponding to a bone in the frame information 42, the position (x, y, z) and angle (w, x, y, z) information of each bone corresponding to the motion of the user 10 is recorded.

That is, the position (x, y, z) and angle (w, x, y, z) information of each bone corresponding to the motion of the user analyzed on the basis of the detection value of the motion sensor 20 worn by the user 10 is recorded.

In this manner, each of the bone transform data blocks is a data block that individually stores data indicating the motion in units of parts of the body of the user.

That is, the frame information 42 includes a large number of data blocks individually storing data indicating the motion in units of parts of the body of the user.

As described above, the frame information 42 is, for example, information generated every (1/50) sec, and the position (x, y, z) and angle (w, x, y, z) information of each bone is recorded on the basis of the motion of the user in each frame, that is, the motion of the user every (1/50) sec.

The data reception device (PC or the like) 50 controls the motion of the avatar 51 displayed on the display unit of the data reception device (PC or the like) 50 with reference to the position (x, y, z) and angle (w, x, y, z) of each bone recorded in the "Transform data block" in units of bones stored in the frame information 42.

Note that the data transmission device (smart phone or the like) 30 executes processing of analyzing the motion of the user in each frame, that is, the motion of the user for each (1/50) sec on the basis of the detection value of the motion sensor 20 worn by the user 10 and generating the "Transform data block" in units of bones storing position (x, y, z) and angle (w, x, y, z) information of each bone corresponding to the analyzed motion of the user.

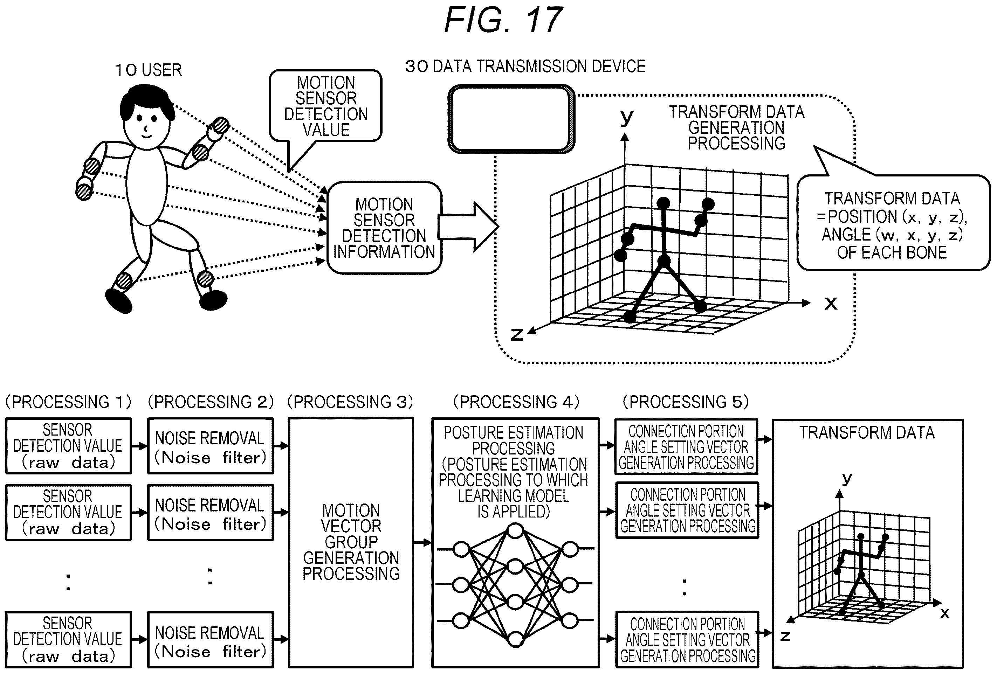

An example of a detailed sequence of the transform data generation processing in units of bones stored in the "Transform data block" in units of bones executed in the data transmission device (smartphone or the like) 30 will be described with reference to Fig. 17.

The drawing illustrated on the lower side of Fig. 17 is a diagram explaining a detailed sequence example of transform data generation processing based on a sensor detection value executed by the data transmission device (smartphone or the like) 30.

Note that the transform data is configuration data of the frame information 42 and corresponds to data indicating instantaneous motion of the user. For example, the transform data constituting one piece of frame information 42 corresponds to data indicating one user motion at (1/50) sec intervals.

As described above, the data transmission device 30 transmits the transform data to the data reception device 50 at (1/50) sec intervals, for example. The data reception device 50 sequentially analyzes the transform data received at (1/50) sec intervals and applies the transform data to the avatar displayed on the display unit at (1/50) sec intervals.

With this processing, the avatar displayed on the display unit of the data reception device 50 can perform the similar motion to the user 10.

The lower part of Fig. 17 illustrates an example of a detailed sequence of the transform data generation processing based on the sensor detection value executed by the data transmission device 30.

As illustrated in the drawing, the data transmission device 30 sequentially executes each processing below in the transform data generation processing based on the sensor detection value.
(Processing 1) Sensor detection value input processing
(Processing 2) Noise removal processing
(Processing 3) Motion vector group generation processing
(Processing 4) Motion estimation processing (motion estimation processing to which learning model is applied)
(Processing 5) Connection portion angle setting vector generation processing

The respective processing (Processing 1) to (Processing 5) is sequentially executed to generate "transform data" indicating three-dimensional motion of the user at a certain moment.

"(Processing 1) Sensor detection value input processing" is processing of inputting the detection values of the sensors attached to the respective parts (the head, right arm, left arm, waist, right foot, left foot, and the like) of the body of the user.

Note that, as described above, transmission processing of the sensor detection values from the sensors to the data transmission device (for example, smartphone) 30 is executed using proximity communication such as Bluetooth (registered trademark) communication, for example.

"(Processing 2) Noise removal processing" is processing of removing a noise component from the sensor detection values input to the data transmission device 30. For example, the noise component is removed by applying a prescribed noise removal algorithm such as processing of removing a high frequency component of a prescribed frequency or higher.

"(Processing 3) Motion vector group generation processing" is processing of generating a motion vector indicating an individual motion of each part of the body of the user to which the sensor is attached on the basis of the sensor detection values from which noise has been removed.

As described above, for example, an inertial measurement unit (IMU) is used as the sensor.

The IMU is a motion sensor capable of simultaneously measuring the accelerations in xyz three-axis directions, angular velocities around xyz three axes, and the like, and the data transmission device (for example, smartphone) 30 can acquire IMU output values of the six points of the head, the right arm, the left arm, the waist, the right foot, and the left foot of the user.

The data transmission device 30 generates a plurality of motion vectors corresponding to the respective parts reflecting motion directions and motion speeds of the respective parts on the basis of the sensor output values of the respective parts (the head, right arm, left arm, waist, right foot, and left foot) of the body of the user.

"(Processing 4) Motion estimation processing (motion estimation processing to which learning model is applied)" is processing of estimating the three-dimensional motion of the user on the basis of the motion vectors corresponding to the respective parts of the body of the user generated in (Processing 3).

The three-dimensional motion estimation processing of the user based on the motion vectors is executed using, for example, a learning model generated in advance.

The learning model is a learning model that receives the motion vector corresponding to each part of the body of the user and outputs the user motion.

This learning model is a learning model generated in advance using a large number of sample data, for example, correspondence data between a large number of different motion vector groups and the user motions.

"(Processing 5) Connection portion angle setting vector generation processing" is interpolation processing of the user motion estimated using the learning model in (Processing 4), and is processing of generating the motion information of the entire body of the user by interpolating the motion and position of a body part that are insufficient in the transform data estimated using the learning model.

By executing these (Processing 1) to (Processing 5), bone corresponding "transform data" corresponding to the three-dimensional motion of the user 10 is generated.

As described with reference to Fig. 17, the transform data generation processing based on the sensor detection value includes processing of generating a motion vector based on each sensor detection value, processing of inputting the generated motion vector to the learning model to estimate the user motion, and the like.

### [5. Transmission processing of avatar control information configured by skeleton information and frame information]

Next, transmission processing of the avatar control information configured by the skeleton information and the frame information will be described.

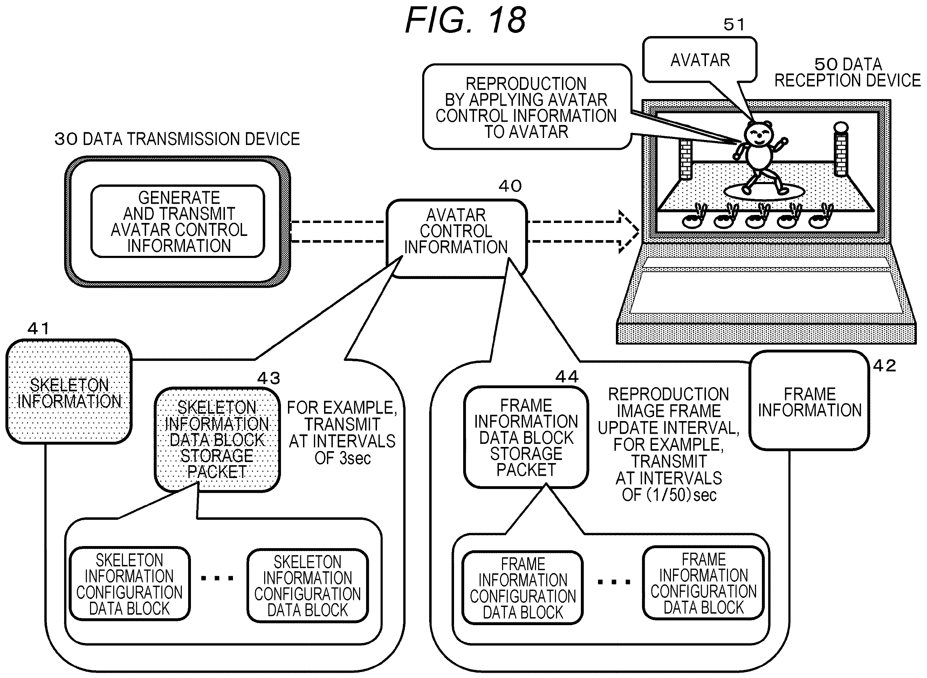

Fig. 18 is a diagram illustrating an example of transmission processing of the avatar control information 40 from the data transmission device (smartphone or the like) 30 to the data reception device (PC or the like) 50.

The avatar control information 40 includes the skeleton information 41 and the frame information 42.

As described above, both the skeleton information 41 and the frame information 42 are one data block, and at the same time, a plurality of data blocks is stored therein.

The data transmission device (smartphone or the like) 30 stores the data block corresponding to the skeleton information 41 or the frame information 42 in, for example, a UDP packet and transmits the data block to the data reception device (PC or the like) 50. The UDP packet is a communication packet generated according to a user datagram protocol (UDP).

Note that the transmission packet is not limited to the UDP packet, and a packet according to another protocol (for example, WebSocket, TCP, WebRTC, and the like) may be used.

As illustrated in the lower part of Fig. 18, the data transmission device (smartphone or the like) 30 generates a skeleton information data block storage packet 43 storing the skeleton information 41 and a frame information data block storage packet 44 storing the frame information 42, and transmits the generated packets to the data reception device (PC or the like) 50.

As illustrated in the lower left of Fig. 18, the skeleton information data block storage packet 43 includes various data blocks constituting the skeleton information 41, that is, various skeleton information configuration data blocks described with reference to Fig. 9.

Similarly, as illustrated in the lower right of Fig. 18, the frame information data block storage packet 44 includes various data blocks constituting the frame information 42, that is, various frame information configuration data blocks described with reference to Fig. 13.

Note that the data transmission device (smartphone or the like) 30 transmits the skeleton information data block storage packet 43 storing the skeleton information 41 to the data reception device (PC or the like) 50 every 3 seconds, for example.

Furthermore, the frame information data block storage packet 44 storing the frame information 42 is transmitted to the data reception device (PC or the like) 50 every (1/50) seconds, for example.

Note that, as described above, if there is no change in the avatar 51 reflecting the motion of the user 10, the skeleton information 41 is only required to be transmitted only once in principle. However, in consideration of the occurrence of a reception error in the data reception device (PC or the like) 50, the avatar change processing, and the like, the skeleton information is transmitted at regular intervals (for example, at intervals of 3 seconds).

In a case of changing the avatar, the data transmission device (smartphone or the like) 30 transmits the skeleton information of the new avatar to the data reception device (PC or the like) 50 in accordance with the avatar change processing generation timing.

In a case where the skeleton information of the new avatar is received from the data transmission device (smartphone or the like) 30, the data reception device (PC or the like) 50 displays the new avatar on the display unit, and then causes the new avatar to execute an action (motion) corresponding to the received frame information.

For the frame information 42, the data transmission device (smartphone or the like) 30 sequentially generates a frame information data block reflecting the motion of the user, for example, every (1/50) seconds, generates a new frame information data block storage packet 44 every (1/50) seconds, and transmits the packet to the data reception device (PC or the like) 50.

As described above, the data reception device 50 sequentially analyzes the transform data received at (1/50) sec intervals and applies the analyzed transform data to the avatar displayed on the display unit at (1/50) sec intervals.

With this processing, the avatar displayed on the display unit of the data reception device 50 can perform the similar motion to the user 10.

### [6. Generation, transmission, and application processing of frame information to which avatar dress change instruction data block is added]

Next, generation, transmission, and application processing of the frame information to which an avatar dress change instruction data block is added will be described.

As understood from the above description, the data transmission device (smartphone or the like) 30 generates the skeleton information 41 and the frame information 42 to be transmitted to the data reception device (PC or the like) 50 using a data block having a predetermined data format.

That is, as described above with reference to Fig. 6, the skeleton information 41 and the frame information 42 are generated by using the plurality of data blocks configured by the three data areas of
(a) Data size storage area
(b) Data type storage area
(c) Actual data storage area.

Various data can be stored in the data area of the data block, and the data reception device (PC or the like) 50 can determine the type of data stored in the "(c) Data" area, that is, what data the storage data is, for each data block received from the data transmission device (smartphone or the like) 30, with reference to the above-described "(b) Data type", and execute processing using the data stored in the "(c) Data" area according to a determination result.

Hereinafter, generation, transmission, and application processing of the frame information to which an avatar dress change instruction data block is added will be described.

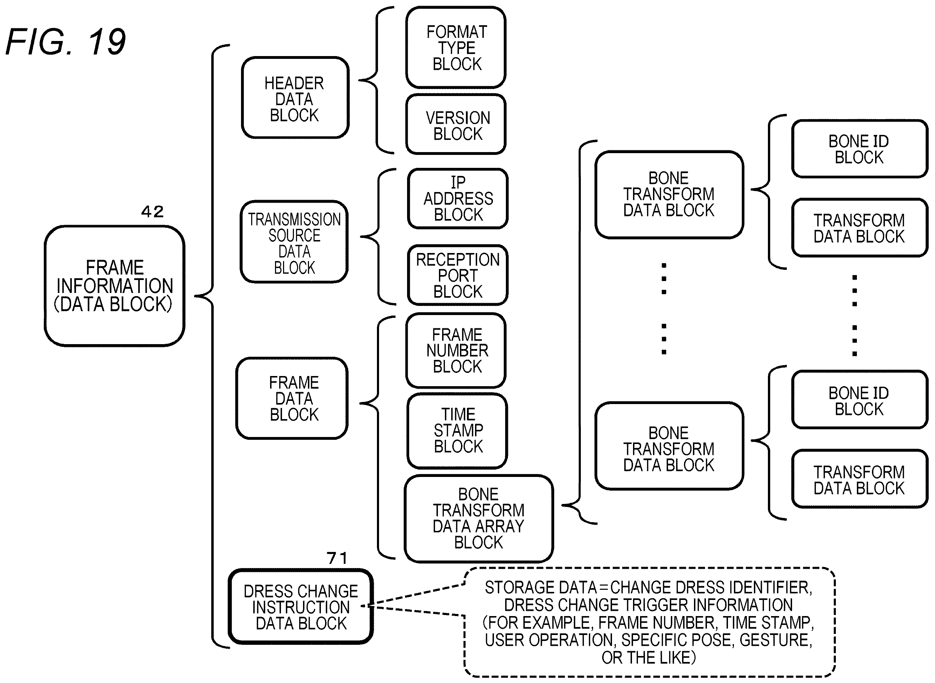

Fig. 19 illustrates a data block configuration example of the frame information (data block) 42 generated by the data transmission device (smartphone or the like) 30.

The data block configuration of the frame information 42 illustrated in Fig. 19 is a data block configuration in which

"Dress change instruction data block 71"
is added to the data block configuration of the frame information 42 described above with reference to Fig. 13.

The "Dress change instruction data block 71" is a data block for instructing to change the dress of the avatar 51 during execution of the motion control that reflects the motion of the user 10 in the data reception device (PC or the like) 50.

As illustrated in Fig. 19, in the "Dress change instruction data block 71", data such as a change dress identifier and dress change trigger information (for example, a frame number, a time stamp, a user operation, a specific pose, a gesture, or the like) is stored as storage data.

The data transmission device (smartphone or the like) 30 generates the "Dress change instruction data block 71" storing these pieces of data, adds the "dress change instruction data block" as a configuration block of the frame information 42, and transmits the "Dress change instruction data block" to the data reception device (PC or the like) 50.

When detecting the "Dress change instruction data block 71" from the frame information 42 received from the data transmission device (smartphone or the like) 30, the data reception device (PC or the like) 50 analyzes the storage data of the "Dress change instruction data block 71", and performs processing of changing the dress of the avatar 51 being displayed on the display unit of the data reception device (PC or the like) 50 according to the analysis result.

Note that the position of the "Dress change instruction data block 71" in the frame information 42 illustrated in Fig. 19 is an example, and the "Dress change instruction data block 71" may be set to a position other than the position illustrated in the drawing, for example, a storage block of a frame data block.

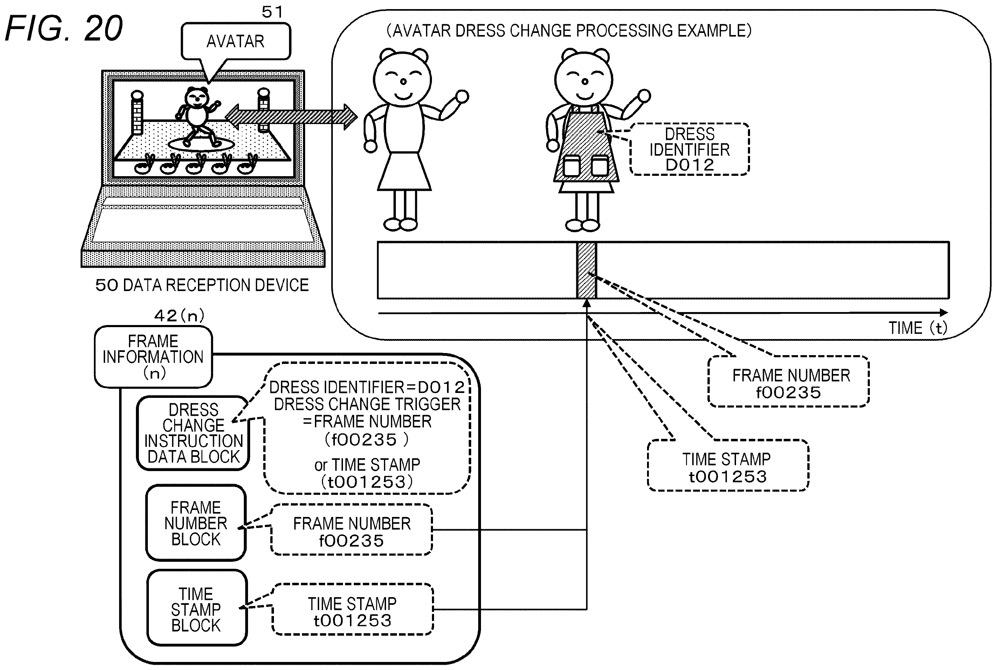

Next, a specific example of processing executed in the data reception device (PC or the like) 50 will be described with reference to Fig. 20.

The example illustrated in Fig. 20 is an example in which the data reception device (PC or the like) 50 receives the frame information 42(n) from the data transmission device (smartphone or the like) 30, and executes processing of changing the dress of the avatar 51 being displayed on the display unit of the data reception device (PC or the like) 50 on the basis of the storage data of the "Dress change instruction data block 71" included in the received frame information 42(n).

Note that, in this example, processing examples in a case where
dress identifier = D012
dress change trigger = frame number (f00235) or time stamp (t001253)
these pieces of data are stored as storage data of the "Dress change instruction data block 71" are illustrated.

The "dress identifier = D012" is an identifier for designating a changed dress.

Note that, in the storage unit of the data reception device (PC or the like) 50, correspondence data between dress image data applicable to the avatar 51 and an identifier thereof is stored in advance, and dress image data corresponding to the identifier can be acquired on the basis of the dress identifier.

"Dress change trigger = frame number (f00235) or time stamp (t001253)" is dress change trigger information indicating a dress change timing, and is information instructing to perform the dress change processing at the timing of frame number = (f00235) or time stamp = (t001253).

In accordance with these instructions, the data reception device (PC or the like) 50 changes the dress of the avatar 51 being displayed at the timing when the image with the designated frame number or the reproduction time corresponding to the designated time stamp has come.

Note that the frame number information and the time stamp information are information that can be acquired from a data block (frame number block, time stamp block) in the frame information 42, and the data reception device (PC or the like) 50 can obtain the frame number information and the time stamp information with reference to the frame number block and the time stamp block in the frame information 42.

As illustrated in the upper right of Fig. 20 (an avatar dress change processing example), the data reception device (PC, etc.) 50 executes processing of changing the dress of the avatar 51 being displayed on the display unit of the data reception device (PC, etc.) 50 to the dress of the designated dress identifier = D012 at the generation timing of the dress change trigger, that is, at the timing of the frame number = (f00235) or the time stamp = (t001253).

Note that, in a case where there is no designation information of the dress identifier in the data stored in the "Dress change instruction data block 71", the data reception device (PC or the like) 50 may be configured to sequentially change the dress according to a predefined dress change sequence. Furthermore, processing of changing to a randomly selected dress may be performed.

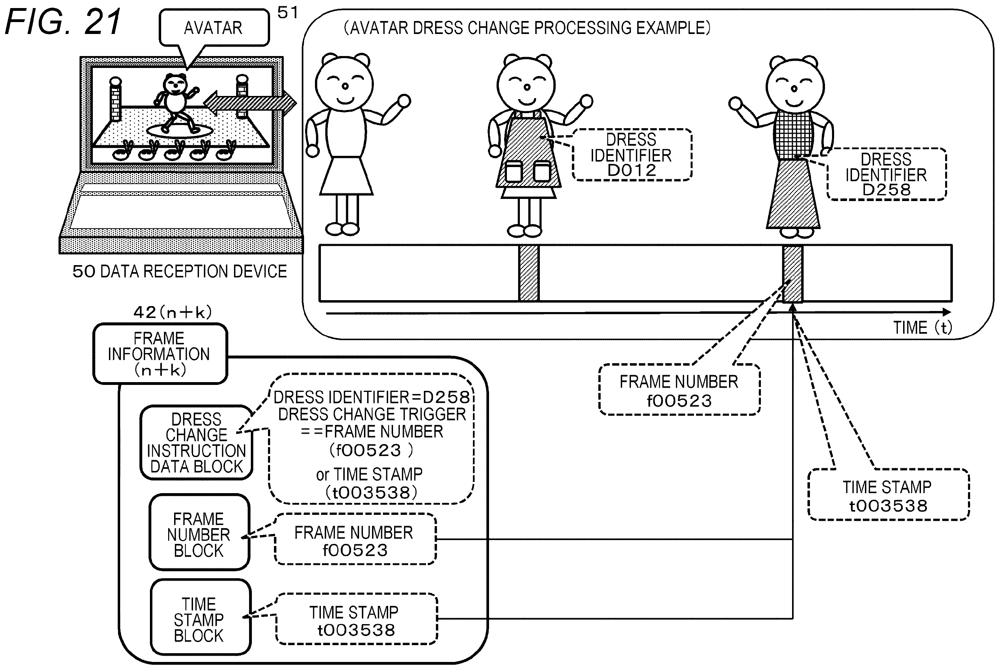

Fig. 21 illustrates a processing example when the frame information 42(n+k) after a certain period of time has elapsed from the transmission and reception of the frame information 42(n) illustrated in Fig. 20 is transmitted and received.

Fig. 21 is a diagram explaining processing in which the data reception device (PC, etc.) 50 receives the frame information 42(n+k) from the data transmission device (smartphone, etc.) 30, and changes the dress of the avatar 51 being displayed on the display unit of the data reception device (PC, etc.) 50 on the basis of the storage data of the "Dress change instruction data block 71" included in the received frame information 42(n+k).

The example illustrated in Fig. 21 illustrates a processing example in a case where
dress identifier = D258
dress change trigger = frame number (f00523) or time stamp (t003538)
these pieces of data are stored as the storage data of the "Dress change instruction data block 71".

As illustrated in the upper right part of Fig. 21 (an avatar dress change processing example), the data reception device (PC or the like) 50 executes processing of changing the dress of the avatar 51 being displayed on the display unit of the data reception device (PC or the like) 50 to the dress with the designated dress identifier = D258 at the generation timing of the dress change trigger, that is, at the timing of the frame number = (f00523) or the time stamp = (t003538).

Note that the dress change processing examples described with reference to Figs. 20 and 21 are examples of a case where the dress change trigger information stored in the "Dress change instruction data block 71" is a frame number or a time stamp.

The dress change trigger information stored in the "Dress change instruction data block 71" is not limited to these pieces of information, and for example, a specific user operation, a specific avatar pose, a gesture, or the like can be set as the trigger information.

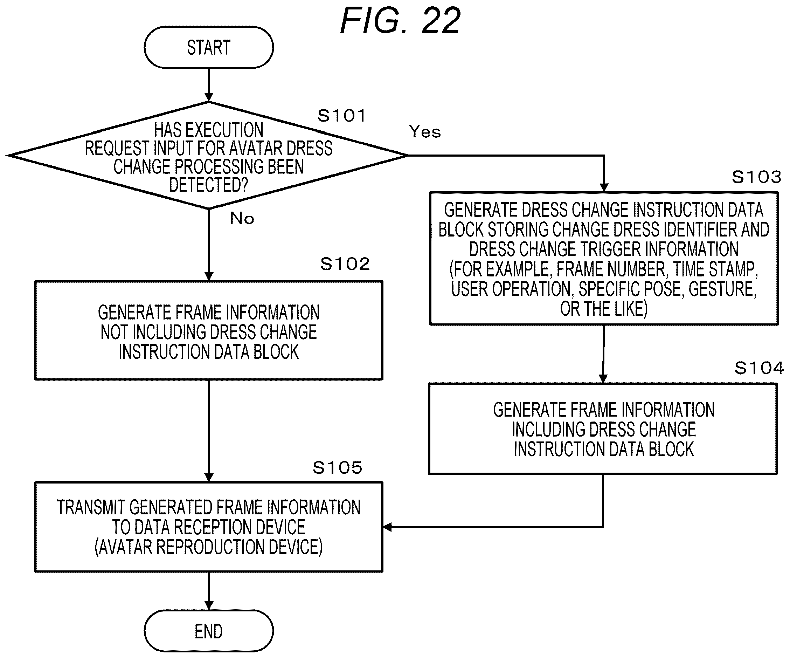

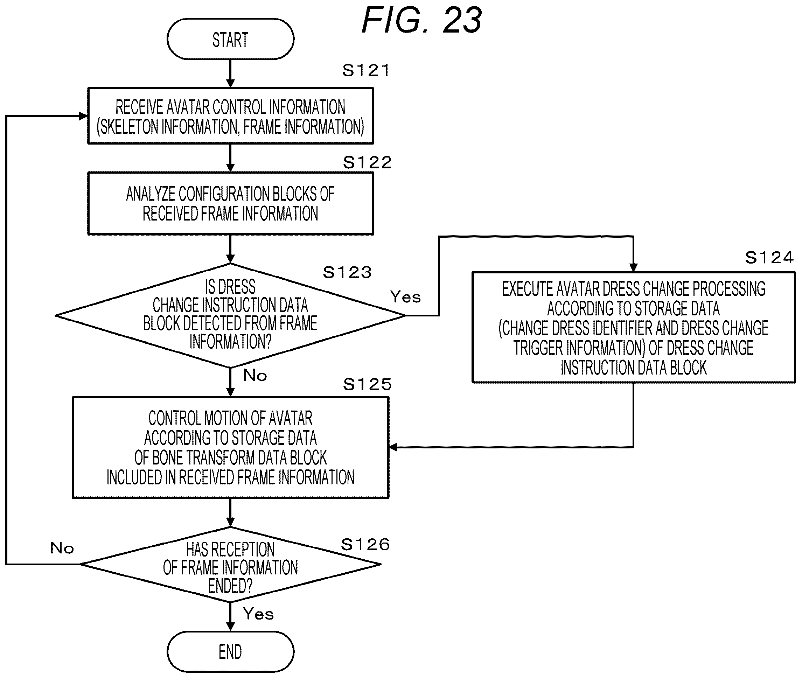

Next, a sequence of processing executed by the data transmission device 30 and processing executed by the data reception device 50 in a case where the avatar dress change processing is performed will be described with reference to flowcharts illustrated in Figs. 22 and 23.

Note that the processing according to the flowchart described below can be executed in accordance with a program stored in a storage unit of the data transmission device 30 or the data reception device 50, and is executed under the control of a control unit having a program execution function such as a CPU or the like, for example.

First, a sequence of processing executed by the data transmission device 30 in a case where the avatar dress change processing is executed or is not executed will be described with reference to a flowchart illustrated in Fig. 22.

Hereinafter, details of processing of each step of the flowchart illustrated in Fig. 22 will be sequentially described.

### (Step S101)

First, the data transmission device 30 such as a smartphone determines whether or not input of an execution request for the avatar dress change processing has been detected in step S101.

The execution request of the avatar dress change processing is made by, for example, an input operation on the data transmission device 30 such as a smartphone by the user.

In a case where the input of the execution request for the avatar dress change processing has not been detected, the process proceeds to step S102, and in a case where the input of the execution request for the avatar dress change processing has been detected, the process proceeds to step S103.

### (Step S102)

In a case where the input of the request for executing the avatar dress change processing has not been detected in step S101, the data transmission device 30 generates, in step S102, the frame information not including the dress change instruction data block, that is, the normal frame information 42 having the data block configuration described above with reference to Fig. 13.

### (Step S103)

On the other hand, in a case where the input of the request for executing the avatar dress change processing is detected in step S101, the data transmission device 30 generates a dress change instruction data block in step S103.

As described above with reference to Fig. 19, the data transmission device 30 generates the dress change instruction data block storing the data such as the change dress identifier and the dress change trigger information (for example, a frame number, a time stamp, a user operation, a specific pose, a gesture, or the like) as the storage data.

### (Step S104)

Moreover, in step S104, the data transmission device 30 generates frame information including the dress change instruction data block generated in step S103, that is, the frame information 42 including the dress change instruction data block described above with reference to Fig. 19.

### (Step S105)

When the generation processing of the frame information of either the frame information not including the dress change instruction data block in step S102 or the frame information including the dress change instruction data block in step S104 is completed, the data transmission device 30 transmits the frame information generated in step S105 to data reception device 50.

Next, a sequence of processing executed by the data reception device 50 in a case where the avatar dress change processing is executed or is not executed will be described with reference to the flow illustrated in Fig. 23.

Hereinafter, details of processing of each step of the flowchart illustrated in Fig. 23 will be sequentially described.

### (Step S121)

First, in step S121, the data reception device 50 such as a PC receives the avatar control information including the skeleton information and the frame information from the data transmission device 30.

### (Step S122)

Next, in step S122, the data reception device 50 analyzes the data block constituting the frame information received from the data transmission device 30.

### (Step S123)

Next, in step S123, the data reception device 50 determines whether or not the dress change instruction data block has been detected from the frame information received from data transmission device 30.

In a case where the dress change instruction data block has been detected from the received frame information, the process proceeds to step S124, and in a case where the dress change instruction data block has not been detected, the process proceeds to step S125.

### (Step S124)

In a case where the dress change instruction data block has been detected from the received frame information in step S123, the process proceeds to step S124, and the data reception device 50 executes the avatar dress change processing according to the storage data of the dress change instruction data block received from the data transmission device 30 in step S124.

Specifically, as described above with reference to Figs. 20 and 21, according to the storage data of the dress change instruction data block, the change processing to the dress specified according to the generation of the dress change trigger specified is executed. Note that, in a case where there is no specified dress, dress change processing according to a predetermined dress change sequence or a random dress change is executed.

### (Step S125)

The processing of step S125 is processing executed regardless of whether or not the dress change processing is executed, and is a step of executing the action control of the avatar displayed on the display unit of the data reception device 50 in accordance with the frame information received from the data transmission device 30.

Specifically, the motion of the avatar displayed on the display unit of the data reception device 50 is controlled according to the storage data of the bone transform data block included in the frame information received from the data transmission device 30.

### (Step S126)

Moreover, in step S126, the data reception device 50 determines whether or not the processing of receiving the frame information from the data transmission device 30 is ended, and in a case where the processing is not ended, the processing returns to step S121, and the processing in step S121 and subsequent steps is repeated for the frame information to be received next.

In a case where it is determined in step S126 that the reception processing of the frame information from the data transmission device 30 has ended, the processing ends.

As described above, the data transmission device 30 that transmits the avatar control information including the skeleton information and the frame information can generate the frame information including the dress change instruction data block for executing the dress change processing of the avatar and transmit the frame information to the data reception device 50.

In the case of receiving the frame information including the dress change instruction data block from the data transmission device 30, the data reception device 50 can execute the process of changing to the instructed dress at the instructed trigger generation timing on the basis of the data stored in the dress change instruction data block, for example, the dress change identifier, the dress change trigger information, and the like.

### [7. Processing example in a case where a plurality of data transmission devices each transmits avatar control information]

Next, a processing example in a case where each of a plurality of data transmission devices transmits the avatar control information will be described.

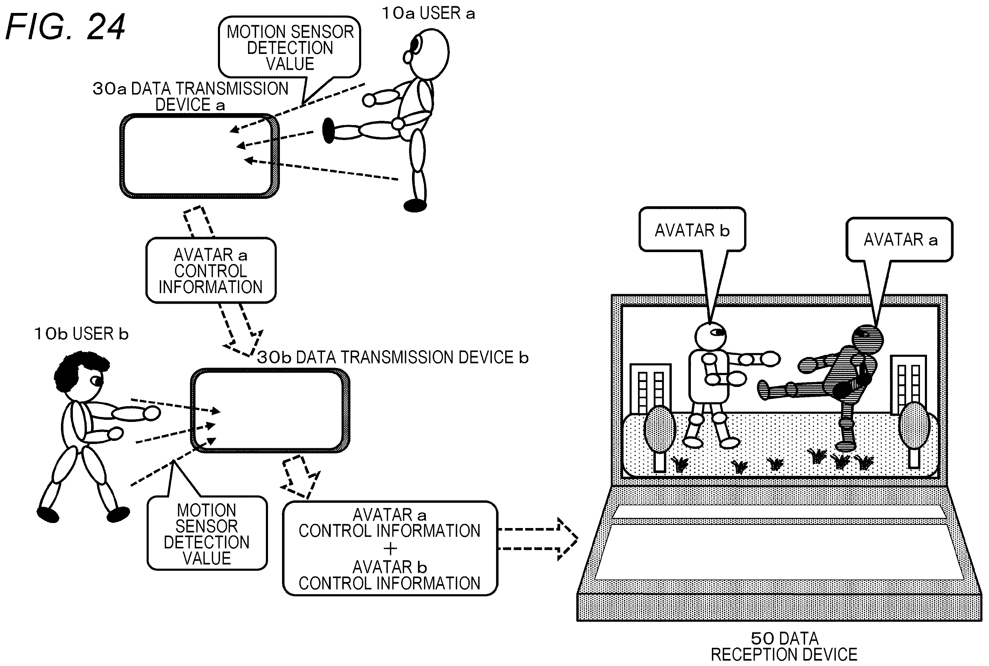

An example of processing in which each of a plurality of data transmission devices transmits the avatar control information will be described with reference to Fig. 24.

Fig. 24 illustrates two data transmission devices, that is, a data transmission device a, 30a, a data transmission device b, 30b, and one data reception device 50.

The data transmission device a, 30a inputs a sensor detection value from a motion sensor worn by a user a, 10a, generates avatar control information (avatar a control information) reflecting the motion of the user a, and transmits the avatar control information to the data transmission device b, 30b.

The avatar a control information includes the skeleton information of the avatar a included in the image being reproduced by the data reception device 50 and the frame information indicating the user motion generated on the basis of the detection value of the motion sensor worn by the user a.

The skeleton information includes the plurality of data blocks described above with reference to Fig. 9. The frame information also includes the plurality of data blocks described above with reference to Fig. 13.

The data transmission device b, 30b input a sensor detection value from a motion sensor worn by a user b, 10b, and generate avatar control information (avatar b control information) reflecting the motion of the user b.

The avatar b control information includes the skeleton information of the avatar b included in the image being reproduced by the data reception device 50 and the frame information indicating the user motion generated on the basis of the detection value of the motion sensor worn by the user b.

The data transmission device b, 30b transmits the avatar a control information received from the data transmission device a, 30a and the avatar b control information generated by the data transmission device b, 30b, that is, these two kinds of avatar control information to the data reception device 50.

The data reception device 50 uses the two kinds of avatar control information received from the data transmission device b, 30b to control the actions of the avatar a and the avatar b.

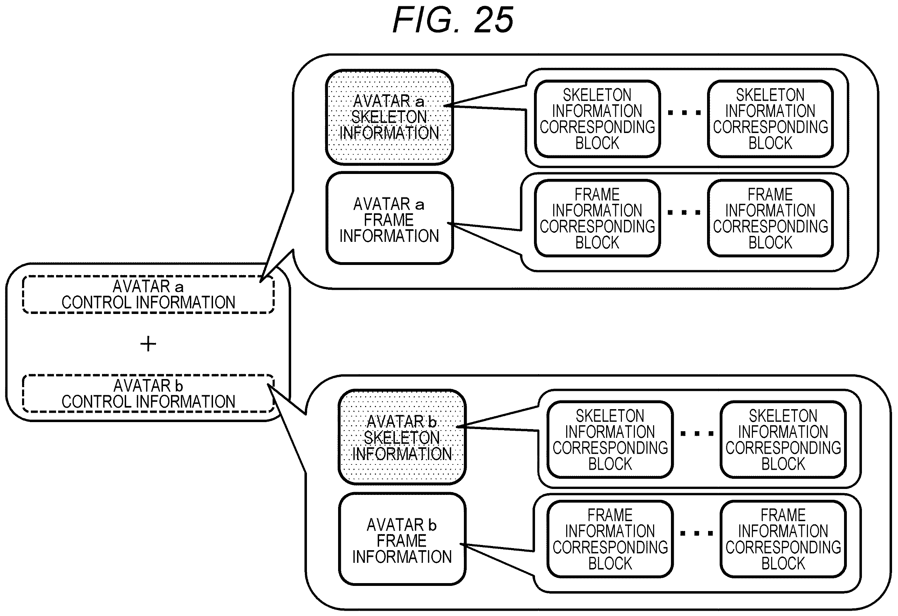

A configuration of the two pieces of avatar control information transmitted from the data transmission device b, 30b to the data reception device 50 will be described with reference to Fig. 25.

As illustrated in Fig. 25, the two pieces of avatar control information transmitted from the data transmission device b, 30b to the data reception device 50 are
avatar a control information
avatar b control information,
these two pieces of avatar control information.

The avatar a control information includes pieces of information of
avatar a skeleton information; and
user a corresponding frame information generated on the basis of the sensor detection value of the user a.

The avatar a skeleton information includes the plurality of data blocks described above with reference to Fig. 9. The user a corresponding frame information includes the plurality of data blocks described above with reference to Fig. 13.

On the other hand, the avatar b control information includes pieces of information of
avatar b skeleton information, and
user b corresponding frame information generated on the basis of the sensor detection value of the user b.

The avatar b skeleton information includes the plurality of data blocks described above with reference to Fig. 9. The user b corresponding frame information includes the plurality of data blocks described above with reference to Fig. 13.

The data reception device 50 needs to distinguish the two pieces of avatar control information received from the data transmission device b, 30b, that is, the avatar a control information and the avatar b control information, and perform processing of applying the avatar a control information to the avatar a and applying the avatar b control information to the avatar b.

As described above, a transmission source data block included in the skeleton information and the frame information constituting the two pieces of avatar control information is used as the information for reliably distinguishing the two pieces of avatar control information and performing the processing.

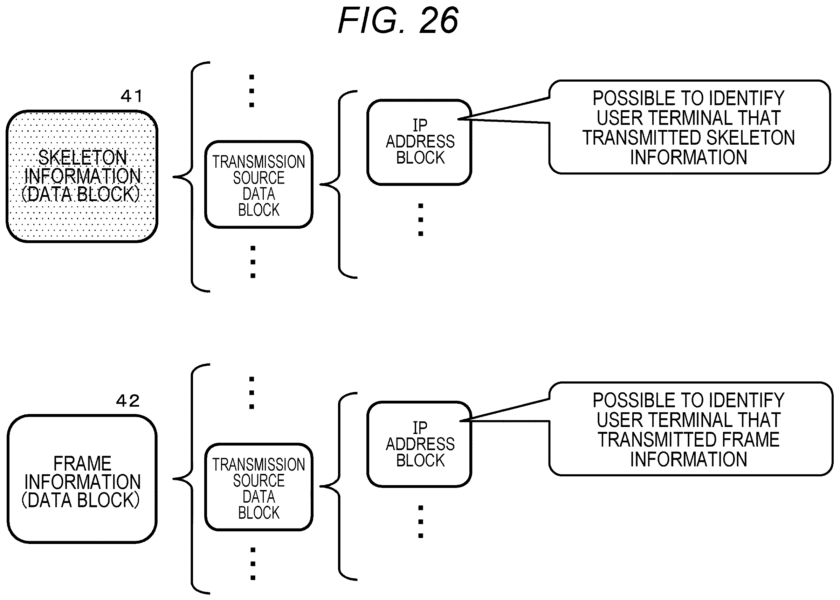

With reference to Fig. 26, the transmission source data block used to distinguish between the two pieces of avatar a control information and avatar b control information will be described.

As illustrated in Fig. 26, each of the skeleton information and the frame information constituting the two pieces of avatar control information includes a transmission source data block.

Each source data block stores an IP address block as a storage block, and this IP address block stores an IP address of the source.

Specifically, the IP address of the data transmission device a, 30a as the transmission source is stored in the IP address block in the transmission source data block included in the skeleton information (data block) and the frame information (data block) constituting the avatar a control information.

Furthermore, the IP address of the data transmission device b, 30b as the transmission source is stored in the IP address block in the transmission source data block included in the skeleton information (data block) and the frame information (data block) constituting the avatar b control information.

The data reception device 50 classifies, that is, distinguishes two pieces of avatar control information, that is, avatar a control information and avatar b control information, with reference to the IP addresses stored in the IP address blocks.

By the processing of classifying the avatar control information by the IP addresses, processing of applying the avatar a control information to the avatar a and applying the avatar b control information to the avatar b can be performed.

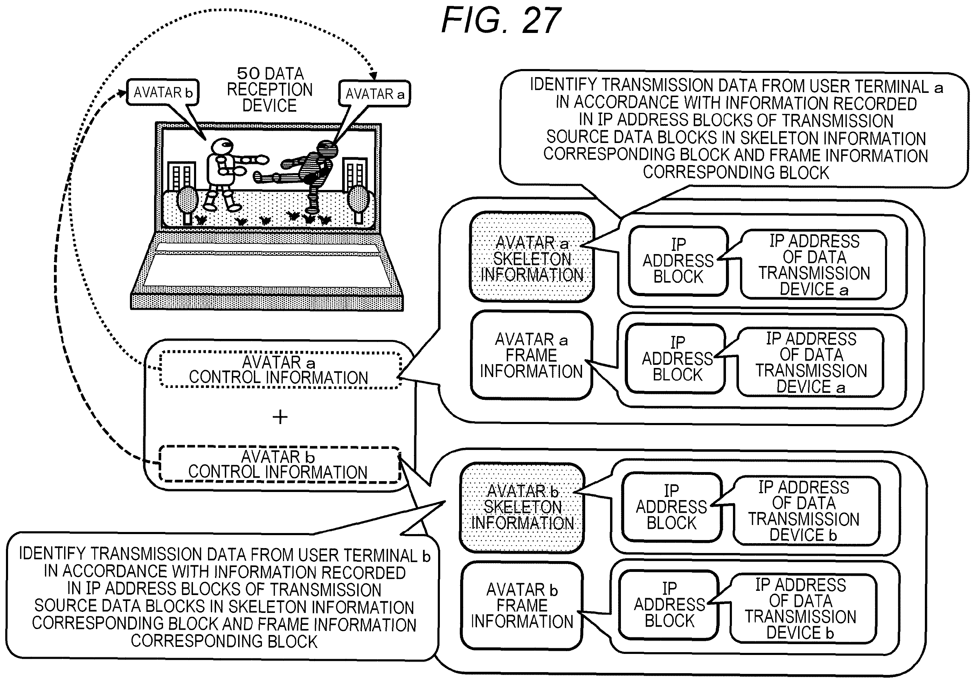

That is, as illustrated in Fig. 27, the data reception device 50 determines that the skeleton information (data block) and the frame information (data block) are data blocks storing information corresponding to the avatar a according to the skeleton information (data block) of the avatar a control information and the IP address of the data transmission device a stored in the IP address block in the frame information (data block), and applies the skeleton information and the frame information to the avatar a being displayed on the data reception device 50.

Similarly, according to the skeleton information (data block) of the avatar b control information and the IP address of the data transmission device b stored in the IP address block in the frame information (data block), the data reception device 50 determines that the skeleton information (data block) and the frame information (data block) are data blocks storing the information corresponding to the avatar b, and applies the skeleton information and the frame information to the avatar b being displayed on the data reception device 50.

As described above, the data reception device 50 can classify the reception information into the information (skeleton information and frame information) in units of transmission devices in units of the skeleton information data blocks or the frame information data blocks by referring to the skeleton information (data block) and the IP address stored in the IP address block in the frame information (data block). As a result, the data reception device 50 can correctly apply the motion of the corresponding user to the avatar corresponding to each transmitting device, that is, each of the plurality of avatars corresponding to each user.

Note that the processing example described with reference to Fig. 24 is a processing example in which the avatar a control information reflecting the motion of the user a generated by the data transmission device a, 30a is transmitted to the data transmission device b, 30b, and the data transmission device b, 30b transmits the avatar a control information received from the data transmission device a, 30a and the avatar b control information generated by the data transmission device b, 30b together to the data reception device 50.

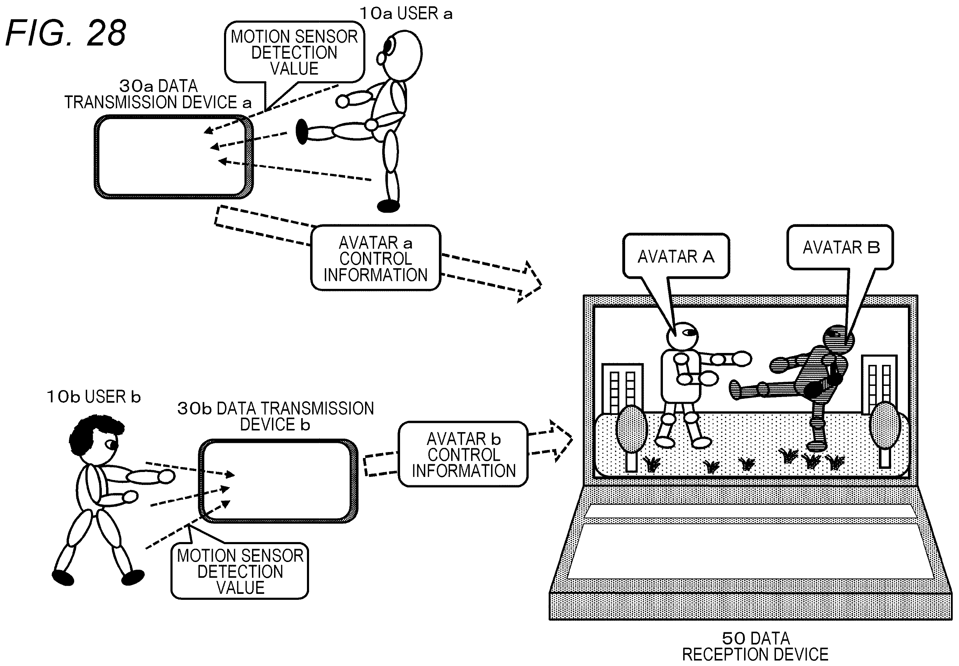

In addition to such a processing example, for example, as illustrated in Fig. 28, each of the data transmission device a, 30a and the data transmission device b, 30b may individually transmit the generated avatar control information reflecting the motion of each user to the data reception device 50.

Also in this case, the data reception device 50 receives the avatar control information corresponding to the different avatars in parallel from the plurality of data transmission devices.

Also in such a case, the data reception device 50 refers to the skeleton information received from each data transmission device and the IP address stored in the IP address block in the frame information, so that the information received in parallel from the plurality of devices can be classified into information (skeleton information and frame information) in units of transmission devices in units of skeleton information data blocks or frame information data blocks. As a result, the data reception device 50 can apply the motion of the corresponding user to the avatar corresponding to each transmitting device, that is, each of the plurality of avatars corresponding to each user.

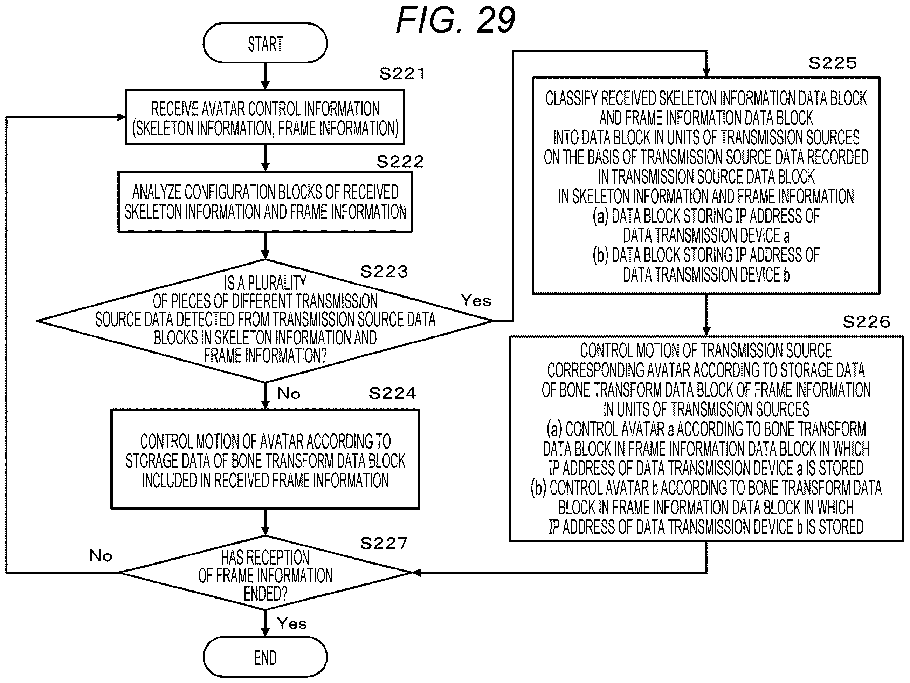

Next, a sequence of processing executed in a case where the data reception device 50 receives a plurality of pieces of avatar control information corresponding to the avatar will be described with reference to a flowchart illustrated in Fig. 29.

Hereinafter, processing of each step of the flow illustrated in Fig. 29 will be sequentially described.

### (Step S221)

First, in step S221, the data reception device receives the avatar control information including the skeleton information and the frame information.

Note that data is stored in a UDP packet, and a skeleton information data block or a frame information data block is stored in the UDP packet.

For example, in the case of receiving a plurality of pieces of avatar control information a, b generated by a plurality of data transmission devices a, b, the data reception device receives the following four kinds of data blocks.
(a1) Skeleton information data block generated by data transmission device a
(a2) Frame information data block generated by data transmission device a
(b1) Skeleton information data block generated by data transmission device b
(b2) Frame information data block generated by data transmission device b

### (Step S222)

Next, in step S222, the data reception device analyzes the data block constituting the skeleton information data block or the frame information data block stored in the received UDP packet.

In the data block analysis processing, the data reception device acquires the IP address stored in the IP address lock of the transmission source data block.

### (Step S223)

Next, the data reception device determines whether or not different transmission source data, specifically, an IP address, is detected from the plurality of received skeleton information data blocks and frame information data blocks as a result of the data block analysis processing in step S222.

In a case where a different IP address is not detected from the plurality of received skeleton information data blocks or frame information data blocks, the determination in step S223 is No.

In this case, the data reception device determines that only the avatar control information corresponding to one avatar is received, and executes the processing of step S224.

On the other hand, in a case where a different IP address is detected from the plurality of received skeleton information data blocks and frame information data blocks, the determination in step S223 is Yes.

In this case, the data reception device determines that a plurality of pieces of avatar control information corresponding to a plurality of different avatars is received, and executes the processing of steps S225 to S226.

### (Step S224)

In a case where the determination in step S223 is No, that is, in a case where a different IP address is not detected from the plurality of received skeleton information data blocks and frame information data blocks, the processing in step S224 is executed.

In this case, the data reception device determines that only the avatar control information corresponding to one avatar is received, and in step S224, executes processing of controlling the motion of the avatar being displayed on the display unit according to the storage data of the transform data block included in the received frame information.

### (Step S225)

On the other hand, in a case where the determination in step S223 is Yes, that is, in a case where a different IP address is detected from the plurality of received skeleton information data blocks and frame information data blocks, the processing in step S225 is executed.

In this case, the data reception device determines that a plurality of pieces of avatar control information corresponding to a plurality of avatars is received, and classifies the constituent blocks of the skeleton information and the frame information in units of UDP packets into blocks in units of transmission sources on the basis of the skeleton information stored in each UDP packet or the transmission source data (IP address) recorded in the transmission source data block in the frame information in step S225.

For example, in a case where the IP address of the data transmission device a and the two IP addresses of the data transmission device b are detected as the IP addresses, the IP addresses are classified into the avatar control information of the data transmission device a or the avatar control information of the data transmission device b in units of skeleton information data blocks or frame information data blocks.

Specifically, according to an IP address of one skeleton information data block or an IP address block stored in one frame information data block, it is determined that all data blocks in the skeleton information data block or the frame information data block are data blocks from a data transmission device having the IP address. As described above, the data reception device executes the determination processing of the data transmission source in units of the skeleton information data block and the frame information data block.

### (Step S226)

Next, in step S226, the data reception device controls the motion of the transmission source corresponding avatar according to the data stored in the bone transform data block of the frame information in units of transmission sources.

For example, in a case where the IP address of the data transmission device a and the two IP addresses of the data transmission device b are detected from the plurality of frame information data blocks, the plurality of frame information data blocks is classified into the data block corresponding to the data transmission device a or the data block corresponding to the data transmission device b in units of frame information data blocks according to the IP address stored in the block.

Moreover, the following control is performed using the bone transform data stored in the two frame information data blocks obtained as a result of the classification processing.
(a) Control the avatar a according to the bone transform data block in the frame information data block in which the IP address of the data transmission device a is stored
(b) Control the avatar b according to the bone transform data block of the frame information data block in which the IP address of the data transmission device b is stored

### (Step S227)

After execution of any of the control processing of the motion control of one avatar using one piece of avatar control information in step S224 or the motion control of a plurality of avatars using a plurality of pieces of avatar control information in step S226, it is determined whether or not the reception of the avatar control information has ended in step S227.

In a case where the processing has not ended, the processing returns to step S221, and the processing in and after step S221 is executed on the new reception avatar control information.

In a case where it is determined in step S227 that the reception of the avatar control information has ended, the process ends.

### [8. Example of switching between plurality of avatar controls based on plurality of avatar control information in time unit]

Next, an example of switching a plurality of avatar controls based on a plurality of pieces of avatar control information in a time unit

The example described below is an example in which the data reception device receives a plurality of pieces of avatar control information corresponding to a plurality of users and executes a plurality of avatar controls on the basis of the avatar control information, similarly to the example described above, but the example described below is an example in which processing of switching the avatar control in units of time is performed.

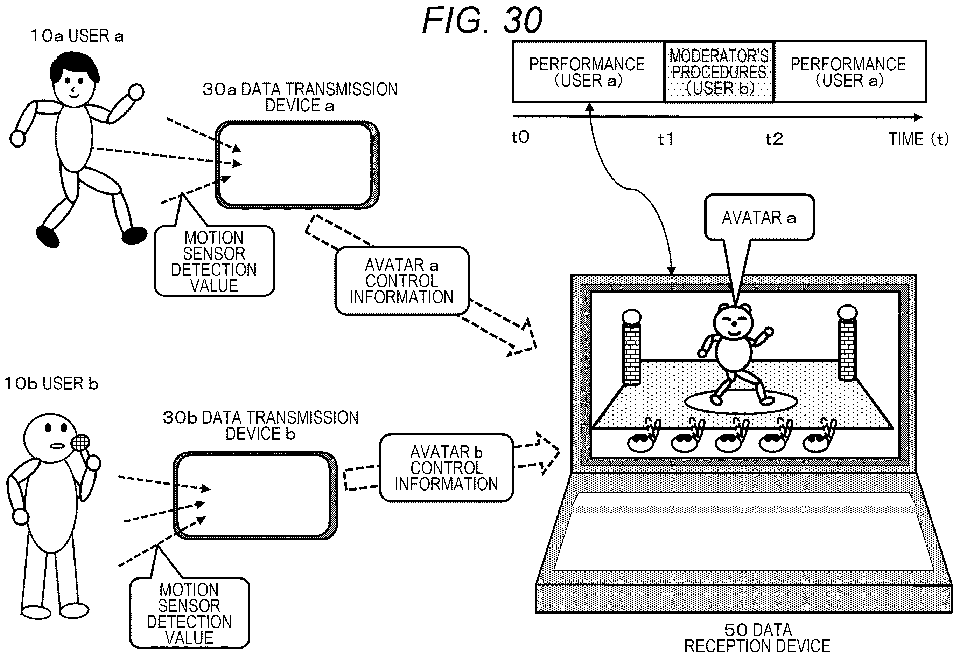

This example will be described with reference to Fig. 30.

Fig. 30 illustrates two data transmission devices, that is, a data transmission device a, 30a, a data transmission device b, 30b, and one data reception device 50.

The data transmission device a, 30a inputs a sensor detection value from a motion sensor worn by a user a, 10a, generates avatar control information (avatar a control information) reflecting the motion of the user a, and transmits the avatar control information to the data reception device 50.

The data transmission device b, 30b inputs a sensor detection value from a motion sensors worn by a user b, 10b, generate avatar control information (avatar b control information) reflecting the motion of the user b, and transmit the avatar control information to the data reception device 50.

Here, the avatar control information of the user a, 10a is applied to the avatar a displayed on the data reception device (PC) 50 illustrated in Fig. 30.

That is, the user a, 10a performs performance actions (motions) as a performer.

The avatar a performing this performance is displayed on the data reception device (PC) 50 from time t0 to t1 and from time t2, as illustrated in the time axis in the upper right of Fig. 30.

Between times t1 and t2, another avatar b corresponding to the user b, 10b is displayed on the data reception device (PC) 50.

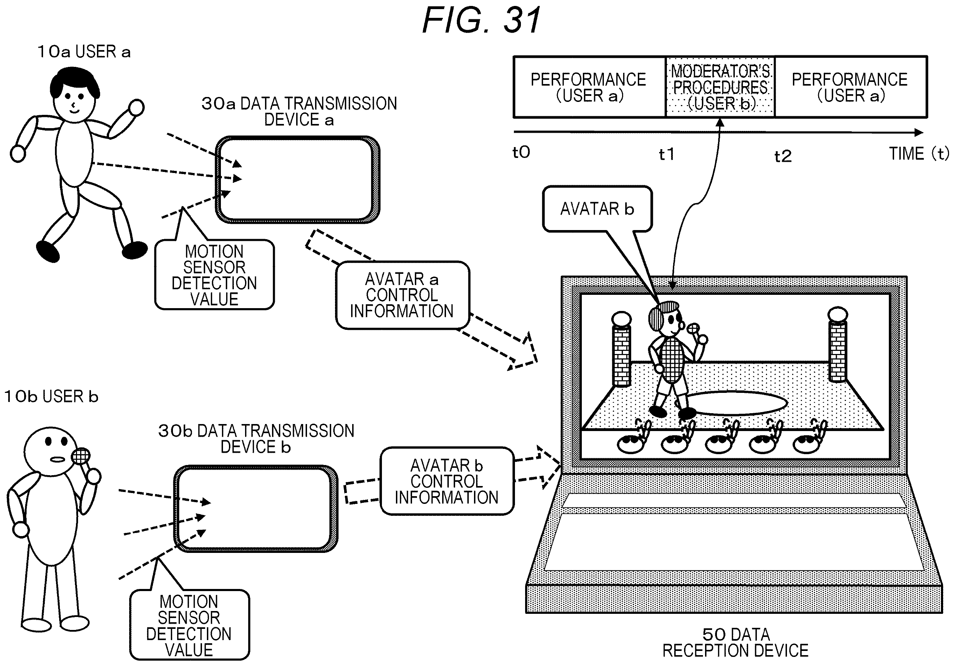

A display example of the data reception device (PC) 50 from time t1 to t2 is illustrated in Fig. 31.

As illustrated in Fig. 31, an avatar b has a role of a moderator, and the user b, 10b executes an action (motion) as a moderator.

At time t2, the display of the data reception device (PC) 50 is switched to a performance execution screen of the avatar a.

As described above, the data reception device (PC) 50 receives the avatar a control information and the avatar b control information from the data transmission device a, 30a and the data transmission device b, 30b, respectively, and applies the avatar control information to the avatar a and the avatar b, respectively. In the present example, the data reception device (PC) 50 further executes selection control on which avatar control information is applied and which avatar control is to be performed.

Such selection control can be performed, for example, on the basis of data stored in a "Priority information data block" to be newly set in the frame information 42.

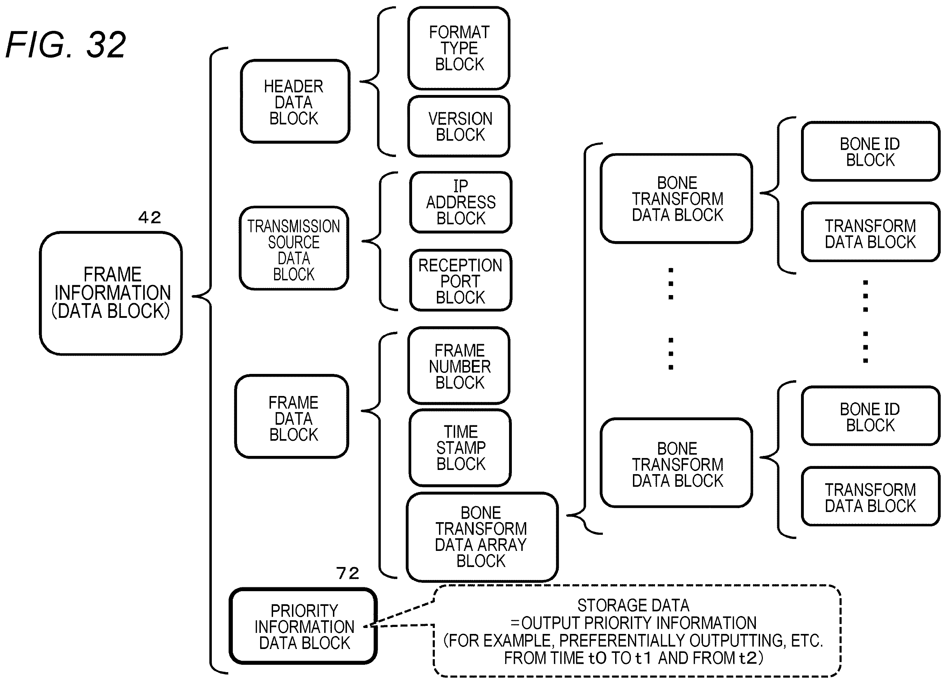

Fig. 32 illustrates an example of the frame information 42 to which the "Priority information data block 72" is added.

The data block configuration of the frame information 42 illustrated in Fig. 32 is a data block configuration in which

"Priority information data block 72"

is added to the data block configuration of the frame information 42 described above with reference to Fig. 13.

The "Priority information data block 72" is a data block that stores priority information applied to switch an avatar that reflects the motion of the user in the data reception device (PC or the like) 50.

As illustrated in Fig. 32, in the "Priority information data block 72", for example, output priority information, specifically, avatar priority in units of time, such as a setting for preferentially outputting data from times t0 to t1 and from t2, is recorded as the storage data.

This example corresponds to the priority information of the avatar a illustrated in Fig. 30.

On the other hand, in the frame information corresponding to the avatar b illustrated in Fig. 31, priority information indicating that the time t1 to t2 have high priority is stored.

The data transmission device a, 30a and the data transmission device b, 30b illustrated in Figs. 30 and 31 generate the "Priority information data block 72" storing the priority information, add the Priority information data block as a configuration block of the frame information 42, and transmit the data block to the data reception device (PC or the like) 50.

When detecting the "Priority information data block 72" from the frame information 42 received from the data transmission device (smartphone or the like) 30, the data reception device (PC or the like) 50 analyzes the storage data of the "Priority information data block 72", changes the priority of the motion application processing for the avatar being displayed on the display unit of the data reception device (PC or the like) 50 according to the analysis result, selects an avatar with high priority, and executes the motion control of only the selected avatar.

Note that the position of the "Priority information data block 72" in the frame information 42 illustrated in Fig. 32 is an example, and the "Priority information data block 72" may be set to a position other than the position illustrated in the drawing, for example, a storage block of the frame data block.

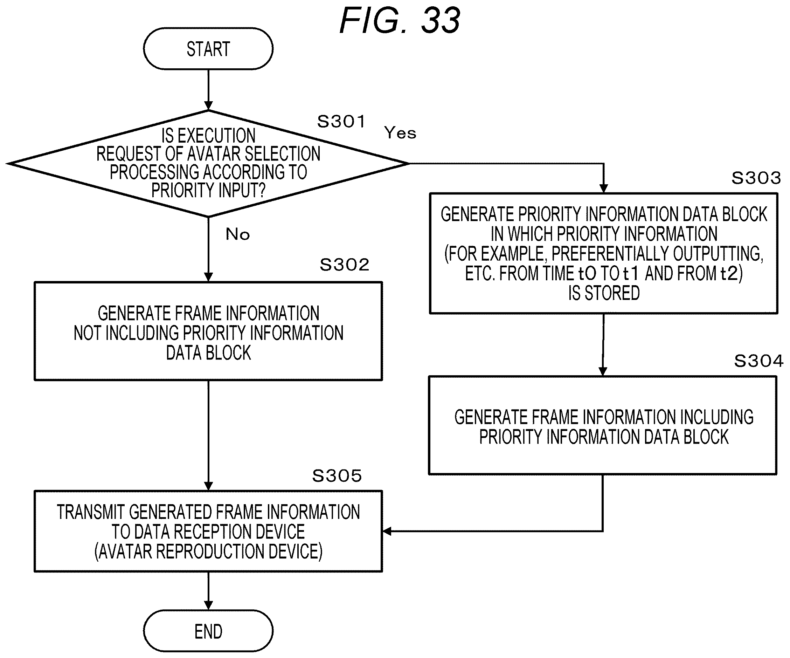

Next, a sequence of processing executed by the data transmission device 30 and processing executed by the data reception device 50 in a case where the avatar selection processing according to the priority is performed and the motion control of only the selected avatar is executed will be described with reference to flowcharts illustrated in Fig. 33 and subsequent drawings.

Note that the processing according to the flowchart described below can be executed in accordance with a program stored in a storage unit of the data transmission device 30 or the data reception device 50, and is executed under the control of a control unit having a program execution function such as a CPU or the like, for example.

First, a sequence of processing executed by the data transmission device 30 in a case where the selection application processing according to the priority of the avatar is executed or not executed will be described with reference to the flowchart illustrated in Fig. 33.

Hereinafter, details of processing of each step of the flowchart illustrated in Fig. 33 will be sequentially described.

### (Step S301)

First, the data transmission device 30 such as the smart phone determines whether or not the input of the execution request of the avatar selection processing according to the priority is detected in step S301.

The execution request of the avatar selection processing according to the priority is made by, for example, an input operation on the data transmission device 30 such as a smartphone by the user.

In a case where the input of the execution request for the avatar selection processing according to the priority is not detected, the process proceeds to step S302, and in a case where the input is detected, the process proceeds to step S303.

### (Step S302)

In a case where the input of the execution request of the avatar selection processing according to the priority is not detected in step S301, the data transmission device 30 generates, in step S302, the frame information not including the priority information data block, that is, the normal frame information 42 having the data block configuration described above with reference to Fig. 13.

### (Step S303)

On the other hand, in a case where the input of the execution request of the avatar selection processing according to the priority is detected in step S301, the data transmission device 30 generates the priority information data block in step S303.

As described above with reference to Fig. 32, the data transmission device 30 generates, as the storage data, the priority information data block in which the avatar priority data in units of time is stored, for example, the output priority information, specifically, for example, the setting of preferentially outputting from time t0 to t1 and from t2.

### (Step S304)

Moreover, in step S304, the data transmission device 30 generates the frame information including the priority information data block generated in step S303, that is, the frame information 42 including the priority information data block described above with reference to Fig. 32.

### (Step S305)

When the generation processing of the frame information of either the frame information not including the priority information data block is completed in step S302 or the frame information including the priority information data block is completed in step S304, the data transmission device 30 transmits the frame information generated in step S305 to the data reception device 50.

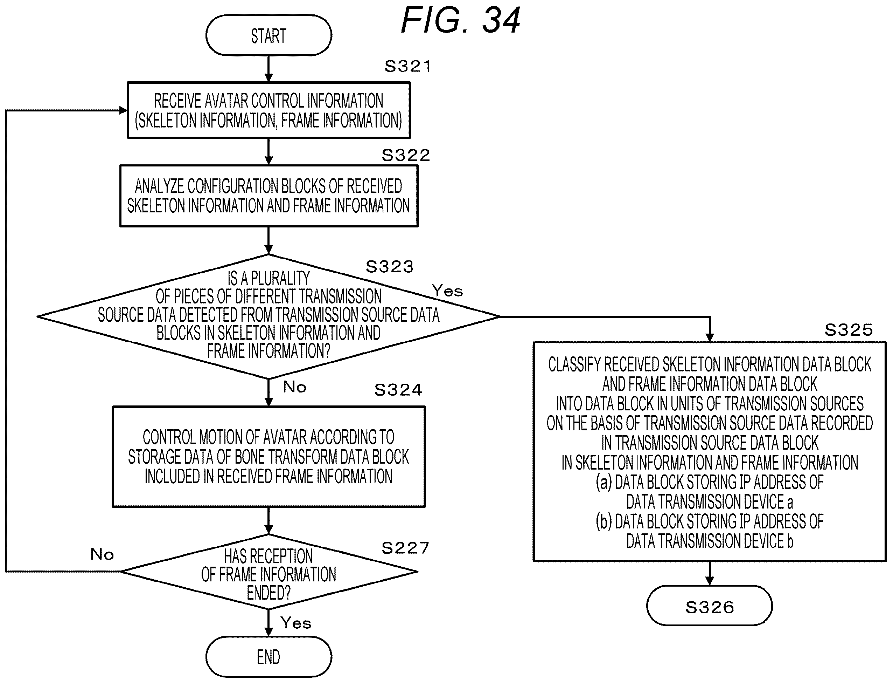

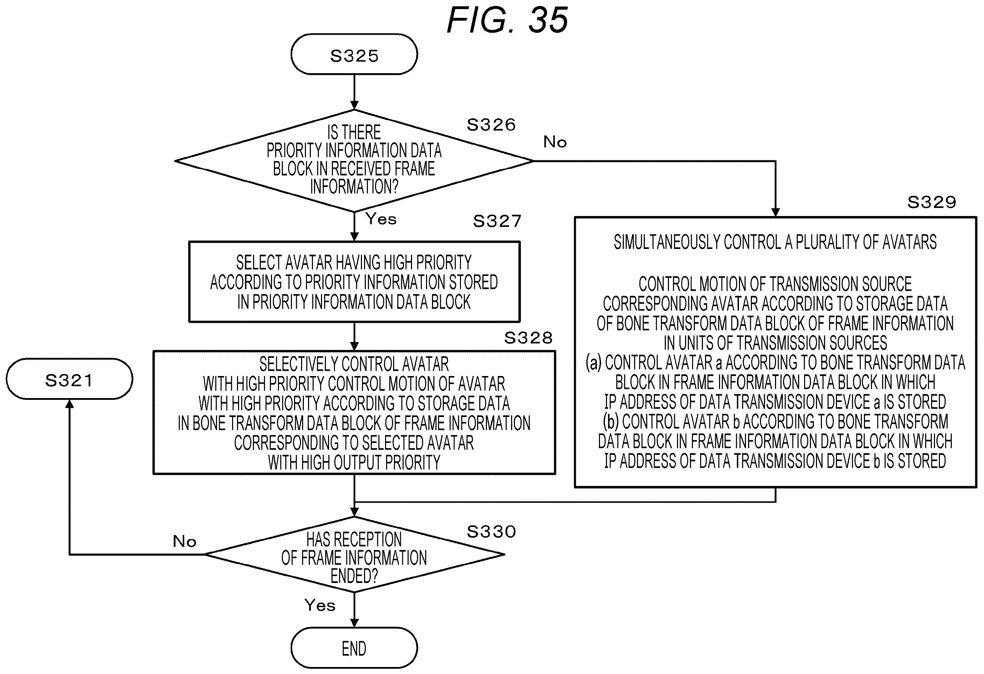

Next, a sequence of processing executed by the data reception device 50 in a case where the selection application processing according to the priority of the avatar is executed or not executed will be described with reference to the flows illustrated in Figs. 34 and 35.

Hereinafter, details of processing of each step of the flows illustrated in Figs. 34 and 35 will be sequentially described.

### (Step S321)

First, in step S321, the data reception device 50 such as a PC receives the avatar control information including the skeleton information and the frame information from the data transmission device 30.

Note that data is stored in a UDP packet, and skeleton information (data block) or frame information (data block) is stored in the UDP packet.

For example, in the case of receiving a plurality of pieces of avatar control information a, b generated by a plurality of data transmission devices a, b, the data reception device receives the following four kinds of data blocks.
(a1) Skeleton information data block generated by data transmission device a
(a2) Frame information data block generated by data transmission device a
(b1) Skeleton information data block generated by data transmission device b
(b2) Frame information data block generated by data transmission device b

### (Step S322)

Next, in step S322, the data reception device analyzes the skeleton information data block or the data block constituting the frame information data block stored in the received UDP packet.

In the data block analysis processing, the data reception device acquires the IP address stored in the IP address lock of the transmission source data block.

### (Step S323)

Next, the data reception device determines whether or not different transmission source data, specifically, an IP address, is detected from the plurality of received skeleton information data blocks and frame information data blocks as a result of the data block analysis processing in step S222.

In a case where a different IP address is not detected from the plurality of received skeleton information data blocks or frame information data blocks, the determination in step S323 is No.

In this case, the data reception device determines that only the avatar control information corresponding to one avatar is received, and executes the processing of step S324.

On the other hand, in a case where a different IP address is detected from the plurality of received skeleton information data blocks and frame information data blocks, the determination in step S323 is Yes.

In this case, the data reception device determines that a plurality of pieces of avatar control information corresponding to a plurality of different avatars is received, and executes the processing in step S325 and subsequent steps.

### (Step S324)

In a case where the determination in step S323 is No, that is, in a case where a different IP address is not detected from the plurality of received skeleton information data blocks and frame information data blocks, the processing in step S324 is executed.

In this case, the data reception device determines that only the avatar control information corresponding to one avatar is received, and in step S324, executes processing of controlling the motion of the avatar being displayed on the display unit according to the storage data of the transform data block included in the received frame information.

### (Step S325)

On the other hand, in a case where the determination in step S323 is Yes, that is, in a case where a different IP address is detected from the plurality of received skeleton information data blocks and frame information data blocks, the processing in step S325 is executed.

In this case, the data reception device determines that a plurality of pieces of avatar control information corresponding to a plurality of avatars is received, and classifies the constituent blocks of the skeleton information and the frame information in units of UDP packets into blocks in units of transmission sources on the basis of the skeleton information stored in each UDP packet or the transmission source data (IP address) recorded in the transmission source data block in the frame information in step S325.

For example, in a case where the IP address of the data transmission device a and the two IP addresses of the data transmission device b are detected as the IP addresses, the IP addresses are classified into the avatar control information of the data transmission device a or the avatar control information of the data transmission device b in units of skeleton information data blocks or frame information data blocks.

Specifically, according to an IP address of one skeleton information data block or an IP address block stored in one frame information data block, it is determined that all data blocks in the skeleton information data block or the frame information data block are data blocks from a data transmission device having the IP address. As described above, the data reception device executes the determination processing of the data transmission source in units of the skeleton information data block and the frame information data block.

### (Step S326)

Next, in step S326, the data reception device determines whether or not a priority information data block is detected in the received frame information.

In a case where the priority information data block is detected in the frame information, the process proceeds to step S327.

On the other hand, in a case where the priority information data block is not detected in the frame information, the process proceeds to step S329.

### (Step S327)

In a case where the priority information data block is detected in the received frame information in step S326, the data reception device selects an avatar having a high priority according to the priority information stored in the priority information data block detected from the frame information in step S327.

### (Step S328)

Next, in step S328, the data reception device selectively controls the avatar with high priority selected in step S327.

That is, the processing of controlling the motion of only the avatar with high priority is executed according to the data stored in the bone transform data block of the frame information corresponding to the selected avatar with high output priority.

### (Step S329)

On the other hand, in a case where the priority information data block is not detected in the received frame information in step S326, the data reception device simultaneously controls a plurality of avatars in step S329.

Specifically, the motion of the avatar corresponding to the transmission source is simultaneously controlled according to the data stored in the bone transform data block of the frame information of the transmission source unit. That is, for example, the following control is executed.
(a) Control the avatar a according to the bone transform data block in the frame information data block in which the IP address of the data transmission device a is stored,
(b) Control the avatar b according to the bone transform data block in the frame information data block in which the IP address of the data transmission device b is stored

In this manner, the control of the plurality of avatars is executed on the basis of the plurality of pieces of received avatar control information.

### (Step S330)

After execution of any one of the motion control of one avatar with high priority in step S328 or the motion control of a plurality of avatars in step S329, it is determined in step S330 whether or not the reception of the avatar control information has ended.

In a case where the processing has not ended, the process returns to step S321, and the processing in and after step S321 is executed on the newly received avatar control information.

In a case where it is determined in step S330 that the reception of the avatar control information has ended, the process ends.

### [9. Example using data block storing pose and gesture information]

Next, an example using a data block storing pose and gesture information will be described.

As described above, in the system of the present disclosure, the frame information reflecting the motion of the user on the basis of the detection value of the motion sensor worn by the data transmission device (smartphone or the like) 30 on the user is sequentially transmitted to the data reception device (PC or the like) 50, and the avatar displayed on the display unit of the data reception device (PC or the like) 50 is caused to perform a motion similar to the motion of the user.

However, for example, the user may not be able to execute the ideal motion that the user wants the avatar to execute.

For example, even if the user desires to cause the avatar to perform a "tumbling" motion, the user may not be able to perform the tumbling, or even if the user desires to cause the avatar to perform a high-speed and agile "punching" action, the user may not be able to perform the high-speed and agile "punching" action.

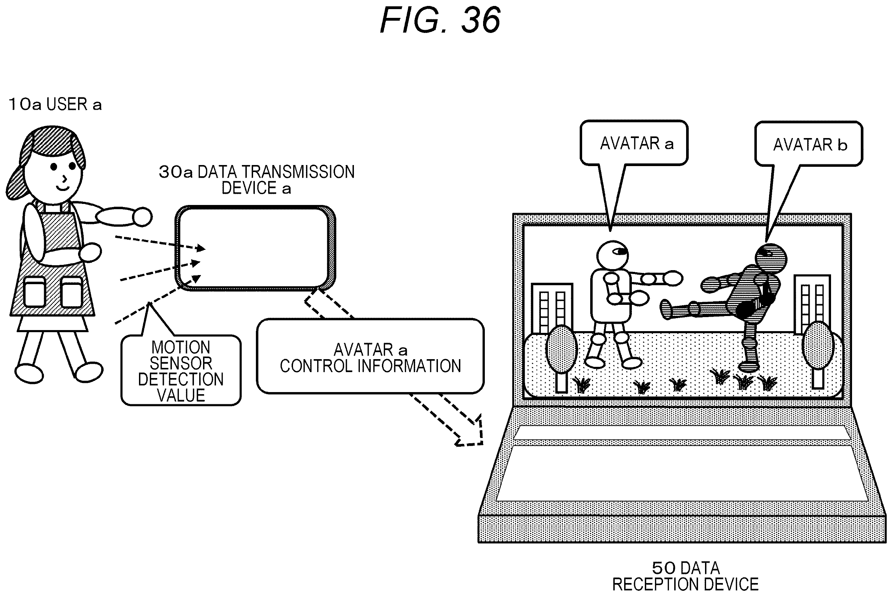

A specific example will be described with reference to Fig. 36. An image in which an avatar a and an avatar b are fighting is displayed on the display unit of the data reception device (PC or the like) 50.

The avatar a performs a motion reflecting the motion of the user a illustrated in the drawing.

The user a, 10a is wearing motion sensors, and frame information reflecting the motion based on the detection values of the motion sensors worn by the user a, 10a is generated in the data transmission device a, 30a and transmitted to the data reception device (PC or the like) 50.

The data reception device (PC or the like) 50 controls the motion of the avatar a on the basis of the frame information received from the data transmission device a, 30a.

For example, when the user a, 10a executes the punching action, the avatar a displayed on the data reception device 50 also performs the punching action.

However, although the punch that the user a, 10a wants the avatar a to execute is a high-speed and agile punch, the user a, 10a can execute only a slow punch.

For example, in such a case, it is possible to cause the user, 10a to execute a high-speed and agile "punching" action that the user desires to cause the avatar a to execute.

An example described below is an example that enables processing of causing the avatar to execute the action that the user desires to cause the avatar to execute, instead of the user's own motion itself.

In the present example, a data block in which pose and gesture information is stored, that is, a "Pose/gesture information storage block" is added to the frame information 42 transmitted from the data transmission device (smartphone or the like) 30 to the data reception device (PC or the like) 50.

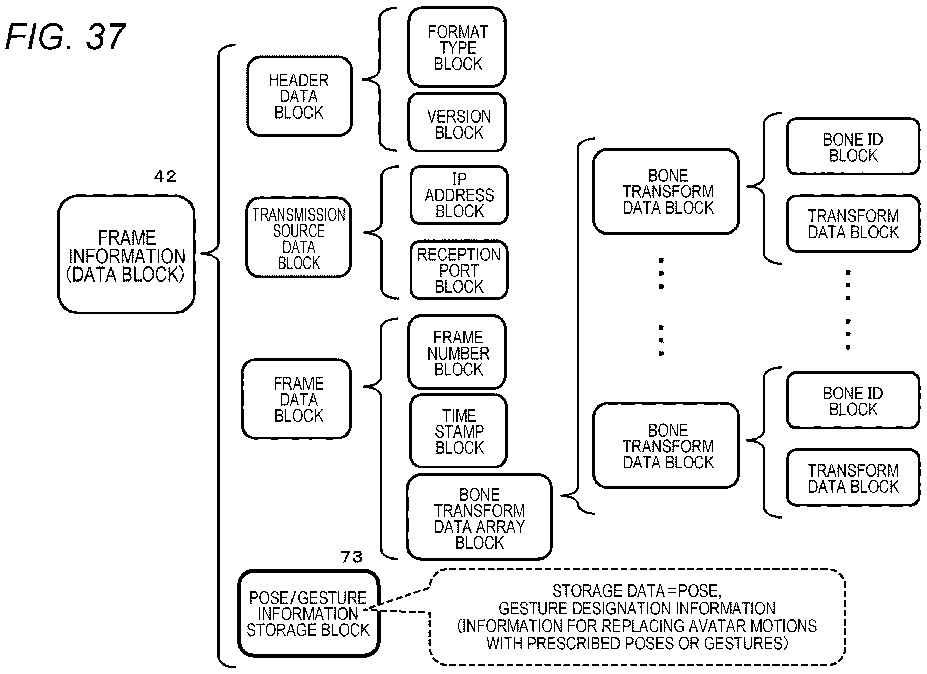

Fig. 37 illustrates a data block configuration example of the frame information (data block) 42 generated by the data transmission device (smartphone or the like) 30.

The data block configuration of the frame information 42 illustrated in Fig. 37 is a data block configuration in which
"Pose/gesture information storage block 73"
is added to the data block configuration of the frame information 42 described above with reference to Fig. 13.

The "Pose/gesture information storage block 73" is a data block for instructing control of causing the avatar to execute motions corresponding to various poses and gestures prepared in advance without using bone transform data reflecting the motion of the user 10 in the data reception device (PC or the like) 50.

As illustrated in Fig. 37, the "Pose/gesture information storage block 73" includes, for example, a pose, gesture designation information, that is, a pose for replacing the motion of the avatar with a specified pose or gesture, and gesture designation information as the storage data.

For example, various poses and gesture designation information such as "tumbling", "fast punch", "sitting straight", and "jumping" are used.

The data transmission device (smartphone or the like) 30 generates the "Pose/gesture information storage block 73" storing the pose and gesture designation information, adds the same as a configuration block of the frame information 42, and transmits the same to the data reception device (PC or the like) 50.

When detecting the "Pose/gesture information storage block 73" from the frame information 42 received from the data transmission device (smartphone or the like) 30, the data reception device (PC or the like) 50 analyzes the storage data of the "Pose/gesture information storage block 73", and executes the action control of the avatar 51 being displayed on the display unit of the data reception device (PC or the like) 50 according to the analysis result.

In a storage unit of the data reception device (PC or the like) 50, motion control data for executing the action control of the avatar corresponding to various poses and gestures is stored in advance, and the data reception device (PC or the like) 50 acquires motion control data corresponding to the designated pose and gesture from the storage unit according to the pose and gesture designation data stored in the "Pose/gesture information storage block 73" received from the data transmission device 30 and applies the motion control data to the avatar.

By performing such processing, it is possible to cause the avatar to execute an ideal action desired by the user.

Note that the position of the "Pose/gesture information storage block 73" in the frame information 42 illustrated in Fig. 37 is an example, and the "Pose/gesture information storage block 73" may be set to a position other than the position illustrated in the drawing, for example, a storage block of a frame data block.

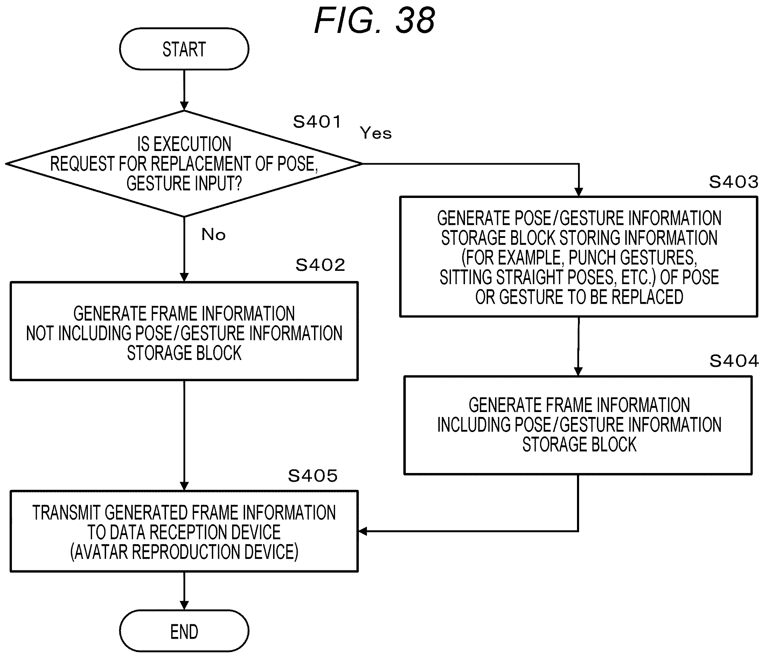

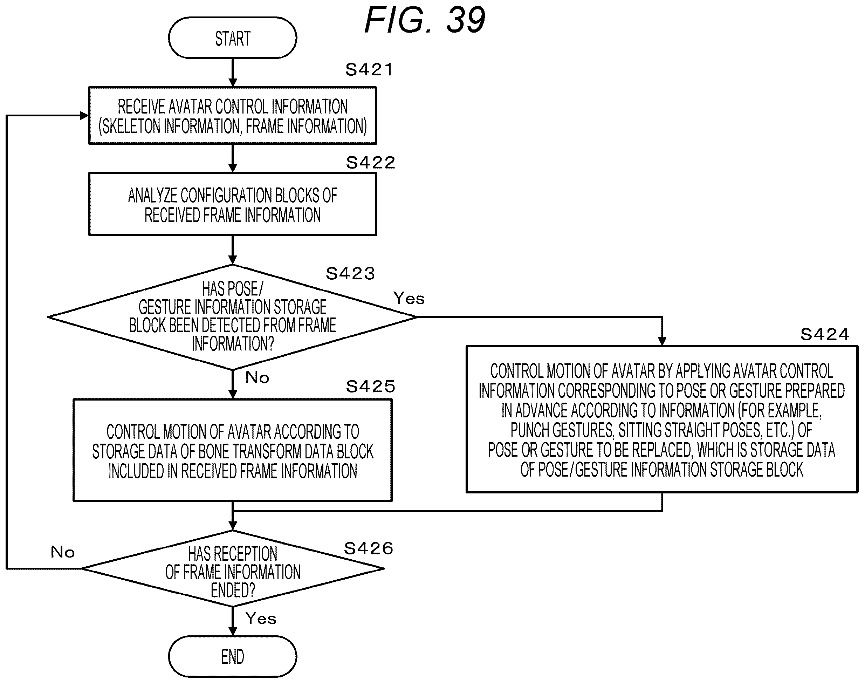

Next, a sequence of processing executed by the data transmission device 30 and processing executed by the data reception device 50 in a case where the Pose/gesture information storage block is set in the frame information 42 and the motion control of the avatar is performed will be described with reference to flowcharts illustrated in Figs. 38 and 39.

Note that the processing according to the flowchart described below can be executed in accordance with a program stored in a storage unit of the data transmission device 30 or the data reception device 50, and is executed under the control of a control unit having a program execution function such as a CPU or the like, for example.

Next, a sequence of processing executed by the data transmission device 30 will be described with reference to the flowchart illustrated in Fig. 38.

Hereinafter, details of processing of each step of the flowchart illustrated in Fig. 38 will be sequentially described.

### (Step S401)

First, the data transmission device 30 such as a smartphone determines whether or not an input of an execution request for a Pose/gesture replacement process has been detected in step S401.

The execution request of the Pose/gesture replacement processing is performed by, for example, an input operation on the data transmission device 30 such as a smartphone by the user.

In a case where the input of the execution request for the Pose/gesture replacement processing has not been detected, the process proceeds to step S402, and in a case where the input has been detected, the process proceeds to step S403.

### (Step S402)

In a case where the input of the execution request for the Pose/gesture replacement processing has not been detected in step S401, the data transmission device 30 generates, in step S402, the frame information not including the Pose/gesture information storage block, that is, the normal frame information 42 having the data block configuration described above with reference to Fig. 13.

### (Step S403)

On the other hand, in a case where the input of the execution request of the Pose/gesture replacement processing is detected in step S401, the data transmission device 30 generates a Pose/gesture information storage block in step S403.

As described above with reference to Fig. 37, the data transmission device 30 generates, as the storage data, the Pose/gesture information storage block that stores, for example, the pose, the gesture designation information, that is, the pose for replacing the motion of the avatar with the prescribed pose or the gesture, and the gesture designation information.

Specifically, for example, a Pose/gesture information storage block storing various pose and gesture designation information such as "tumbling", "fast punch", "sitting straight", and "jumping" is generated.

### (Step S404)

Moreover, in step S404, the data transmission device 30 generates the frame information including the Pose/gesture information storage block generated in step S403, that is, the frame information 42 including the Pose/gesture information storage block described above with reference to Fig. 37.

### (Step S405)

When the generation processing of the frame information of either the frame information not including the Pose/gesture information storage block in step S402 or the frame information including the Pose/gesture information storage block is completed in step S404, data transmission device 30 transmits the frame information generated in step S405 to data reception device 50.

Next, a sequence of processing executed by the data reception device 50 that performs the motion control of the avatar on the basis of the Pose/gesture information storage block set in the frame information 42 will be described with reference to the flow illustrated in Fig. 39.

Hereinafter, details of processing of each step of the flowchart illustrated in Fig. 39 will be sequentially described.

### (Step S421)

First, in step S421, the data reception device 50 such as a PC receives the avatar control information including the skeleton information and the frame information from the data transmission device 30.

### (Step S422)

Next, in step S422, the data reception device 50 analyzes the data block constituting the frame information received from the data transmission device 30.

### (Step S423)

Next, in step S423, the data reception device 50 determines whether or not a Pose/gesture information storage block has been detected from the frame information received from the data transmission device 30.

In a case where the Pose/gesture information storage block is detected from the received frame information, the process proceeds to step S424, and in a case where the Pose/gesture information storage block is not detected, the process proceeds to step S425.

### (Step S424)

In step S423, in a case where the Pose/gesture information storage block is detected from the received frame information, the processing proceeds to step S424, and in step S424, the data reception device 50 executes the motion control of the avatar according to the storage data of the Pose/gesture information storage block received from the data transmission device 30.

Specifically, the motion of the avatar is controlled by applying the pose stored in advance in the storage unit of the data reception device 50 or the gesture corresponding avatar control information according to the replacement target pose specified as the storage data of the Pose/gesture information storage block or the gesture information, for example, the punch gesture, the sitting straight pose, or the like.

### (Step S425)

On the other hand, in a case where the Pose/gesture information storage block is not detected from the received frame information in step S423, the process proceeds to step S425, and the data reception device 50 executes the motion control of the avatar in accordance with the frame information not including the Pose/gesture information storage block received from the data transmission device 30 in step S425.

Specifically, the motion of the avatar displayed on the display unit of the data reception device 50 is controlled according to the storage data of the bone transform data block reflecting the motion of the user included in the frame information received from the data transmission device 30.

### (Step S426)

After the avatar motion control process in step S424 or step S425, the data reception device 50 determines in step S426 whether or not the process of receiving the frame information from the data transmission device 30 has ended.

In a case where it has not ended, the process returns to step S421 and the processing of step S421 and subsequent steps is repeated for the next frame information to be received.

In a case where it is determined in step S426 that the reception processing of the frame information from the data transmission device 30 has ended, the process ends.

As described above, the data transmission device 30 that transmits the avatar control information including the skeleton information and the frame information can generate the frame information including the pose/gesture information storage block for replacing the motion of the avatar with a motion different from the motion of the user, that is, a motion according to a predefined pose or gesture, and transmit the frame information to the data reception device 50.

In the case of receiving the frame information including the pose/gesture information storage block from the data transmission device 30, the data reception device 50 causes the avatar to execute a motion corresponding to the specified pose or gesture on the basis of the pose or gesture designation information stored in the pose/gesture information storage block, for example, designation information such as tumbling, punching, or sitting straight. Note that control information for causing the avatar to execute various pose gesture is stored in advance in the storage unit of the data transmission device 30.

The data reception device 50 acquires, from the storage unit, motion control information corresponding to pose and gesture designation information stored in the pose/gesture information storage block received from the data transmission device 30, for example, designation information such as tumbling, punching, and sitting straight, and causes the avatar to execute the motion control information.

By performing such processing, it is possible to cause the avatar to execute an action or the like that the user cannot actually perform.

### [10. Other examples]

Next, other examples will be described.

Each example below will be sequentially described.
(1) Example using image data storage block storing image data captured by camera such as facial expression of user
(2) Example using voice data storage block in which voice data acquired by microphone, such as voice of user, is stored
(3) Example in which a data transmission device acquires motion data of a plurality of users and transmits the motion data to a data reception device, and the data reception device assigns a motion of each user to a user-enabled avatar and performs motion control of the avatar
(4) Example of generating and using data block storing detection value of sensor different from motion sensor such as touch sensor
(5) Example of generating and using data block storing illumination program

### (10-(1) Example using image data storage block storing image data captured by camera such as facial expression of user)

First, an example using an image data storage block storing image data captured by a camera such as a facial expression of a user will be described.

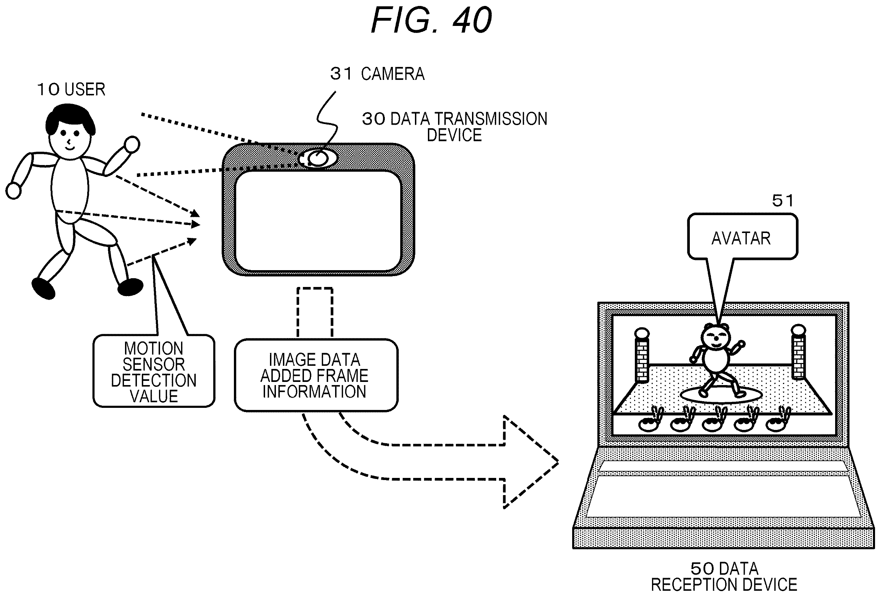

A specific example of the example using an image data storage block storing image data captured by a camera such as a facial expression of a user will be described with reference to Fig. 40.

Fig. 40 illustrates a user 10 wearing a motion sensor, a data transmission device 30, and a data reception device 50.

The detection value of the motion sensor worn by the user 10 is transmitted to the data transmission device 30, and the data transmission device generates frame information storing bone transform data reflecting the motion of the user on the basis of the sensor detection value and transmits the frame information to the data reception device 50.

In the present example, the data transmission device 30 further captures an image of the user 10 using the camera 31 mounted on the data transmission device 30, generates a data block storing the captured image of the user 10, and adds the data block to the frame information.

For example, an image data storage block storing a facial expression image obtained by capturing a face image of the user 10 is generated, and frame information including the generated image data storage block is generated and transmitted to the data reception device 50.

In the case of detecting the image data storage block from the frame information received from the data transmission device 30, the data reception device 50 executes avatar display control of reflecting the image data stored in the detected image data storage block in the avatar 51. For example, in a case where image data indicating the expression of the user 10 is detected in the image data storage block, expression control processing of changing the expression of the avatar 51 according to the expression of the user 10 is executed.

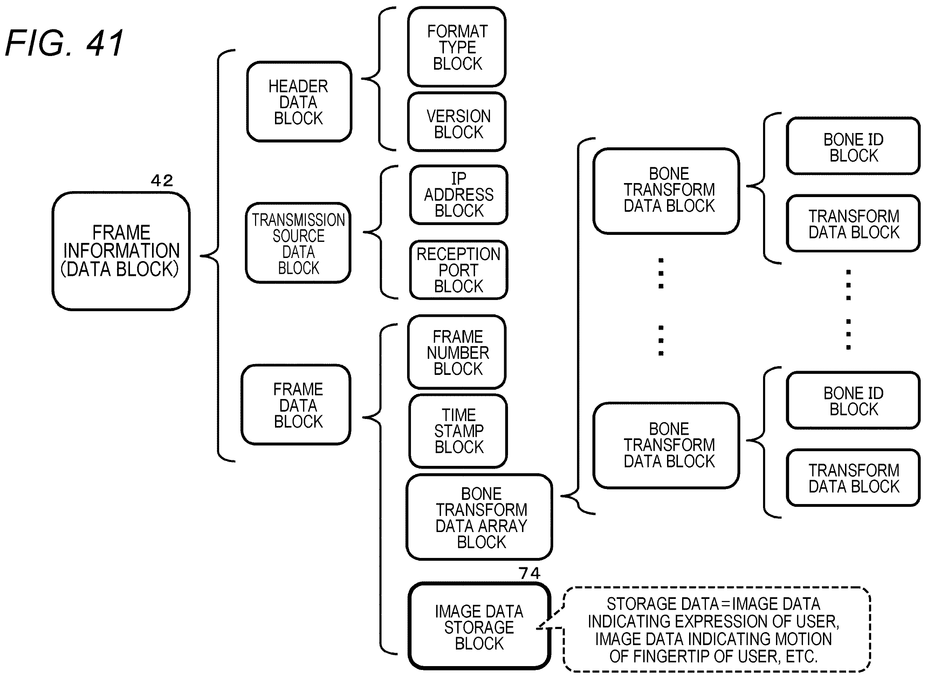

Fig. 41 illustrates a data block configuration example of the frame information (data block) 42 generated by the data transmission device (smartphone or the like) 30.

The data block configuration of the frame information 42 illustrated in Fig. 41 is a data block configuration in which
"Image data storage block 74"
is added to the data block configuration of the frame information 42 described above with reference to Fig. 13.

As illustrated in Fig. 41, the "Image data storage block 74" is a data block that stores, for example, a face image of the user indicating the expression of the user.

Note that the position of the "Image data storage block 74" in the frame information 42 illustrated in Fig. 41 is an example, and may be set to a position other than the position illustrated in the drawing.

The data transmission device (smart phone or the like) 30 generates the "Image data storage block 74" storing the face image of the user or the like, adds the "Image data storage block" as a constituent block of the frame information 42, and transmits the "Image data storage block" to the data reception device (PC or the like) 50.

When detecting the "Image data storage block 74" from the frame information 42 received from the data transmission device (smartphone or the like) 30, the data reception device (PC or the like) 50 analyzes the storage data of the "Image data storage block 74", and executes display control of the avatar 51 being displayed on the display unit of the data reception device (PC or the like) 50 according to the analysis result.

As described above, for example, in a case where the image data indicating the expression of the user 10 is detected in the "Image data storage block 74", the expression control processing of changing the expression of the avatar 51 according to the expression of the user 10 is executed.

Note that the "Image data storage block 74" may store not only image data indicating the expression of the user 10 but also image data indicating fine motion of the user 10 that is difficult to acquire only with the detection value of the motion sensor. For example, image data indicating a fine action of a hand of the user 10, specifically, a gesture of rock-paper-scissors or the like may be stored.

In a case where the data transmission device (smartphone or the like) 30 acquires the image data indicating the action of rock-paper-scissors or the like from the "Image data storage block 74" in the frame information 42 received from the data transmission device 30, it is possible to perform processing of controlling the action of the hand of the avatar 51 in accordance with the action of the user.

### (10-(2) Example using audio data storage block storing audio data acquired by microphone, such as voice of user)

Next, an example using a voice data storage block storing voice data acquired by a microphone such as a voice of a user will be described.

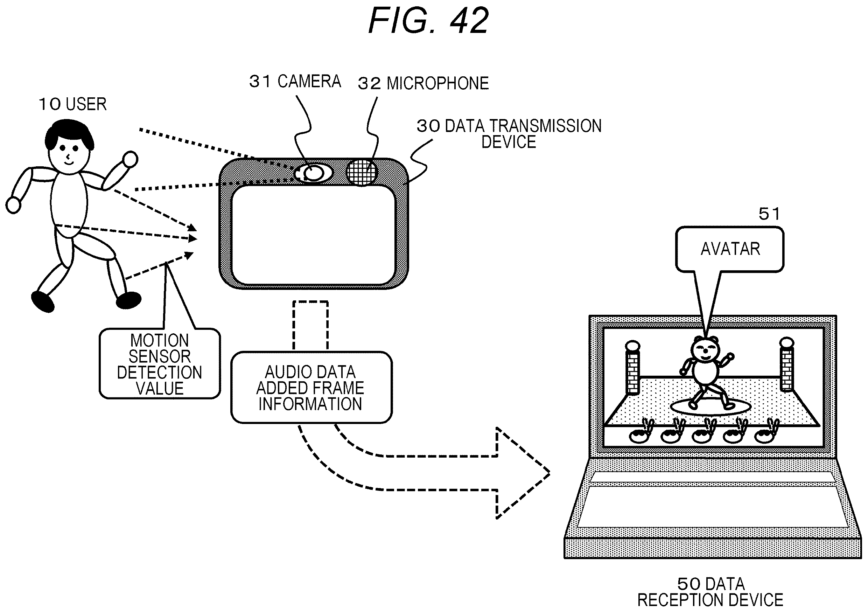

A specific example of the example using an audio data storage block storing audio data captured by a microphone such as a voice of a user will be described with reference to Fig. 42.

Fig. 42 illustrates a user 10 wearing a motion sensor, a data transmission device 30, and a data reception device 50.

The detection value of the motion sensor worn by the user 10 is transmitted to the data transmission device 30, and the data transmission device generates frame information storing bone transform data reflecting the motion of the user on the basis of the sensor detection value and transmits the frame information to the data reception device 50.

In the present example, the data transmission device 30 further acquires voice data such as the voice of the user 10 via the microphone 31 attached to the data transmission device 30, generates a data block storing the acquired voice data, and adds the data block to the frame information.

In the case of detecting the audio data storage block from the frame information received from the data transmission device 30, the data reception device 50 executes avatar control of reflecting the audio data stored in the detected audio data storage block in the avatar 51. For example, in a case where voice data indicating the voice of the user 10 is detected in the voice data storage block, voice output control is executed to output the voice of the user 10 or the processing sound generated on the basis of the voice of the user 10 as the voice of the avatar 51.

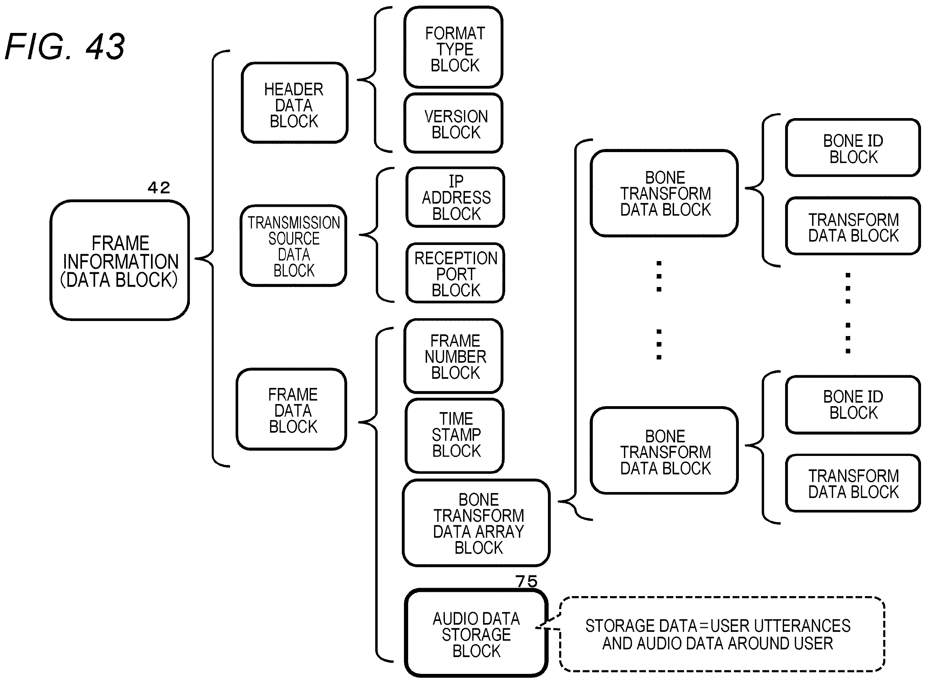

Fig. 43 illustrates a data block configuration example of the frame information (data block) 42 generated by the data transmission device (smartphone or the like) 30.

The data block configuration of the frame information 42 illustrated in Fig. 43 is a data block configuration in which
"Audio data storage block 75"
is added to the data block configuration of the frame information 42 described above with reference to Fig. 13.

As illustrated in Fig. 43, the "Audio data storage block 75" is, for example, a data block that stores audio data such as a user's voice.

Note that the position of the "Audio data storage block 75" in the frame information 42 illustrated in Fig. 43 is an example, and may be set to a position other than the position illustrated in the drawing.

The data transmission device (smart phone or the like) 30 generates the "Audio data storage block 75" storing the user's voice or the like, adds the Audio data storage block as a configuration block of the frame information 42, and transmits the Audio data storage block to the data reception device (PC or the like) 50.

When detecting the "Audio data storage block 75" from the frame information 42 received from the data transmission device (smartphone or the like) 30, the data reception device (PC or the like) 50 analyzes the storage data of the "Audio data storage block 75", and executes audio output control of the voice of the avatar 51 being displayed on the display unit of the data reception device (PC or the like) 50 according to the analysis result.

Note that the "Audio data storage block 75" may store not only audio data indicating the voice of the user 10 but also audio data indicating a voice generated by the motion of the user 10, for example, clapping or ambient sound of the user 10.

In a case where the data transmission device (smartphone or the like) 30 acquires audio data indicating the hand beat of the user 10 or the ambient sound of the user 10 from the "Audio data storage block 75" in the frame information 42 received from the data transmission device 30, it is possible to perform control to output these audios in addition to the display processing of the avatar 51 on the display unit.

### (10-(3) Example in which data transmission device acquires motion data of a plurality of users and transmits the motion data to data reception device, and data reception device assigns motion of each user to user corresponding avatar and executes avatar motion control)

Next, an example will be described in which the data transmission device acquires motion data of a plurality of users and transmits the motion data to the data reception device, and the data reception device assigns a motion of each user to a user-based avatar and executes avatar motion control.

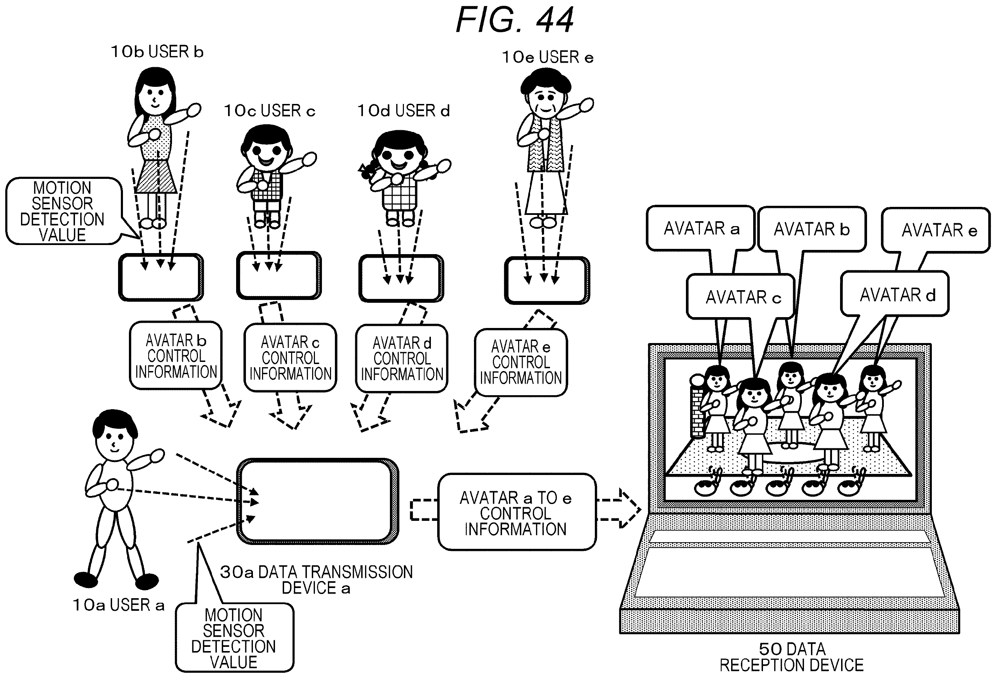

A specific example of the processing of the present example will be described with reference to Fig. 44.

Fig. 44 illustrates a plurality of user a, 10a to user e, 10e wearing motion sensors, a data transmission device a, 30a corresponding to the user a, 10a, and a data reception device 50.

Note that the user b, 10b to the user 4, 10e also have respective data transmission devices.

Each of the user a, 10a to the user e, 10e wears the motion sensor, the sensor detection value is transmitted to the data transmission device of each user, and the avatar control information (skeleton information and frame information) reflecting the motion of each user is generated in each data transmission device.

The avatar control information generated by the data transmission devices of the four users b, 10b to e, 10e other than the user a, 10a is transmitted to the data transmission device 30a of the user a, 10a.

The data transmission device 30a of the user a, 10a transmits the avatar control information of the user a, 10a and the avatar control information of each of the user b, 10b to the user e, 10e received from the data transmission device of the user b, 10b to the user e, 10e to the data reception device 50.

The data reception device 50 receives the avatar control information of each of the five users a, 10a to e, 10e from the data transmission devices a, 30a, and reflects the motion of each user on each of the avatars a to e displayed on the display unit of the data reception device 50.

That is, the following five processing is executed in parallel.

The motion control reflecting the motion of the user a, 10a is executed on the avatar a, the motion control reflecting the motion of the user b, 10b is executed on the avatar b, the motion control reflecting the motion of the user c, 10c is executed on the avatar c, the motion control reflecting the motion of the user d, 10d is executed on the avatar d, and the motion control reflecting the motion of the user e, 10e is executed on the avatar e.

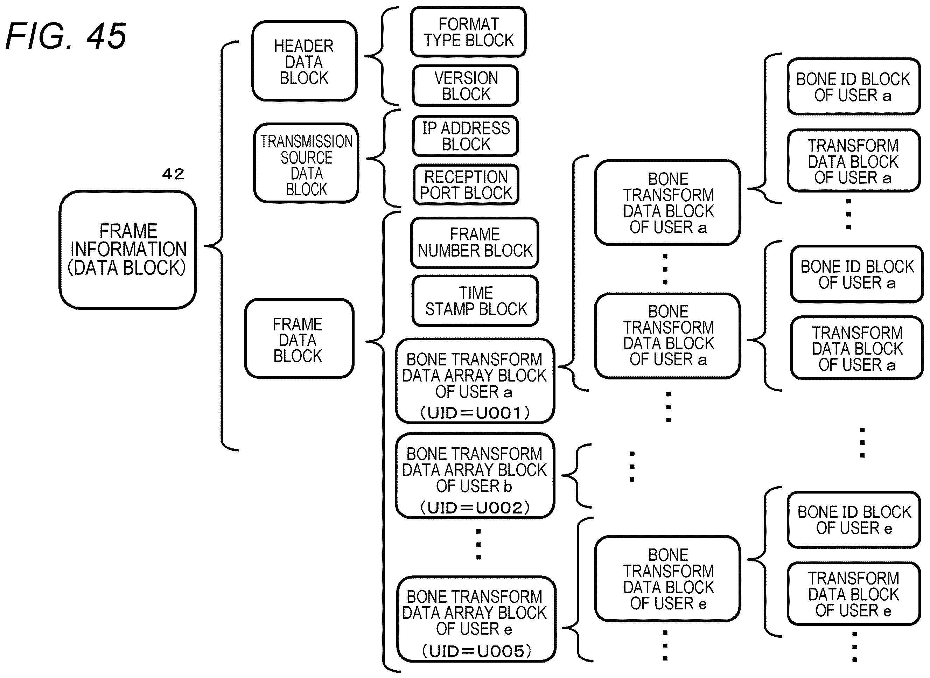

In order to apply the motion of each user to each avatar in this manner, the data transmission device a, 30a generate the frame information 42 as illustrated in Fig. 45, for example, and transmit the frame information to the data reception device 50.

The data block configuration of the frame information 42 illustrated in Fig. 45 is a configuration in which the bone transform data array block corresponding to each user, that is, each of the users a to e is set as the storage data block of the frame data block of the frame information 42 described above with reference to Fig. 13.

In the bone transform data array block corresponding to each user, a user ID (UID) corresponding to each user, which is an identifier of each user, is stored, and further, a bone transform data block corresponding to each user is stored as a lower block.

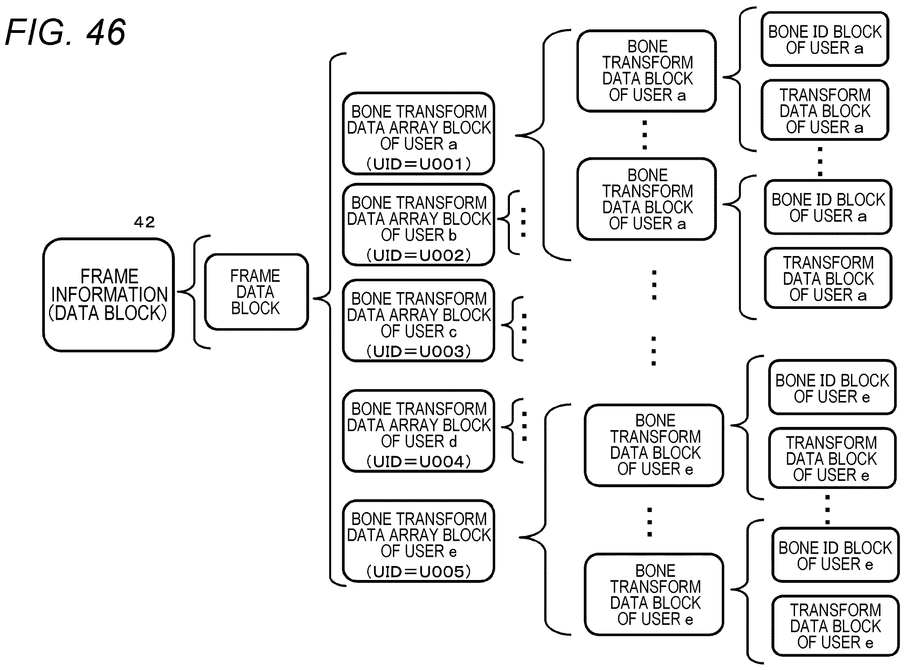

In the example described with reference to Fig. 44, the users are five users a to e, and a configuration example of the frame data block in this case has a configuration as illustrated in Fig. 46.

As illustrated in Fig. 46, the lower data block stored in the frame data block includes the following five individual transform data blocks corresponding to users.
user a's transform data block (UID = U001)
user b's transform data block (UID = U002)
user c's transform data block (UID = U003)
user d's transform data block (UID = U004)
user e's transform data block (UID = U005)

Note that a bone ID block and a transform data block of each user are stored in the transform data block corresponding to each user.

The data reception device 50 receives, from the data transmission device a, 30a, the frame information 42 in which the transform data blocks (UID = U001 to U005) of the five users a and 10a to e and 10e illustrated in Fig. 46 are stored.

The data reception device 50 acquires the transform data block (UID = U001 to U005) of each of the users a, 10a to e, 10e of the person included in the frame information 42 received from the data transmission device a, 30a, analyzes the motion in units of users on the basis of the storage data, and executes the avatar control of reflecting the motion of each user in the avatars a to e associated with each user.

With this processing, it is possible to execute the motion control of reflecting the motions of the plurality of users in the avatar associated with each user.

### (10-(4) Example in which data block storing detection value of sensor different from motion sensor such as touch sensor is generated and used)

Next, an example in which a data block storing a detection value of a sensor different from the motion sensor, such as a touch sensor, is generated and used will be described.

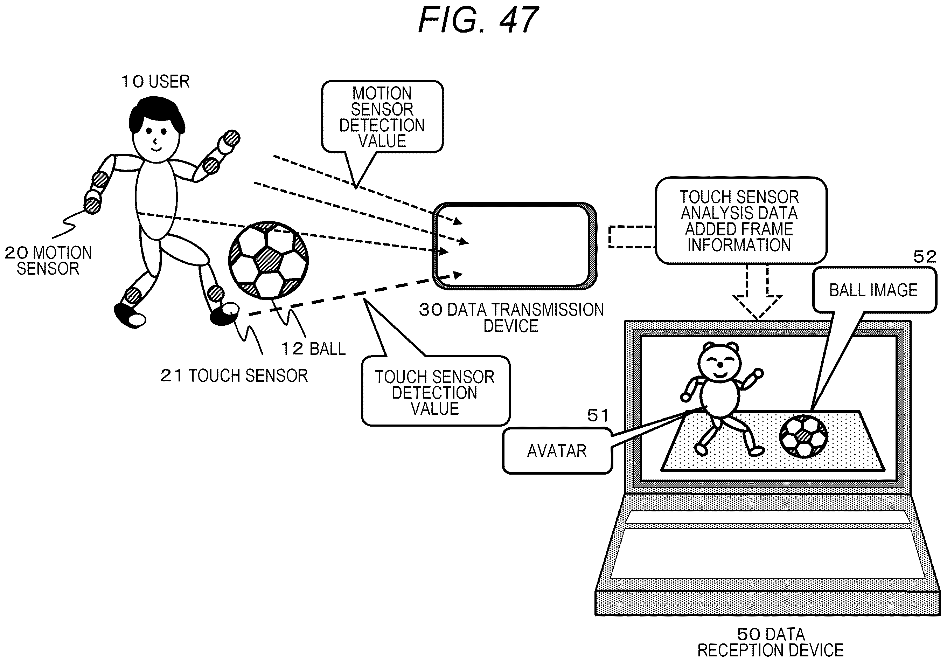

A specific example of the example using a touch sensor analysis data storage block storing detection data and analysis data of a touch sensor worn by a user will be described with reference to Fig. 47.

Fig. 47 illustrates a user 10 wearing a motion sensor, a data transmission device 30, and a data reception device 50.

The detection value of the motion sensor worn by the user 10 is transmitted to the data transmission device 30, and the data transmission device generates frame information storing bone transform data reflecting the motion of the user on the basis of the sensor detection value and transmits the frame information to the data reception device 50.

In the present example, the user 10 further wears the touch sensor 21 on the toe. The detection value of the touch sensor 21 is also transmitted to the data transmission device 30.

The data transmission device 30 analyzes, for example, the timing at which the user 10 kicks the ball 12, the kicking strength, and the like on the basis of the detection value of the touch sensor 21 attached to the user 10, generates a data block (touch sensor analysis data storage block) storing the analysis data, and adds the data block to the frame information.

In a case where the data reception device 50 detects the touch sensor analysis data storage block from the frame information received from the data transmission device 30, the data reception device 50 executes display control for controlling the motion of the avatar 51 or the ball displayed on the display unit of the data reception device 50 on the basis of the data stored in the detected touch sensor analysis data storage block, that is, the timing at which the user 10 kicks the ball 12, the kicking strength, and the like.

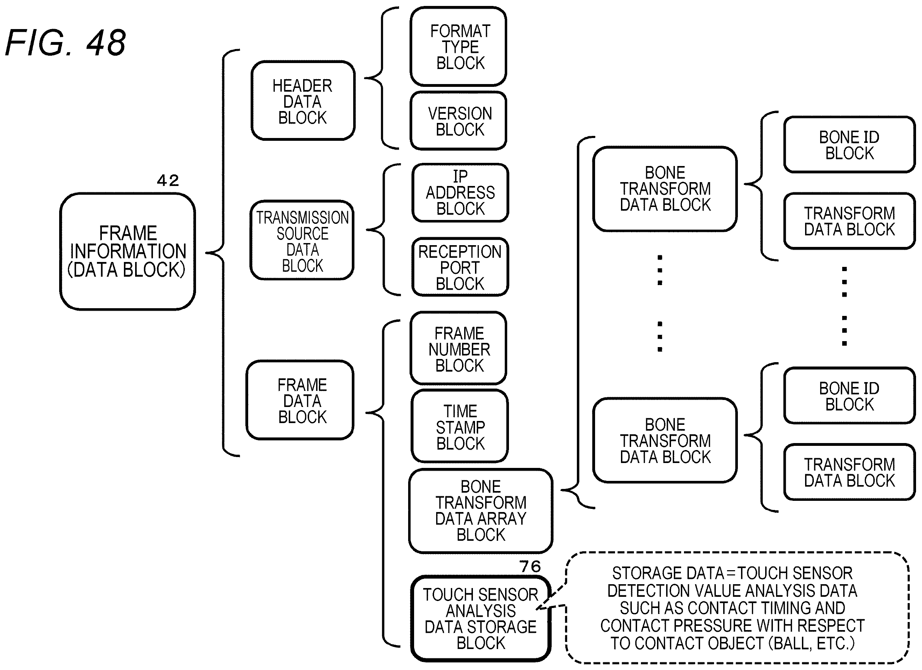

Fig. 48 illustrates a data block configuration example of the frame information (data block) 42 generated by the data transmission device (smartphone or the like) 30.

The data block configuration of the frame information 42 illustrated in Fig. 48 is a data block configuration in which
"Touch sensor analysis data storage block 76"
is added to the data block configuration of the frame information 42 described above with reference to Fig. 13.

As illustrated in Fig. 48, the "Touch sensor analysis data storage block 76" is a data block that stores analysis data such as a contact timing and a contact pressure with respect to a contact object by the user, for example, a ball.

Note that the position of the "Touch sensor analysis data storage block 76" in the frame information 42 illustrated in Fig. 48 is an example, and may be set to a position other than the position illustrated in the drawing.

The data transmission device (smartphone or the like) 30 generates such a "Touch sensor analysis data storage block 76", adds the "Touch sensor analysis data storage block" as a configuration block of the frame information 42, and transmits the "Touch sensor analysis data storage block" to the data reception device (PC or the like) 50.

When detecting the "Touch sensor analysis data storage block 76" from the frame information 42 received from the data transmission device (smartphone or the like) 30, the data reception device (PC or the like) 50 analyzes the data stored in the "Touch sensor analysis data storage block 76", and executes display control of the contact target object by the user, such as the avatar 51 being displayed on the display unit of the data reception device (PC or the like) 50 or a ball, according to the analysis result.

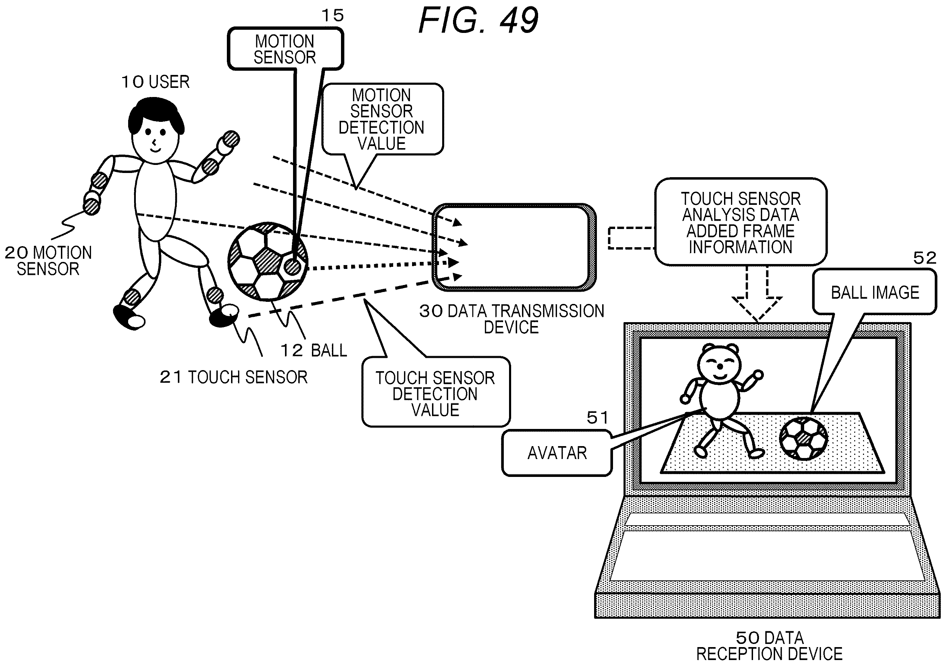

Note that moreover, as illustrated in Fig. 49, a motion sensor may be attached to a contact object such as a ball by the user, and the data transmission device 30 may generate a data block storing analysis data of motion information of an object such as a ball on the basis of a sensor detection value, add the data block to frame information, store the data block, and transmit the frame information to the data transmission device 50.

With such a configuration, the data transmission device 50 can perform display control of moving an image of an object such as a ball in accordance with the motion of the actual object operated by the user.

### (10-(5) Example in which data block storing illumination program is generated and used)

Next, an example in which a data block storing an illumination program is generated and used will be described.

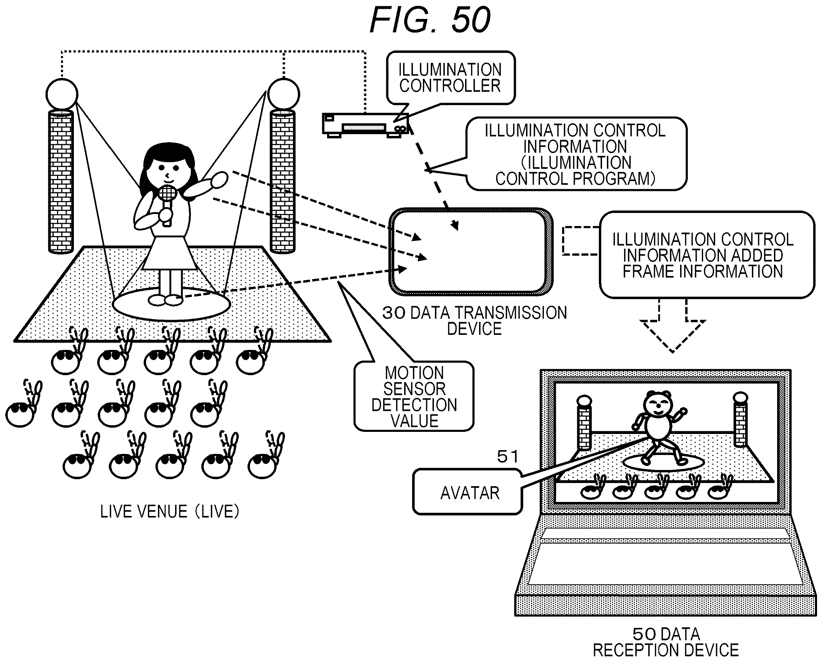

A specific example of the example using the illumination control information storage block storing the illumination control information (illumination control program) in addition to the motion information of the user will be described with reference to Fig. 50.

Fig. 50 illustrates a user 10 wearing a motion sensor, a data transmission device 30, and a data reception device 50.

Note that the user 10 wearing the motion sensor is performing live at a live venue.

The detection value of the motion sensor worn by the user 10 is transmitted to the data transmission device 30, and the data transmission device generates frame information storing bone transform data reflecting the motion of the user on the basis of the sensor detection value and transmits the frame information to the data reception device 50.

In the present example, the data transmission device 30 further inputs illumination control information (illumination control program) from an illumination controller that controls an illumination device for a place where the user 10 is, for example, a stage that is a live venue, generates a data block storing the input illumination control information (illumination control program), and adds the data block to the frame information.

For example, illumination control information (illumination control program) including ON/OFF timing of the illumination device for the stage where the user 10 is present, color, intensity, direction, and the like of the output light is input from the illumination controller, and frame information including an illumination control information storage block storing the input illumination control information (illumination control program) is generated and transmitted to the data reception device 50.

In the case of detecting the illumination control information storage block from the frame information received from the data transmission device 30, the data reception device 50 executes the expression control processing of controlling the ON/OFF timing and the color, intensity, and direction of the output light with respect to the illumination for the avatar 51 displayed on the display unit using the illumination control information (illumination control program) stored in the detected illumination control information storage block.

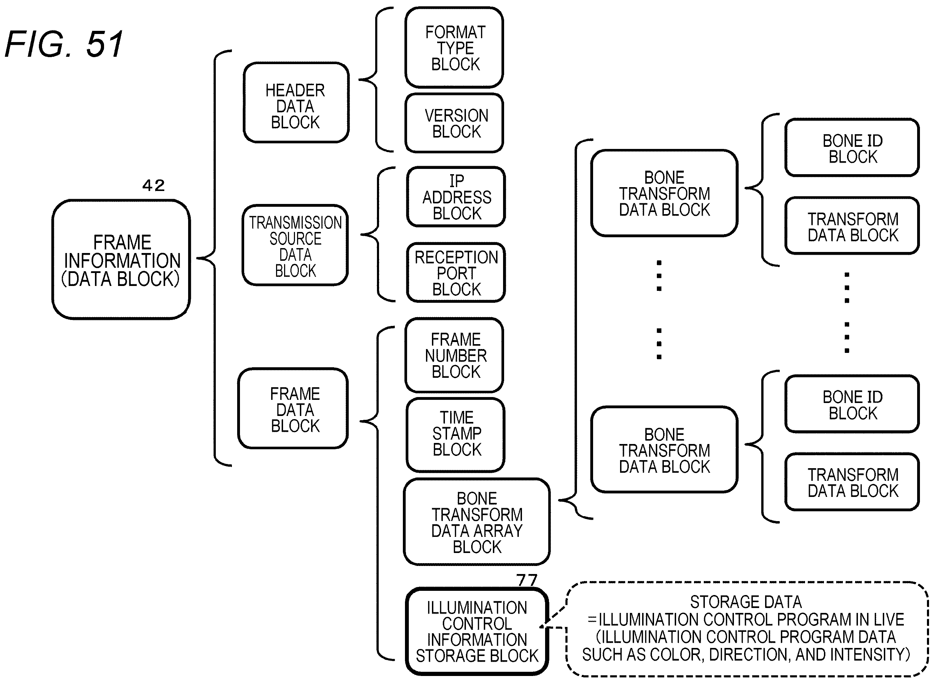

Fig. 51 illustrates a data block configuration example of the frame information (data block) 42 generated by the data transmission device (smartphone or the like) 30.

The data block configuration of the frame information 42 illustrated in Fig. 51 is a data block configuration in which
"Illumination control information storage block 77"
is added to the data block configuration of the frame information 42 described above with reference to Fig. 13.

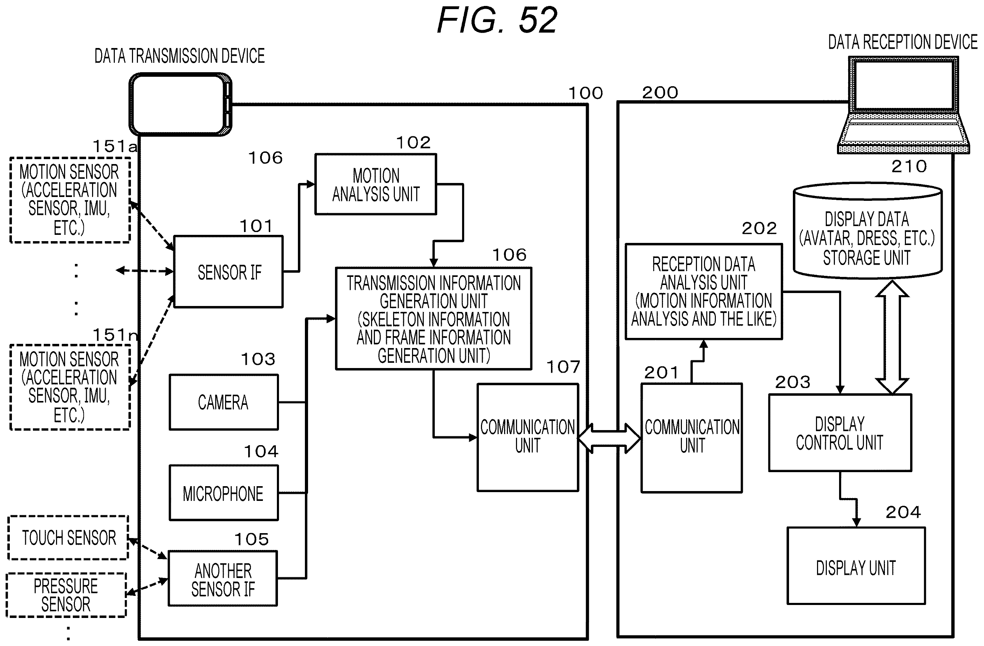

As illustrated in Fig. 52, the "Illumination control information storage block 77" is a data block that stores illumination control information such as illumination ON/OFF timing, color, intensity, and direction of output light.

Note that the position of the "Illumination control information storage block 77" in the frame information 42 illustrated in Fig. 52 is an example, and may be set to a position other than the position illustrated in the drawing.

The data transmission device (smartphone or the like) 30 generates such an "Illumination control information storage block 77", adds it as a configuration block of the frame information 42, and transmits it to the data reception device (PC or the like) 50.

When detecting the "Illumination control information storage block 77" from the frame information 42 received from the data transmission device (smartphone or the like) 30, the data reception device (PC or the like) 50 analyzes the storage data of the "Illumination control information storage block 77", and executes the display control of the illumination on the avatar 51 being displayed on the display unit of the data reception device (PC or the like) 50 using the illumination control information such as the ON/OFF timing of the illumination and the color, intensity, and direction of the output light obtained as the analysis result.

### [11. Application examples of configuration and processing of present disclosure]

Next, application examples of the configuration and processing of the present disclosure will be described.

As an application example using the configuration and processing of the present disclosure described above, for example, there are the following application examples.

### (a) Application example using image analysis data block storing analysis data of captured image of camera

For example, a security camera is used to detect intrusion of a suspicious person.

The data transmission device 30 analyzes the image captured by the security camera, generates an image analysis data block storing information that the posture of the person in the image is greatly displaced on the basis of the analysis result, includes the generated image analysis data block in the frame information 42 constituting the avatar control information, and transmits the frame information to the data reception device 50.

Note that, in the present application example, the bone transform data based on the detection value of the motion sensor may not be included in the frame information 42.

The data reception device 50 analyzes the storage data of the image analysis data block in the frame information received from the data transmission device 30, determines the timing when there is a large motion of the person in the image, the timing when the person makes a specific motion, and the like, and can efficiently estimate the occurrence timing of an event such as theft or accident and the details of the event at the timing on the basis of the determination result.

Furthermore, the data transmission device 30 analyzes an image captured by a camera that captures an image of a sports game such as soccer, for example, generates an image analysis data block storing information such as a large motion and a characteristic action of a player in the image, for example, a timing at which a shooting action is performed, includes the image analysis data block in the frame information 42, and transmits the image analysis data block to the data reception device 50.

The data reception device 50 analyzes the storage data of the image analysis data block in the frame information received from the data transmission device 30, and can efficiently select an important action of the player in the image, for example, an image at the timing of shooting.

Furthermore, the data transmission device 30 analyzes an image captured by a camera provided at a site such as a nursing care site, generates an image analysis data block storing information such as a timing at which a characteristic action of the patient in the image, for example, a falling action, is performed, includes the image analysis data block in the frame information 42, and transmits the image analysis data block to the data reception device 50.

The data reception device 50 analyzes storage data of the image analysis data block in the frame information received from the data transmission device 30, and can efficiently select an action of the patient in the image, for example, a fallen image, and can quickly find a dangerous state.

### (b) Application example using object motion analysis data block storing analysis data based on detection value of motion sensor attached to object other than person

For example, in the case of performing a sighting performance or the like, a motion sensor is attached to the sword, and the data transmission device 30 generates an object motion analysis data block storing analysis data of the motion of the sword, includes the object motion analysis data block in the frame information 42, and transmits the object motion analysis data block to the data reception device 50.

The data reception device 50 analyzes the storage data of the image analysis data block in the frame information received from the data transmission device 30, and can efficiently select the action of the sword in the image, for example, the image of swinging down the sword, and can efficiently detect the image of interest.

### (c) Application example using image analysis data block storing analysis data of captured image of camera provided in virtual studio

For example, the data transmission device 30 generates an image analysis data block storing information such as space information of a camera provided in a virtual studio or a field of view (FoV) indicating an image capturing region, and includes the image analysis data block in the frame information 42 to transmit the frame information to the data reception device 50.

The data reception device 50 analyzes information such as space information of a camera provided in a virtual studio and a field of view (FoV) indicating an image capturing region received from the data transmission device 30, and reflects an analysis result in the real space image displayed on the display unit. By performing such processing, it is possible to display an image in which camera performance on the real space and the virtual space is interlocked.

### (d) Application example using acquired avatar control information (motion data)

The avatar control information (motion data) configured by the skeleton information and the frame information described above can be recorded and held as a plurality of pieces of avatar control information (motion data) in units of users.

Therefore, for example, it is possible to perform processing in which, while executing the reproduction of the avatar a based on the avatar control information (motion data) of Mr. A, Mr. B performs an action while watching the motion of the avatar a (= Mr. A).

For example, avatar control information (motion data) of each actor in a play or the like can be individually and sequentially acquired and recorded.

Furthermore, it is also possible to perform synthesis processing of a plurality of pieces of avatar control information (motion data), and further, it is also possible to perform processing of editing the avatar control information (motion data) such as additionally acquiring and connecting after additional avatar control information (motion data) continuing to a certain recorded avatar control information (motion data).

As a specific use example, for example, the present invention can also be used for dance editing. Furthermore, the present disclosure can also be used for a simulation process of "what would have happened if this action had been performed at this timing" during a sports game.

Moreover, in sports broadcasting and the like, it is also possible to perform processing of capturing images from various viewpoints and synthesizing and displaying an avatar image reproduced using avatar control information (motion data) with image data distributed by an image distribution system using a camera system capable of reproducing an individual motion of each player.

### [12. Configuration example of information processing device]

Next, a configuration example of the information processing device of the data transmission device 30 such as a smartphone or the data reception device 50 such as a PC used for the processing of the present disclosure will be described.

Fig. 52 illustrates a configuration example of a data transmission device 100 corresponding to the data transmission device 30 such as a smartphone used in the processing of the present disclosure and a configuration example of a data reception device 200 corresponding to the configuration of the data reception device 50 such as a PC.

The data transmission device 100 illustrated on the left side includes, for example, a smartphone, and the data reception device 50 illustrated on the right side includes, for example, a PC. However, the data transmission device 100 is not limited to the smartphone, and may be a tablet terminal, a PC, or VR goggles having functions such as data processing and communication.

Furthermore, the data reception device 50 is not limited to the PC, and may be a tablet terminal, a smartphone, VR goggles having functions such as data processing and communication, or the like.

First, a configuration of the data transmission device 100 illustrated on the left side of Fig. 52 will be described.

The data transmission device 100 includes a sensor IF 101, a motion analysis unit 102, a camera 103, a microphone 104, another sensor IF 105, a transmission information generation unit (skeleton information and frame information generation unit) 106, and a communication unit 107.

The sensor IF 101 is an IF corresponding to sensors (motion sensors) 151 such as the IMUs attached to the respective parts (for example, as described above with reference to Fig. 3, the right hand, left hand, right arm, left arm, right foot, left foot, head, waist, and the like) of the user's body, and executes data transmission and reception with these sensors 151. For example, the sensor IF is an IF that performs proximity communication such as Bluetooth (registered trademark) communication.

The motion analysis unit 102 executes processing of estimating the posture of the user by inputting the detection values of the sensors attached to the respective parts (the head, right arm, left arm, waist, right foot, left foot, and the like) of the user's body input via the sensor IF 101.

The user motion analysis processing executed in the motion analysis unit 102 is executed, for example, according to the processing described above with reference to Fig. 17. That is, the following processing is sequentially executed to analyze the motion of the user and generate transform data that is motion information of the user.
(Processing 1) Sensor detection value input processing
(Processing 2) Noise removal processing
(Processing 3) Motion vector group generation processing
(Processing 4) Motion estimation processing The motion analysis unit 102 sequentially executes, for example, each of these (Processing 1) to (Processing 4) to generate the "motion information (transform data)" of the user.

The camera 103 captures, for example, an image such as a face image capable of analyzing the expression of the user.

The microphone 104 acquires, for example, a user's utterance sound, a user's action sound (clapping or the like), or ambient sound.

In addition, the sensor IF 105 acquires various sensor detection values such as a touch sensor and a pressure sensor.

The motion analysis information analyzed by the motion analysis unit 102 and the acquired information of the camera 103, the microphone 104, and the another sensor IF 105 are input to the transmission information generation unit 106.

The transmission information generation unit (skeleton information and frame information generation unit) 106 generates the avatar control information configured by the skeleton information and the frame information using the motion information of the user generated by the motion analysis unit 102 on the basis of the sensor detection value and the acquired information of the camera 103, the microphone 104, and the another sensor IF 105.

Note that both the skeleton information and the frame information have a prescribed data format.

That is, as described above with reference to Fig. 6, one data block includes the following three data areas.
(a) Data size storage area
(b) Data type storage area
(c) Actual data storage area

Furthermore, skeleton information configured as a data block stores a plurality of data blocks therein.

That is, for example, there are a large number of data blocks described above with reference to Fig. 9 and the like.

Similarly, frame information configured as a data block also stores a plurality of data blocks therein.

That is, for example, there are a large number of data blocks described above with reference to Fig. 13 and the like.

The frame information includes a plurality of data blocks in which data indicating the motion in units of parts of the body of the user is individually stored.

The transmission information generation unit (skeleton information and frame information generation unit) 106 generates a plurality of data blocks individually storing various different data by using the motion information of the user generated by the motion analysis unit 102 on the basis of the sensor detection value and the acquired information of the camera 103, the microphone 104, and the another sensor IF 105, and generates a skeleton information data block storing the generated plurality of data blocks and frame information storing the generated plurality of data blocks.

The transmission information generation unit (skeleton information and frame information generation unit) 106 generates avatar control information configured by the generated skeleton information and frame information, and transmits the generated avatar control information to the data reception device 200 via the communication unit 107.

The communication unit 104 receives the avatar control information including the skeleton information and the frame information from the transmission information generation unit (skeleton information and frame information generation unit) 106, and transmits these pieces of input data to the data reception device 200.

As described above with reference to Fig. 18, the communication unit 107 stores the data block corresponding to the skeleton information or the frame information in, for example, a UDP packet and transmits the data block to the data reception device 200. The UDP packet is a communication packet generated according to a user datagram protocol (UDP).

Note that the communication unit 107 transmits a skeleton information data block storage packet storing skeleton information to the data reception device 200 every 3 seconds, for example.

Furthermore, a frame information data block storage packet storing the frame information is transmitted to data reception device 200 every (1/50) seconds, for example

Next, a configuration of the data reception device 200 will be described.

As illustrated in the drawing, the data reception device 200 includes a communication unit 201, a reception data analysis unit (motion information analysis and the like execution unit) 202, a display control unit 203, and a display unit 204.

The data reception device 200 receives the avatar control information including the skeleton information and the frame information from the user terminal 100 such as a smartphone via the communication unit 201.

For example, a skeleton information data block storage packet storing skeleton information is received every 3 seconds.

Furthermore, a frame information data block storage packet storing frame information is received, for example, every (1/50) seconds.

The reception data analysis unit (motion information analysis and the like execution unit) 202 executes analysis processing of the avatar control information including the skeleton information and the frame information received from the user terminal 100 such as the smart phone.

Specifically, for example, a data block is acquired from skeleton information including a large number of data blocks described above with reference to Fig. 9 and the like, or frame information including a large number of data blocks described above with reference to Fig. 13 and the like, and storage data of each data block is acquired and analyzed.

For example, the configuration of the avatar is analyzed by the skeleton information analysis processing, and the motion of the avatar in units of frames is analyzed by the analysis of the frame information.

The analysis processing of the frame information executed by the reception data analysis unit (motion information analysis and the like execution unit) 202 is, for example, the following processing.

The reception data analysis unit (motion information analysis and the like execution unit) 202 acquires a plurality of data blocks in which the motion data in units of parts of the body of the user on the data transmission device 100 side is individually stored from the frame information included in the received data, and extracts the motion data in units of parts of the body of the user from the plurality of acquired data blocks.

These analysis results are input to the display control unit 203.

The display control unit 203 executes the motion control of the avatar displayed on the display unit 204 on the basis of the data analyzed by the reception data analysis unit (motion information analysis and the like execution unit) 202, in other words, the configuration information of the avatar acquired as an analysis result of the skeleton information, and the motion information of the avatar in units of frames acquired by the analysis of the frame information.

That is, the display control unit 203 executes the avatar motion control in which the motion in units of parts of the body of the user is reflected as the motion in units of parts of the avatar using the motion data in units of parts of the body of the user on the data transmission device 100 side extracted from the plurality of data blocks by the reception data analysis unit (motion information analysis and the like execution unit) 202.

Under the control of the display control unit 203, an avatar that performs a motion reflecting the motion of the user on the data transmission device 100 side is displayed on the display unit 204.

### [13. Hardware configuration example of information processing device]

Next, a hardware configuration example of an information processing device constituting a data transmission device and a data reception device that perform processing according to the above-described examples will be described with reference to Fig. 39.

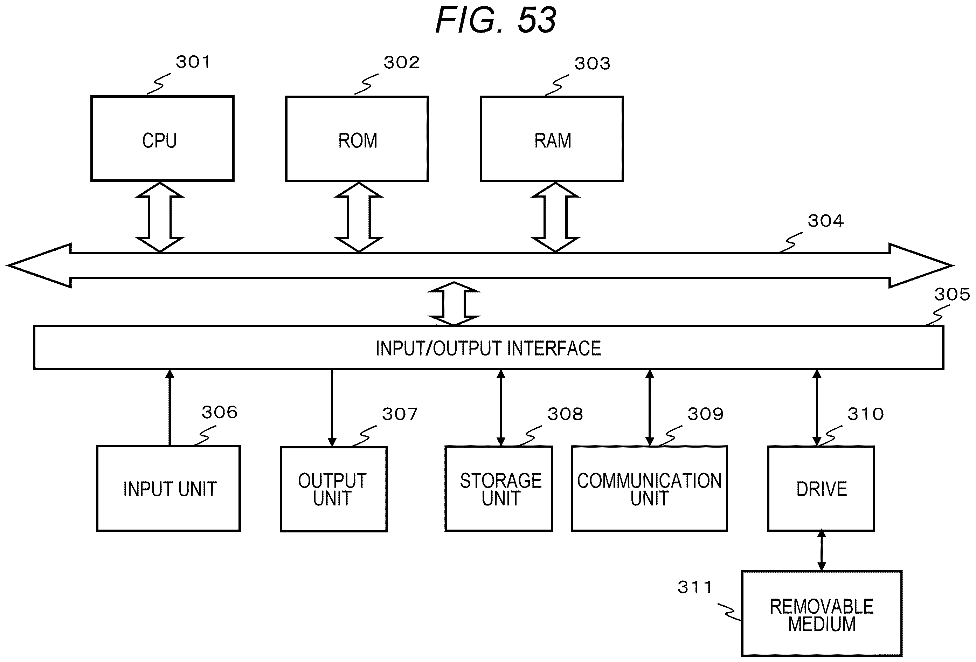

Hardware illustrated in Fig. 53 is an example of a hardware configuration of an information processing device of the present disclosure, for example, an information processing device constituting a data transmission device and a data reception device such as a PC and a smartphone.

The hardware configuration illustrated in Fig. 53 will be described.

A central processing unit (CPU) 301 functions as a data processing unit that executes various types of processing in accordance with a program stored in a read only memory (ROM) 302 or a storage unit 308. For example, the CPU 301 executes the processing according to the sequence described in the above-described example. A random access memory (RAM) 303 stores programs, data, or the like to be performed by the CPU 301. The CPU 301, the ROM 302, and the RAM 303 are connected to one another by a bus 304.

The CPU 301 is connected to an input/output interface 305 via the bus 304, and an input unit 306 including various sensors, a camera, a switch, a microphone, and the like, and an output unit 307 including a display, a speaker, and the like are connected to the input/output interface 305.

A storage unit 308 connected to the input/output interface 305 includes, for example, a hard disk, or the like and stores programs executed by the CPU 301 and various types of data. A communication unit 309 functions as a transmitter and receiver for data communication via a network such as the Internet or a local area network, and communicates with an external device.

A drive 310 connected to the input/output interface 305 drives a removable medium 311 such as a magnetic disk, an optical disk, a magneto-optical disk, or a semiconductor memory such as a memory card, and records or reads data.

### [14. Summary of configuration of present disclosure]

The examples of the present disclosure have been described above in detail with reference to specific examples. However, it is obvious that those skilled in the art can modify or substitute the example without departing from the gist of the present disclosure. That is, the present invention has been disclosed in the form of exemplification, and should not be interpreted in a limited manner. In order to determine the gist of the present disclosure, the claims should be considered.

Note that the technology disclosed herein can have the following configurations.
(1) A data transmission device including:
   a motion analysis unit that analyzes a motion of a user on the basis of a sensor detection value of a motion sensor worn on a body of the user;
   a transmission information generation unit that receives an analysis result of the motion analysis unit and generates transmission information storing data indicating the motion of the user; and
   a communication unit that transmits the transmission information generated by the transmission information generation unit to a data reception device, in which
   the transmission information generation unit
   generates, as the transmission information, frame information in which a plurality of data blocks individually storing data indicating a motion in units of parts of the body of the user is combined.
(2) The data transmission device according to (1), in which
   each of the data blocks constituting the frame information includes
   a data format including three data storage areas below
      (a) a data size storage area
      (b) a data type storage area
      (c) an actual data storage area.
(3) The data transmission device according to (1) or (2), in which
   the transmission information generation unit
   generates frame information having a hierarchical configuration of the plurality of data blocks.
(4) The data transmission device according to any one of (1) to (3), in which
   the transmission information generation unit
   generates the frame information as one data block having a data format same as a data block stored inside the frame information.
(5) The data transmission device according to any one of (1) to (4), in which
   the motion analysis unit
   analyzes the motion of the user for each predetermined time on the basis of a sensor detection value for each predetermined time of the motion sensor worn on the body of the user, and
   the transmission information generation unit
   sequentially generates, as the transmission information, frame information storing data indicating the motion of the user for each predetermined time on the basis of the motion of the user for each predetermined time input from the motion analysis unit.
(6) The data transmission device according to (5), in which
   the data reception device
   includes a device that executes avatar motion control of reflecting the motion of the user on an avatar displayed on a display unit using storage data of the data blocks constituting the frame information received from the data transmission device, and
   the transmission information generation unit
   sequentially generates the frame information at an interval equal to an interval of image frames of an avatar display image in the data reception device.
(7) The data transmission device according to any one of (1) to (6), in which
   the transmission information generation unit
   generates, as a data block constituting the frame information, a transmission source data block that stores transmission source data indicating the data transmission device.
(8) The data transmission device according to (7), in which
   the transmission source data block
   has a configuration in which an IP address block storing an IP address of the data transmission device is stored.
(9) The data transmission device according to any one of (1) to (8), in which
   the data reception device
   includes a device that executes avatar motion control of reflecting the motion of the user on an avatar displayed on a display unit using storage data of the data blocks constituting the frame information received from the data transmission device,
   the transmission information generation unit
   generates, as the transmission information, skeleton information indicating a three-dimensional structure of the avatar, and
   the skeleton information has a configuration in which a plurality of data blocks having a data format same as the data blocks constituting the frame information is combined.
(10) The data transmission device according to (9), in which
   the transmission information generation unit
   generates the skeleton information as one data block having a data format same as a data block stored inside the skeleton information.
(11) The data transmission device according to any one of (1) to (10), in which
   the data reception device
   includes a device that executes avatar motion control of reflecting the motion of the user on an avatar displayed on a display unit using storage data of the data blocks constituting the frame information received from the data transmission device, and
   the transmission information generation unit
   generates, as a data block constituting the frame information, a dress change instruction data block that instructs a dress change of the avatar, and transmits the dress change instruction data block to the data reception device via the communication unit.
(12) The data transmission device according to any one of (1) to (11), in which
   the data reception device
   includes a device that executes avatar motion control of reflecting the motion of the user on an avatar displayed on a display unit using storage data of the data blocks constituting the frame information received from the data transmission device, and
   the transmission information generation unit
   generates, as a data block constituting the frame information, a priority information data block that stores output priority information of a plurality of avatars displayed in the data reception device, and transmits the priority information data block to the data reception device via the communication unit.
(13) The data transmission device according to any one of (1) to (12), in which
   the data reception device
   includes a device that executes avatar motion control of reflecting the motion of the user on an avatar displayed on a display unit using storage data of the data blocks constituting the frame information received from the data transmission device, and
   the transmission information generation unit
   generates, as a data block constituting the frame information, a pose/gesture information storage block that stores instruction information for executing a prescribed pose or gesture in an avatar displayed in the data reception device, instead of data indicating the motion of the user stored in the frame information, and transmits the pose/gesture information storage block to the data reception device via the communication unit.
(14) The data transmission device according to any one of (1) to (13), in which
   the data reception device
   includes a device that executes avatar motion control of reflecting motions of a plurality of users on a plurality of avatars displayed on a display unit, and
   the transmission information generation unit
   generates frame information including a data block in units of users that stores motion information of an individual user, and transmits the frame information to the data reception device via the communication unit.
(15) The data transmission device according to any one of (1) to (14), in which
   the transmission information generation unit
   generates, as a data block constituting the frame information, a data block that stores detection information of a sensor different from the motion sensor, and transmits the data block to the data reception device via the communication unit, and
   the sensor different from the motion sensor is at least one of a camera, a microphone, or a touch sensor.
(16) A data reception device including:
   a reception data analysis unit that analyzes reception data from a data transmission device; and
   a display control unit that receives an analysis result of the reception data analysis unit and executes motion control of an avatar displayed on a display unit, in which
   the reception data analysis unit
   acquires, from frame information included in the reception data, a plurality of data blocks in which motion data in units of parts of a body of a user on a data transmission device side is individually stored, and extracts the motion data in units of parts of the body of the user from the plurality of acquired data blocks, and
   the display control unit
   executes avatar motion control in which a motion in units of parts of the body of the user is reflected as a motion in units of parts of the avatar using the motion data in units of parts of the body of the user extracted from the plurality of data blocks by the reception data analysis unit.
(17) A data processing method executed in a data transmission device, the data processing method including:
   a motion analysis step in which a motion analysis unit analyzes a motion of a user on the basis of a sensor detection value of a motion sensor worn on a body of the user;
   a transmission information generation step in which a transmission information generation unit receives an analysis result of the motion analysis step and generates transmission information storing data indicating the motion of the user; and
   a communication step in which a communication unit transmits the transmission information generated in the transmission information generation step to a data reception device, in which
   the transmission information generation step includes
   generating, as the transmission information, frame information in which a plurality of data blocks individually storing data indicating a motion in units of parts of the body of the user is combined.
(18) A data processing method executed in a data reception device, the data processing method including:
   a reception data analysis step in which a reception data analysis unit analyzes reception data from a data transmission device; and
   a display control step in which a display control unit receives an analysis result in the reception data analysis step and executes motion control of an avatar displayed on a display unit, in which
   the reception data analysis step includes:
      a step of acquiring, from frame information included in the reception data, a plurality of data blocks in which motion data in units of parts of a body of a user on a data transmission device side is individually stored; and
      a step of extracting the motion data in units of parts of the body of the user from the plurality of acquired data blocks, and
      the display control step includes
      executing avatar motion control in which a motion in units of parts of the body of the user is reflected as a motion in units of parts of the avatar using the motion data in units of parts of the body of the user extracted from the plurality of data blocks in the reception data analysis step.
(19) A program for causing a data transmission device to execute data processing, the data processing including:
   a motion analysis step of causing a motion analysis unit to analyze a motion of a user on the basis of a sensor detection value of a motion sensor worn on a body of the user;
   a transmission information generation step of causing a transmission information generation unit to receive an analysis result of the motion analysis step and generate transmission information storing data indicating the motion of the user; and
   a communication step of causing a communication unit to transmit the transmission information generated in the transmission information generation step to a data reception device, in which
   in the transmission information generation step,
   a step of generating, as the transmission information, frame information in which a plurality of data blocks individually storing data indicating a motion in units of parts of the body of the user is combined is executed.
(20) A program for causing a data reception device to execute data processing, the data processing including:
   a reception data analysis step of causing a reception data analysis unit to analyze reception data from a data transmission device; and
   a display control step of causing a display control unit to receive an analysis result in the reception data analysis step and execute motion control of an avatar displayed on a display unit, in which
   in the reception data analysis step,
   a step of acquiring, from frame information included in the reception data, a plurality of data blocks in which motion data in units of parts of a body of a user on a data transmission device side is individually stored, and
   a step of extracting the motion data in units of parts of the body of the user from the plurality of acquired data blocks are executed, and
   in the display control step,
   avatar motion control is executed in which a motion in units of parts of the body of the user is reflected as a motion in units of parts of the avatar using the motion data in units of parts of the body of the user extracted from the plurality of data blocks in the reception data analysis step.

Note that a series of processing described in the specification can be executed by hardware, software, or a combined configuration of the both. In a case where processing by software is executed, a program in which a processing sequence is recorded can be installed and performed in a memory in a computer incorporated in dedicated hardware, or the program can be installed and performed in a general-purpose computer capable of executing various types of processing. For example, the program can be recorded in advance in a recording medium. In addition to being installed into a computer from a recording medium, the program can be received via a network such as a local area network (LAN) or the Internet, and installed into a recording medium such as an internal hard disk or the like.

Furthermore, the various types of processing herein described may be performed not only in time series as described, but also in parallel or individually in accordance with the processing capability of the device that performs the processing or as necessary. Furthermore, a system in the present specification is a logical assembly of a plurality of devices, and is not limited to a system in which devices of the respective configurations are in the same housing.

### INDUSTRIAL APPLICABILITY

As described above, according to the configuration of an example of the present disclosure, a device and a method that enable processing of reflecting the motion of the user in the avatar displayed on the display unit in substantially real time are realized.

Specifically, for example, a motion analysis unit that analyzes a user motion on the basis of a detection value of a sensor worn by the user, and a transmission information generation unit that receives a motion analysis result and generates transmission information storing data indicating the motion of the user are included. The transmission information generation unit generates frame information in which a plurality of data blocks individually storing data indicating a motion in units of parts of a body of the user is combined. A data reception device acquires data indicating the motion in units of parts of the body of the user from the data blocks in the received frame information, and executes avatar motion control of reflecting the motion of the user in an avatar displayed on a display unit.

According to the present configuration, a device and a method that enable processing of reflecting the motion of the user in the avatar displayed on the display unit in substantially real time are realized.

### REFERENCE SIGNS LIST

- 10: User
- 20: Motion sensor
- 21: Touch sensor
- 30: Data transmission device
- 31: Camera
- 40: Avatar control information
- 41: Skeleton information
- 42: Frame information
- 50: Data reception device
- 51: Avatar
- 71: Dress change instruction block
- 72: Priority information data block
- 73: Pose/gesture information storage block
- 74: Image data storage block
- 75: Audio data storage block
- 76: Touch sensor analysis data storage block
- 77: Illumination control information storage block
- 100: Data transmission device
- 101: Sensor IF
- 102: Motion analysis unit
- 103: Camera
- 104: Microphone
- 105: Another sensor IF
- 106: Transmission information generation unit (skeleton information and frame information generation unit)
- 107: Communication unit
- 200: Data reception device
- 201: Communication unit
- 202: Reception data analysis unit (motion information analysis and the like execution unit)
- 203: Display control unit
- 204: Display unit
- 301: CPU
- 302: ROM
- 303: RAM
- 304: Bus
- 305: Input/output interface
- 306: Input unit
- 307: Output unit
- 308: Storage unit
- 309: Communication unit
- 310: Drive
- 311: Removable medium

## Claims

1. A data transmission device comprising:
a motion analysis unit that analyzes a motion of a user on a basis of a sensor detection value of a motion sensor worn on a body of the user;
a transmission information generation unit that receives an analysis result of the motion analysis unit and generates transmission information storing data indicating the motion of the user; and
a communication unit that transmits the transmission information generated by the transmission information generation unit to a data reception device, wherein
the transmission information generation unit
generates, as the transmission information, frame information in which a plurality of data blocks individually storing data indicating a motion in units of parts of the body of the user is combined.

2. The data transmission device according to claim 1, wherein
each of the data blocks constituting the frame information includes
a data format including three data storage areas below
(a) a data size storage area
(b) a data type storage area
(c) an actual data storage area.

3. The data transmission device according to claim 1, wherein
the transmission information generation unit
generates the frame information having a hierarchical configuration of the plurality of data blocks.

4. The data transmission device according to claim 1, wherein
the transmission information generation unit
generates the frame information as one data block having a data format same as a data block stored inside the frame information.

5. The data transmission device according to claim 1, wherein
the motion analysis unit
analyzes the motion of the user for each predetermined time on a basis of a sensor detection value for each predetermined time of the motion sensor worn on the body of the user, and
the transmission information generation unit
sequentially generates, as the transmission information, frame information storing data indicating the motion of the user for each predetermined time on a basis of the motion of the user for each predetermined time input from the motion analysis unit.

6. The data transmission device according to claim 5, wherein
the data reception device
includes a device that executes avatar motion control of reflecting the motion of the user on an avatar displayed on a display unit using storage data of the data blocks constituting the frame information received from the data transmission device, and
the transmission information generation unit
sequentially generates the frame information at an interval equal to an interval of image frames of an avatar display image in the data reception device.

7. The data transmission device according to claim 1, wherein
the transmission information generation unit
generates, as a data block constituting the frame information, a transmission source data block that stores transmission source data indicating the data transmission device.

8. The data transmission device according to claim 7, wherein
the transmission source data block
has a configuration in which an IP address block storing an IP address of the data transmission device is stored.

9. The data transmission device according to claim 1, wherein
the data reception device
includes a device that executes avatar motion control of reflecting the motion of the user on an avatar displayed on a display unit using storage data of the data blocks constituting the frame information received from the data transmission device,
the transmission information generation unit
generates, as the transmission information, skeleton information indicating a three-dimensional structure of the avatar, and
the skeleton information has a configuration in which a plurality of data blocks having a data format same as the data blocks constituting the frame information is combined.

10. The data transmission device according to claim 9, wherein
the transmission information generation unit
generates the skeleton information as one data block having a data format same as a data block stored inside the skeleton information.

11. The data transmission device according to claim 1, wherein
the data reception device
includes a device that executes avatar motion control of reflecting the motion of the user on an avatar displayed on a display unit using storage data of the data blocks constituting the frame information received from the data transmission device, and
the transmission information generation unit
generates, as a data block constituting the frame information, a dress change instruction data block that instructs a dress change of the avatar, and transmits the dress change instruction data block to the data reception device via the communication unit.

12. The data transmission device according to claim 1, wherein
the data reception device
includes a device that executes avatar motion control of reflecting the motion of the user on an avatar displayed on a display unit using storage data of the data blocks constituting the frame information received from the data transmission device, and
the transmission information generation unit
generates, as a data block constituting the frame information, a priority information data block that stores output priority information of a plurality of avatars displayed in the data reception device, and transmits the priority information data block to the data reception device via the communication unit.

13. The data transmission device according to claim 1, wherein
the data reception device
includes a device that executes avatar motion control of reflecting the motion of the user on an avatar displayed on a display unit using storage data of the data blocks constituting the frame information received from the data transmission device, and
the transmission information generation unit
generates, as a data block constituting the frame information, a pose/gesture information storage block that stores instruction information for executing a prescribed pose or gesture in an avatar displayed in the data reception device, instead of data indicating the motion of the user stored in the frame information, and transmits the pose/gesture information storage block to the data reception device via the communication unit.

14. The data transmission device according to claim 1, wherein
the data reception device
includes a device that executes avatar motion control of reflecting motions of a plurality of users on a plurality of avatars displayed on a display unit, and
the transmission information generation unit
generates frame information including a data block in units of users that stores motion information of an individual user, and transmits the frame information to the data reception device via the communication unit.

15. The data transmission device according to claim 1, wherein
the transmission information generation unit
generates, as a data block constituting the frame information, a data block that stores detection information of a sensor different from the motion sensor, and transmits the data block to the data reception device via the communication unit, and
the sensor different from the motion sensor is at least one of a camera, a microphone, or a touch sensor.

16. A data reception device comprising:
a reception data analysis unit that analyzes reception data from a data transmission device; and
a display control unit that receives an analysis result of the reception data analysis unit and executes motion control of an avatar displayed on a display unit, wherein
the reception data analysis unit
acquires, from frame information included in the reception data, a plurality of data blocks in which motion data in units of parts of a body of a user on a data transmission device side is individually stored, and extracts the motion data in units of parts of the body of the user from the plurality of acquired data blocks, and
the display control unit
executes avatar motion control in which a motion in units of parts of the body of the user is reflected as a motion in units of parts of the avatar using the motion data in units of parts of the body of the user extracted from the plurality of data blocks by the reception data analysis unit.

17. A data processing method executed in a data transmission device, the data processing method comprising:
a motion analysis step in which a motion analysis unit analyzes a motion of a user on a basis of a sensor detection value of a motion sensor worn on a body of the user;
a transmission information generation step in which a transmission information generation unit receives an analysis result of the motion analysis step and generates transmission information storing data indicating the motion of the user; and
a communication step in which a communication unit transmits the transmission information generated in the transmission information generation step to a data reception device, wherein
the transmission information generation step includes
generating, as the transmission information, frame information in which a plurality of data blocks individually storing data indicating a motion in units of parts of the body of the user is combined.

18. A data processing method executed in a data reception device, the data processing method comprising:
a reception data analysis step in which a reception data analysis unit analyzes reception data from a data transmission device; and
a display control step in which a display control unit receives an analysis result in the reception data analysis step and executes motion control of an avatar displayed on a display unit, wherein
the reception data analysis step includes:
a step of acquiring, from frame information included in the reception data, a plurality of data blocks in which motion data in units of parts of a body of a user on a data transmission device side is individually stored; and
a step of extracting the motion data in units of parts of the body of the user from the plurality of acquired data blocks, and
the display control step includes
executing avatar motion control in which a motion in units of parts of the body of the user is reflected as a motion in units of parts of the avatar using the motion data in units of parts of the body of the user extracted from the plurality of data blocks in the reception data analysis step.

19. A program for causing a data transmission device to execute data processing, the data processing including:
a motion analysis step of causing a motion analysis unit to analyze a motion of a user on a basis of a sensor detection value of a motion sensor worn on a body of the user;
a transmission information generation step of causing a transmission information generation unit to receive an analysis result of the motion analysis step and generate transmission information storing data indicating the motion of the user; and
a communication step of causing a communication unit to transmit the transmission information generated in the transmission information generation step to a data reception device, wherein
in the transmission information generation step,
a step of generating, as the transmission information, frame information in which a plurality of data blocks individually storing data indicating a motion in units of parts of the body of the user is combined is executed.

20. A program for causing a data reception device to execute data processing, the data processing including:
a reception data analysis step of causing a reception data analysis unit to analyze reception data from a data transmission device; and
a display control step of causing a display control unit to receive an analysis result in the reception data analysis step and execute motion control of an avatar displayed on a display unit, wherein
in the reception data analysis step,
a step of acquiring, from frame information included in the reception data, a plurality of data blocks in which motion data in units of parts of a body of a user on a data transmission device side is individually stored, and
a step of extracting the motion data in units of parts of the body of the user from the plurality of acquired data blocks are executed, and
in the display control step,
avatar motion control is executed in which a motion in units of parts of the body of the user is reflected as a motion in units of parts of the avatar using the motion data in units of parts of the body of the user extracted from the plurality of data blocks in the reception data analysis step.
